# EUROPÄISCHE PATENTSCHRIFT

(11) **EP 2 484 743 B1**
(45) Veröffentlichungstag und Bekanntmachung des Hinweises auf die Patenterteilung: **30.07.2014**
(21) Anmeldenummer: 12002277.7
(22) Anmeldetag: 29.03.2010
(51) Int. Cl.: C09K 19/30, C09K 19/12, C09K 19/44, C09K 19/34, C09K 19/04, C09K 19/54, G02F 1/1337

(54) **Flüssigkristallanzeige**
Liquid crystal display
Dispositif d'affichage à base de cristaux liquides

(30) Priorität: 23.04.2009 DE 102009018625
(43) Veröffentlichungstag der Anmeldung: 08.08.2012
(62) Teilanmeldung aus: 10003345.5
(73) Patentinhaber: Merck Patent GmbH, 64293 Darmstadt (DE)
(72) Erfinder: Goetz, Achim, 64665 Alsbach-Haehnlein (DE); Klasen-Memmer, Melanie, 67259 Heuchelheim (DE); Derow, Stephan, 64347 Griesheim (DE); Schoen, Sabine, 45701 Herten (DE); Best, Peter, 64832 Babenhausen-Hergershausen (DE)

(56) Entgegenhaltungen:
- EP-A1- 1 378 557
- EP-A1- 1 889 894
- EP-A1- 2 380 947
- WO-A1-2004/033584
- WO-A1-2008/009417
- WO-A1-2008/145297
- DE-A1- 19 927 627
- DE-A1-102008 035 718
- DE-A1-102008 036 248
- US-B2- 7 425 355

## Beschreibung

Die vorliegende Erfindung betrifft Flüssigkristall (FK)-Medien zur Verwendung in FK-Anzeigen des PS- (polymer stabilized) oder PSA-(polymer sustained alignment) Typs.

Die derzeit verwendeten Flüssigkristallanzeigen (FK-Anzeigen) sind meist solche des TN-Typs (twisted nematic). Diese weisen allerdings den Nachteil einer starken Blickwinkelabhängigkeit des Kontrastes auf. Daneben sind sogenannte VA-Anzeigen (vertical alignment) bekannt, die einen breiteren Blickwinkel aufweisen. Die FK-Zelle einer VA-Anzeige enthält eine Schicht eines FK-Mediums zwischen zwei transparenten Elektroden, wobei das FK-Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle parallel zu den Elektrodenflächen statt. Weiterhin sind OCB-Anzeigen (optically compensated bend) bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten. Weiterhin sind IPS-Anzeigen (In-Plane Switching) bekannt, die eine FK-Schicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur FK-Schicht aufweist. Dies bewirkt eine Umorientierung der FK-Moleküle in der Schichtebene. Des weiteren wurden sogenannte FFS-Anzeigen (Fringe-Field-Switching) vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist. Stattdessen wird die Vorzugsrichtung des Kipp- oder Tiltwinkels (engl. "pretilt") durch eine spezielle Ausgestaltung der Elektroden kontrolliert. In den sogenannten MVA-Anzeigen (multidomain vertical alignment) wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit. Ein Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den slits und protrusions vergrößert werden, was jedoch wiederum zu einer Verlängerung der Schaltzeiten führt. Beim sogenannten PVA (Patterned VA) kommt man ganz ohne Protrusions aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige gefragt.

Eine Weiterentwicklung stellen die sogenannten PS-Anzeigen (polymer stabilized) dar, die auch unter dem Begriff "PSA" (polymer sustained alignment) bekannt sind. Darin wird dem FK-Medium eine geringe Menge (zum Beispiel 0,3%, typischerweise <1%) einer polymerisierbaren Verbindung zugesetzt, welche nach Einfüllen in die FK-Zelle bei angelegter elektrischer Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als "reaktive Mesogene" (RM) bezeichnet, zur FK-Mischung erwiesen.

Mittlerweile wird das PSA-Prizip in diversen klassischen FK-Anzeigen angenwendet. So sind beispielsweise PSA-VA-, PSA-OCB-, PS-IPS/FFS- und PS-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne, vorzugsweise ohne, angelegte elektrische Spannung. Wie man in Testzellen nachweisen kann, führt das PSA-Verfahren zu einem pretilt in der Zelle. Bei PSA-OCB-Anzeigen kann man daher erreichen, dass die Bend-Struktur stabilisiert wird, so dass man ohne Offset-Spannung auskommt oder diese reduzieren kann. Im Falle von PSA-VA-Anzeigen wirkt sich dieser pretilt positiv auf die Schaltzeiten aus. Für PSA-VA-Anzeigen kann ein Standard-MVA- bzw -PVA Pixel- und Elektroden-Layout verwendet werden. Darüber hinaus kann man aber beispielsweise mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt. PSA-VA-Anzeigen sind beispielsweise in JP 10-036847 A, EP 1 170 626 A2, EP 1 378 557 A1, EP 1 498 468 A1, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PS-IPS-Anzeigen sind zum Beispiel in US 6,177,972 und Appl. Phys. Lett. 1999, 75(21), 3264 beschrieben. PS-TN-Anzeigen sind zum Beispiel in Optics Express 2004, 12(7), 1221 beschrieben.

PSA-Anzeigen können ebenso wie die oben beschriebenen konventionallen FK-Anzeigen als Aktivmatrix- oder Passivmatrix-Anzeigen betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. "thin film transistor" bzw. "TFT"), bei Passivmatrix-Anzeigen üblicherweise nach dem Multiplex-Verfahren, wie aus dem Stand der Technk bekannt.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere beim PSA-VA kann man ohne nennenswerte Einbußen sonstiger Parameter eine Verkürzung der Schaltzeiten erreichen, die mit einem in Testzellen messbaren pretilt korrelieren.

Es hat sich jedoch gezeigt, dass bei Verwendung in PSA-Anzeigen die aus dem Stand der Technik bekannten FK-Mischungen und RMs noch einige Nachteile aufweisen. So eignet sich bei weitem nicht jedes beliebige lösliche RM zur Verwendung in PSA-Anzeigen, und es ist oft schwierig, geeignetere Auswahlkriterien als eben das direkte PSA-Experiment mit pretilt-Messung zu finden. Noch kleiner wird die Auswahl, wenn eine Polymerisation mittels UV-Licht ohne den Zusatz von Photoinitiatoren gewünscht ist, was für bestimmte Anwendungen von Vorteil sein kann. Darüber hinaus sollte das gewählte "Materialsystem" FK-Mischung (nachfolgend auch als "FK-Hostmischung" bezeichnet) + polymerisierbare Komponente eine möglichst geringe Rotationsviskosität sowie möglichst gute elektrische Eigenschaften aufweisen, hierbei ist die sog. "Voltage Holding Ratio" (VHR oder HR) hervorzuheben. Im Zusammenhang mit PSA-Anzeigen ist insbesondere eine hohe VHR nach Bestrahlung mit UV-Licht von zentraler Bedeutung, da die UV-Belichtung ein notwendiger Teil des Herstellungsprozesses der Anzeige ist, aber natürlich auch als "normale" Belastung im fertigen Display auftritt.

Es ergibt sich jedoch das Problem, dass bei weitem nicht alle Kombinationen FK-Mischung + polymerisierbare Komponente für PSA-Anzeigen geeignet sind, weil sich zum Beispiel kein oder kein ausreichender Tilt einstellt, oder weil zum Beispiel die VHR für TFT-Display-Anwendungen unzureichend ist.

Insbesondere wäre es wünschenswert, neue Materialien für PSA-Anzeigen zur Verfügung zu haben, die einen besonders kleinen pretilt-Winkel erzeugen. Besonders wünschenswert wären Materialien, die während der Polymerisation bei gleicher Belichtungszeit einen niedrigeren pretilt-Winkel erzeugen als die bisher bekannten Materialien, und/oder durch deren Verwendung der mit den bekannten Materialien erzielbare (höhere) pretilt-Winkel bereits nach kürzerer Belichtungszeit erreicht werden kann. Dadurch könnten die Produktionszeit (tact time) der Anzeige verkürzt und die Kosten des Produktionsprozesses verringert werden. Ene schnellere Polymerisationsgeschwindigkeit des RMs ist auch besonders von Vorteil, um ggf. nach der Einstellung des Tiltwinkels noch vorhandene Restmengen an nicht polymerisierten RMs möglichst schnell abreagieren zu lassen. Das Vorhandensein unreagierter RMs in der Anzeige kann die Displayeigenschaften nachteilig beeinflussen. Deshalb ist neben einer schnellen auch eine möglichst vollständige Polymerisation der RMs wünschenswert.

Es besteht somit immer noch ein großer Bedarf an PSA-Anzeigen, insbesondere vom VA- und OCB-Typ, sowie FK-Medien und polymerisierbaren Verbindungen zur Verwendung in solchen Anzeigen, welche die oben beschriebenen Nachteile nicht oder nur in geringem Maße zeigen und verbesserte Eigenschaften besitzen. Insbesondere besteht ein großer Bedarf nach PSA-Anzeigen, sowie Materialien zur Verwendung in PSA-Anzeigen, die einen hohen spezifischen Widerstand bei gleichzeitig großem Arbeitstemperaturbereich, kurze Schaltzeiten auch bei tiefen Temperaturen und niedriger Schwellenspannung, einen niedrigen pretilt-Winkel, eine Vielzahl von Graustufen, einen hohen Kontrast und einen weiten Blickwinkel ermöglichen, sowie hohe Werte der "voltage holding ratio" (VHR) nach UV-Belastung aufweisen.

Der Erfindung liegt die Aufgabe zugrunde, neue FK-Medien für die Verwendung in PSA-Anzeigen bereitzustellen, welche die oben angegebenen Nachteile nicht oder in geringerem Maße aufweisen, die Einstellung eines niedrigen pretilt-Winkels ermöglichen, und vorzugsweise gleichzeitig sehr hohe spezifische Widerstände, hohe VHR-Werte, niedrige Schwellenspannungen und niedrige Schaltzeiten ermöglichen.

Diese Aufgabe wurde erfindungsgemäß gelöst durch FK-Medien und FK-Anzeigen wie in der vorliegenden Anmeldung beschrieben. Insbesondere wurde überraschend gefunden, dass die Verwendung erfindungsgemäßer FK-Medien in PSA-Anzeigen besonders niedrige pretilt-Winkel und die schnelle Einstellung der gewünschten Tiltwinkel ermöglichen. Dies konnte in Verbindung mit einem FK-Medium mittels pretilt-Messungen nachgewiesen werden. Insbesondere konnte ein pretilt ohne den Zusatz von Photoinitiator erreicht werden. Darüber hinaus zeigen die erfindungsgemäßen Materialien eine deutlich schnellere Generierung des pretilt-Winkels im Vergleich zu den aus dem Stand der Technik bekannten Materialien, wie durch belichtungszeitabhängige Messungen des pretilt-Winkels nachgewiesen werden konnte. Ausserdem hat sich gezeigt, dass bei Verwendung erfindungsgemäßer FK-Medien sowohl Geschwindigkeit als auch Vollständigkeit der Polymerisation der RMs gegenüber den aus dem Stand der Technik bekannten FK-Medien deutlich erhöht werden können. Dies ermöglicht sowohl eine Verkürzung der Belichtungszeit und damit eine effizientere und ökonomischere Prozessführung, als auch eine Verringerung des Restmenge an unerwünschten, nicht polymerisierten RMs in der Anzeige.

EP 2 380 947 A1, DE 10 2008 036248 A1, WO 2008/145297, EP 1 889 894 A1, DE 10 2008 035718 A1, EP 1 378 557 A1, WO 2008/009417 A1, WO 2004/033584 A1, US 7,425,355 B2 und DE 199 27 627 A1 beschreiben FK-Medien, welche gegebenenfalls auch polymerisierbare Verbindungen enthalten können, offenbaren jedoch keine FK-Medien wie in der nachfolgenden Anmeldung beschrieben.

Gegenstand der Erfindung ist die Verwendung von FK-Mischungen enthaltend eine oder mehrere Verbindungen der Formeln I5-I13 gemäß Anspruch 1 in FK-Anzeigen des PS-(polymer stabilized) oder PSA-(polymer sustained alignment) Typs.

Ein weiterer Gegenstand der Erfindung ist ein FK-Medium enthaltend eine erfindungsgemäße FK-Mischung wie vor- und nachstehend beschrieben, sowie eine oder mehrere polymerisierbare Verbindungen, vorzugsweise ausgewählt aus der Gruppe bestehend aus reaktiven Mesogenen.

Ein weiterer Gegenstand der Erfindung ist ein FK-Medium enthaltend eine erfindungsgemäße FK-Mischung wie vor- und nachstehend beschrieben, sowie ein Polymer erhältlich durch Polymerisation einer oder mehrerer polymerisierbarer Verbindungen, welche vorzugsweise aus der Gruppe bestehend aus reaktiven Mesogenen ausgewählt sind.

Ein weiterer Gegenstand der Erfindung ist ein FK-Medium enthaltend
- eine polymerisierbare Komponente A), enthaltend eine oder mehrere polymerisierbare Verbindungen, vorzugsweise ausgewählt aus reaktiven Mesogenen, sowie
- eine flüssigkristalline Komponente B), im Folgenden auch als "FK-Hostmischung" bezeichnet, bestehend aus einer erfindungsgemäßen FK-Mischung enthaltend eine oder mehrere Verbindungen der Formel I wie vor- und nachstehend beschrieben.
- ein Polymer erhältlich durch Polymerisation einer polymerisierbaren Komponente A), enthaltend eine oder mehrere polymerisierbare Verbindungen, vorzugsweise ausgewählt aus reaktiven Mesogenen, sowie
- eine flüssigkristalline Komponente B), im Folgenden auch als "FK-Hostmischung" bezeichnet, bestehend aus einer erfindungsgemäßen FK-Mischung enthaltend eine oder mehrere Verbindungen der Formel I wie vor- und nachstehend beschrieben.

Ein weiterer Gegenstand der Erfindung ist die Verwendung von erfindungsgemäßen FK-Mischungen und FK-Medien in PS- und PSA-Anzeigen, insbesondere die Verwendung in PS- und PSA-Anzeigen enthaltend ein FK-Medium, zur Erzeugung eines Tiltwinkels im FK-Medium durch in situ-Polymerisation der polymerisierbare(n) Verbindung(en) in der PSA-Anzeige unter Anlegen eines elektrischen oder magnetischen Feldes.

Ein weiterer Gegenstand der Erfindung ist eine FK-Anzeige enthaltend ein erfindungsgemäßes FK-Medium, insbesondere eine PS- oder PSA-Anzeige, besonders bevorzugt eine PSA-VA-, PSA-IPS- oder PS-FFS-Anzeige.

Ein weiterer Gegenstand der Erfindung ist eine FK-Anzeige des PS- oder PSA-Typs, enthaltend eine FK-Zelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium unter Anlegen einer elektrischen Spannung, und wobei die niedermolekulare Komponente eine erfindungsgemäße FK-Mischung wie vor- und nachstehend beschrieben ist.

Ein weiterer Gegenstand der Erfindung ist ein Verfahren zur Herstellung eines erfindungsgemäßen FK-Mediums, indem man eine oder mehrere niedermolekulare flüssigkristalline Verbindungen, oder eine erfindungsgemäße FK-Mischung, mit einer oder mehreren polymerisierbaren Verbindungen, und gegebenenfalls mit weiteren flüssigkristallinen Verbindungen und/oder Additiven, mischt.

Ein weiterer Gegenstand der Erfindung ist ein Verfahren zur Herstellung einer erfindungsgemäßen FK-Anzeige, indem man eine erfindungsgemäße FK-Mischung mit einer oder mehreren polymerisierbaren Verbindungen, und gegebenenfalls mit weiteren flüssigkristallinen Verbindungen und/oder Additiven, mischt, die so erhaltene Mischung in eine FK-Zelle wie vor- und nachstehend beschrieben füllt, und die polymerisierbare(n) Verbindung(en) unter Anlegen einer elektrischen Spannung polymerisiert.

### Vor- und nachstehend gelten folgende Bedeutungen:

Der Begriff "PSA" wird, falls nicht anders angegeben, stellvertretend für PS-Anzeigen und PSA-Anzeigen verwendet.

Die Begriffe "Tilt" und "Tiltwinkel" beziehen sich auf eine gekippte oder geneigte Orientierung der FK-Moleküle eines FK-Mediums relativ zu den Oberflächen der Zelle in einer FK-Anzeige (hier vorzugsweise einer PS- oder PSA-Anzeige). Der Tiltwinkel bezeichnet dabei den durchschnittlichen Winkel (<90°) zwischen den Moleküllängsachsen der FK-Moleküle (FK-Direktor) und der Oberfläche der planparallelen Trägerplatten, welche die FK-Zelle bilden. Ein niedriger Wert des Tiltwinkels (d.h. eine große Abweichung vom 90°-Winkel) entspricht dabei einem großen Tilt. Eine geeignete Methode zur Messung des Tiltwinkels findet sich in den Beispielen. Soweit nicht anders angegeben, beziehen sich vor- und nachstehend offenbarte Werte des Tiltwinkels auf diese Messmethode.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor - und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare(n) Gruppe(n) miteinander verbindet.

Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe P bezeichnet).

Die Begriffe "niedermolekulare Verbindung" und "unpolymerisierbare Verbindung" bezeichnen, üblicherweise monomere, Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist.

Für die Zwecke dieser Erfindung soll der Begriff "FK-Medium" ein Medium bezeichnen, welches eine FK-Mischung sowie eine oder mehrere Für die Zwecke dieser Erfindung soll der Begriff "FK-Medium" ein Medium bezeichnen, welches eine FK-Mischung sowie eine oder mehrere polymerisierbare Verbindungen (wie beispielsweise reaktive Mesogene) enthält. Der Begriff "FK-Mischung" (oder "Host-Mischung") soll eine flüssigkristalline Mischung bezeichnen, welche ausschließlich aus unpolymerisierbaren, niedermolekularen Verbindungen besteht, vorzusgweise aus zwei oder mehr flüssigkristallinen Verbindungen und ggf. weiteren Additiven wie zum Beispiel chiralen Dotierstoffen oder Stabilisatoren. "Unpolymerisierbar" bedeutet, dass die Verbindungen gegenüber einer Polymerisationsreaktion, zumindest unter den zur Polymerisation der polymerisierbaren Verbindungen verwendeten Bedingungen, stabil bzw. unreaktiv sind.

Besonders bevorzugt sind FK-Mischungen und FK-Medien, die eine nematische Phase, insbesondere eine nematische Phase bei Raumtemperatur, aufweisen.

Die Konzentration an Verbindungen der Formel I in der FK-Mischung (d.h. ohne die polymerisierbare Komponente) beträgt 1 bis 25%, ganz besonders bevorzugt 2 bis 10%.

Besonders bevorzugt sind FK-Mischungen und FK-Medien enthaltend 1 bis 5, vorzugsweise 1, 2 oder 3 Verbindungen der Fomel I5-I13.

Die Verbindungen der Formel I6-I13 sind ausgewählt aus der Gruppe bestehend aus folgenden Unterformeln: 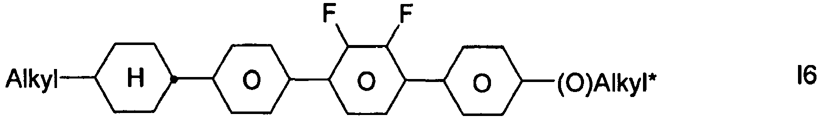 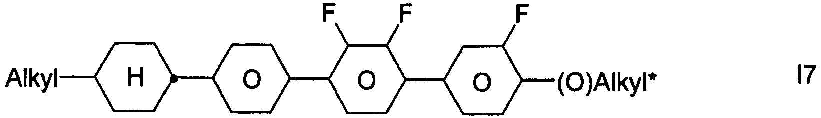 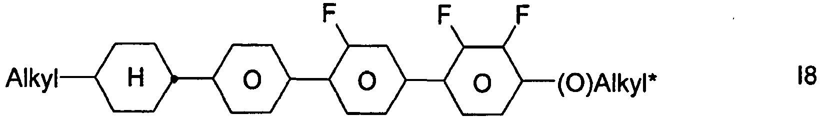 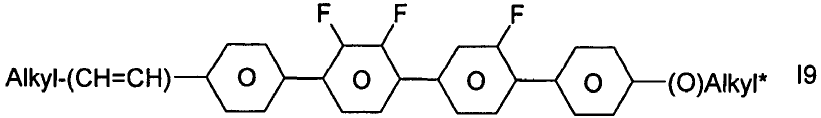 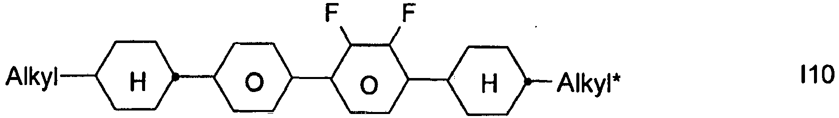 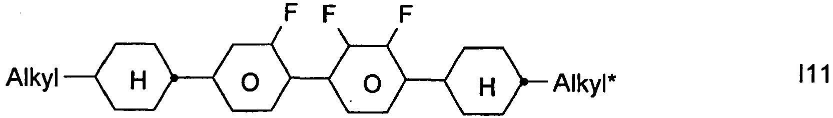 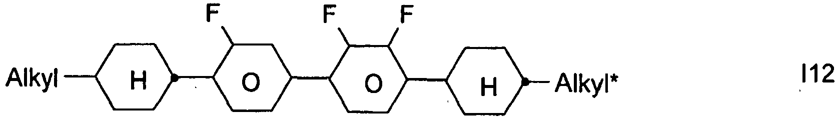 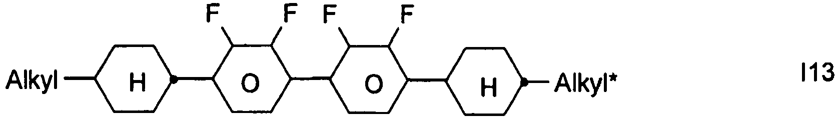 worin Alkyl und Alkyl* jeweils unabhängig voneinander einen geradkettigen Alkylrest mit 1-12, vorzugsweise 1-6 C-Atomen, (O) ein Sauerstoffatom oder eine Einfachbindung, (CH=CH) eine Ethenylengruppe oder eine Einfachbindung, und L H oder F bedeuten.

Besonders bevorzugt sind Verbindungen ausgewählt aus der Gruppe bestehend aus den Formeln I5, I6, I7, I8 und I9.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, n-Hexyl, 2-Ethylhexyl, n-Heptyl, n-Octyl, n-Nonyl, n-Decyl, n-Undecyl, n-Dodecyl.

Bevorzugte Alkenylgruppen sind beispielsweise Ethenyl, Propenyl, Butenyl, Pentenyl, Hexenyl, Heptenyl, Octenyl.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy.

Besonders bevorzugte FK-Mischungen, FK-Medien und FK-Anzeigen werden im Folgenden genannt:
1) FK-Mischung oder FK-Medium, enthaltend zusätzlich eine oder mehrere Verbindungen der Formel CY und/oder PY: 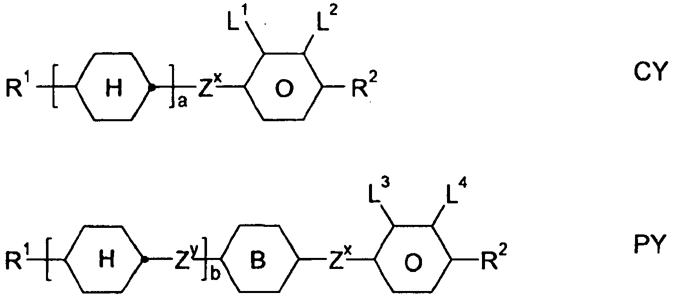 worin die einzelnen Reste folgende Bedeutung besitzen
   a 1 oder 2,
   b 0 oder 1,

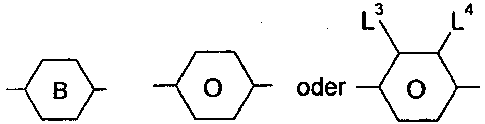

   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind, vorzugsweise Alkyl oder Alkoxy mit 1 bis 6 C-Atomen,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹⁻⁴: jeweils unabhängig voneinander F, Cl, OCF₃, CF₃, CH₃, CH₂F, CHF₂.

   Vorzugsweise bedeuten beide Reste L¹ und L² F, oder einer der Reste L¹ und L² F und der andere Cl, bzw. beide Reste L³ und L⁴ F, oder einer der Reste L³ und L⁴ F und der andere Cl.
   Die Verbindungen der Formel CY sind vorzugsweise ausgewählt aus der Gruppe bestehend aus folgenden Unterformeln 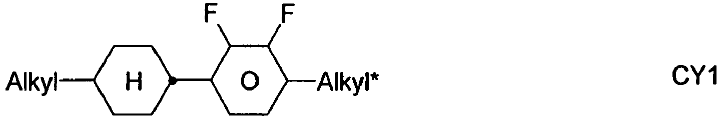 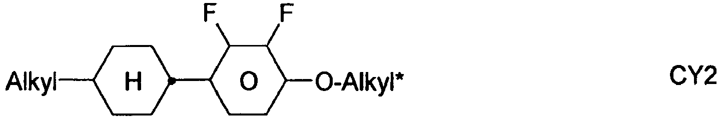 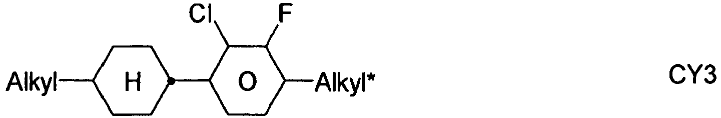 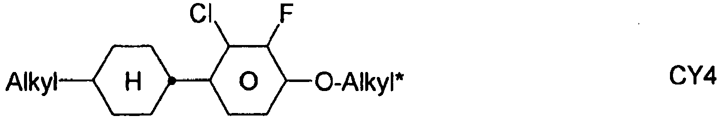 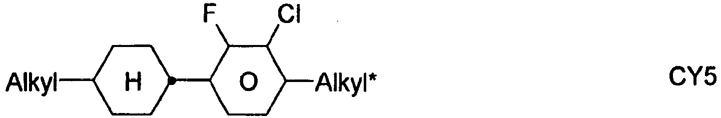 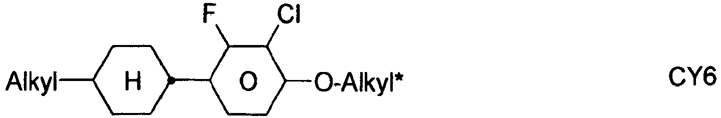 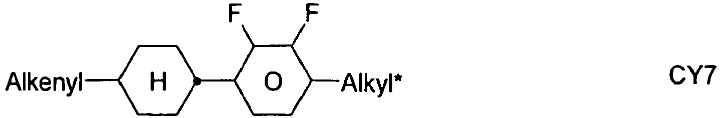 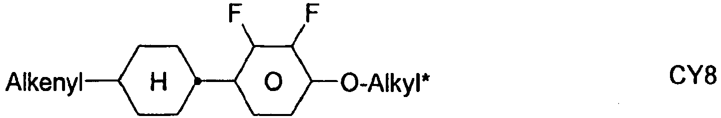 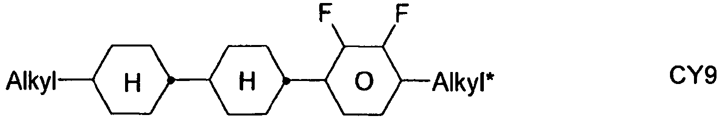 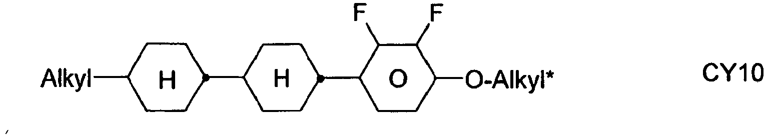 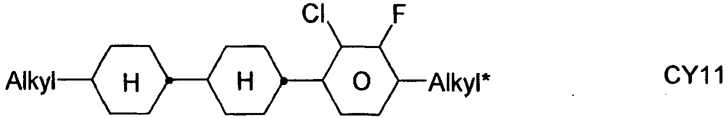 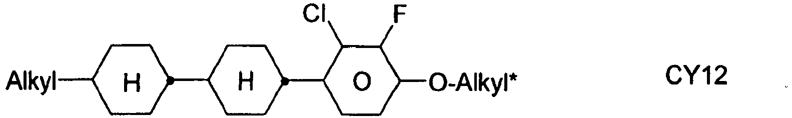 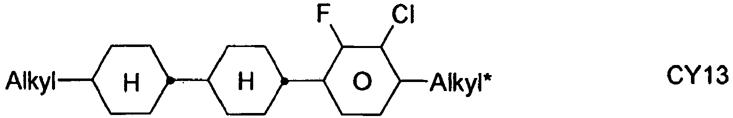 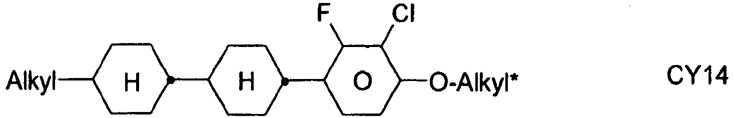 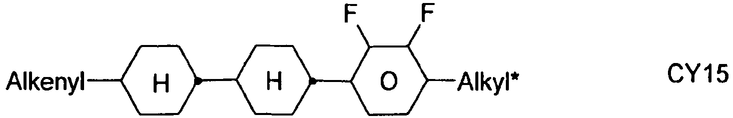 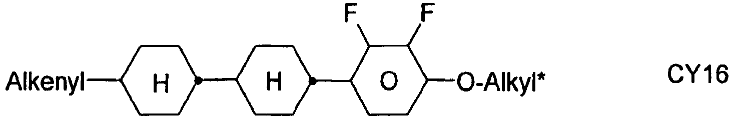 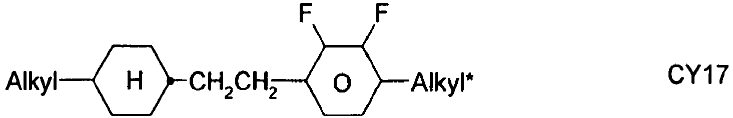 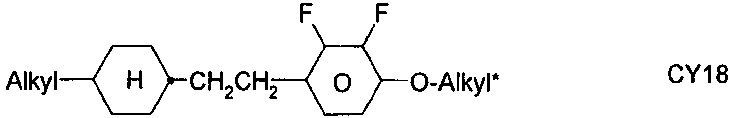 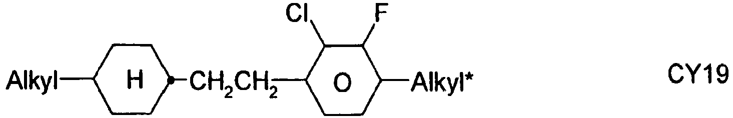 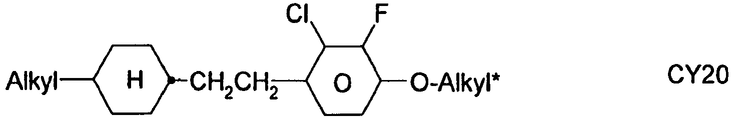 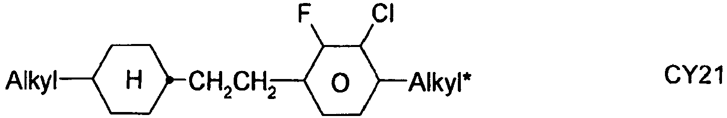 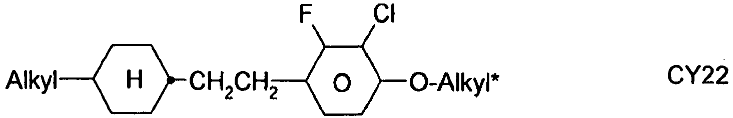 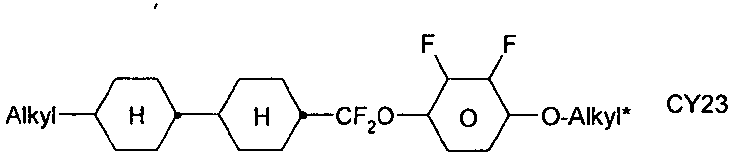 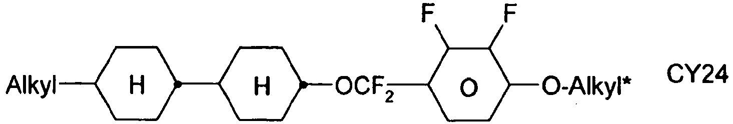 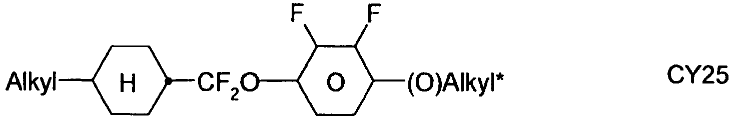 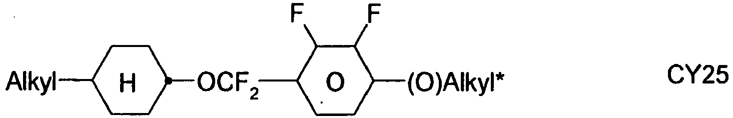 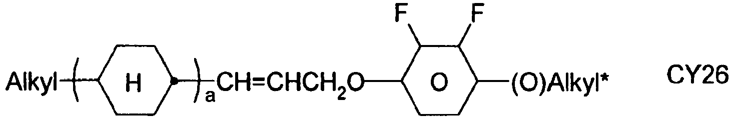 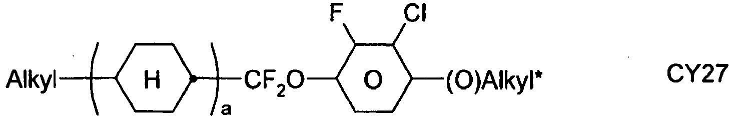 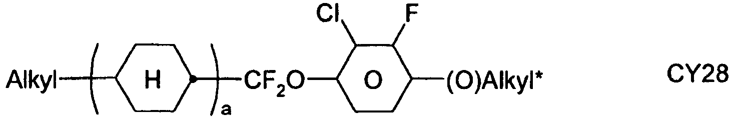 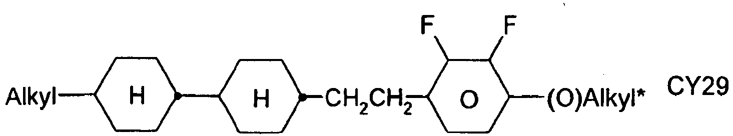 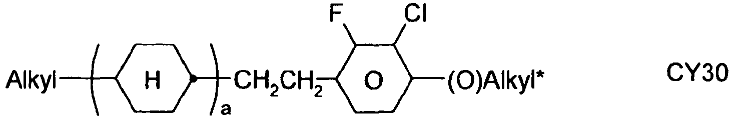 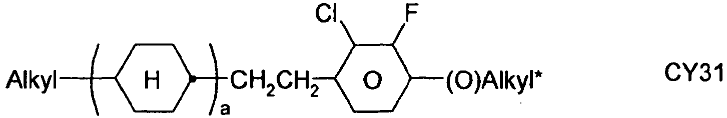 worin a 1 oder 2, Alkyl und Alkyl* jeweils unabhängig voneinander einen geradkettigen Alkylrest mit 1-6 C-Atomen, und Alkenyl einen geradkettigen Alkenylrest mit 2-6 C-Atomen, und (O) ein Sauerstoffatom oder eine Einfachbindung bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Die Verbindungen der Formel PY sind vorzugsweise ausgewählt aus der Gruppe bestehend aus folgenden Unterformeln: 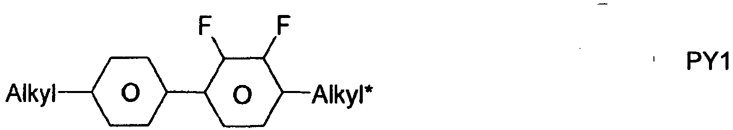 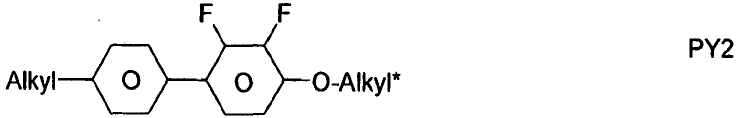 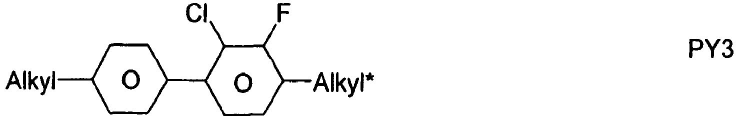 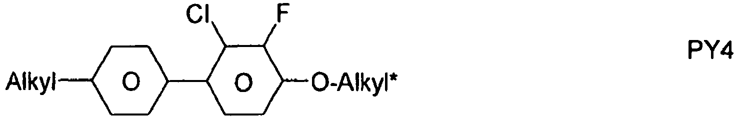 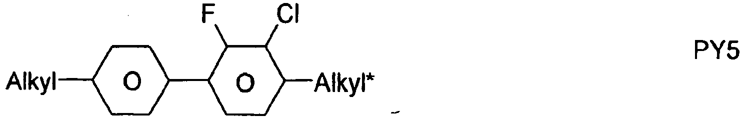 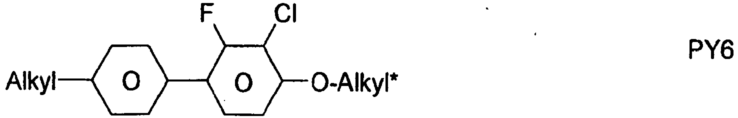 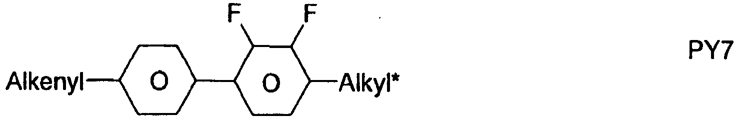 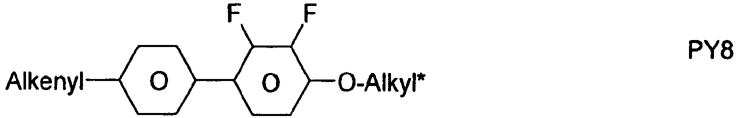 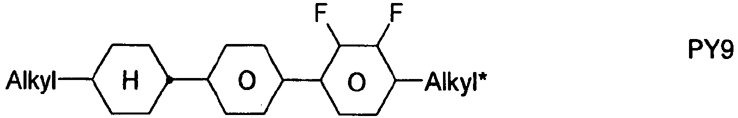 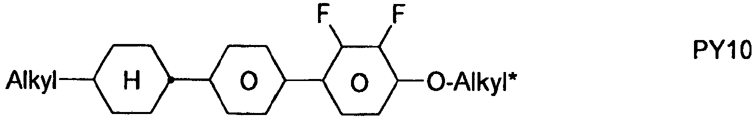 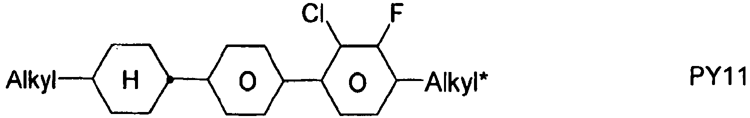 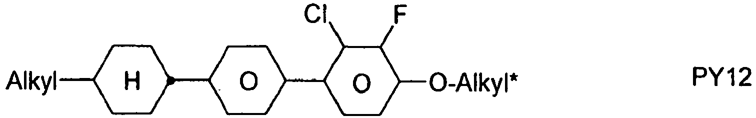 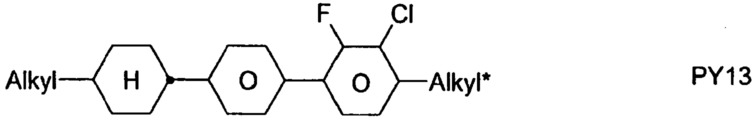 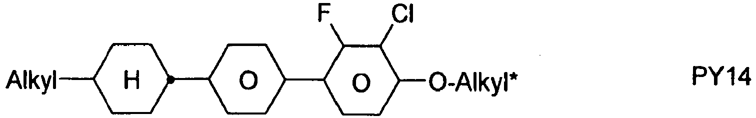 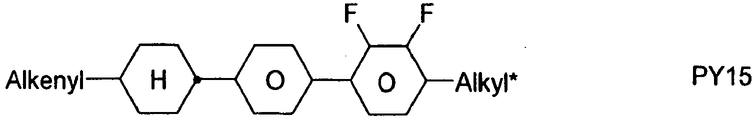 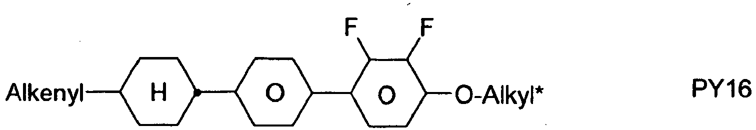 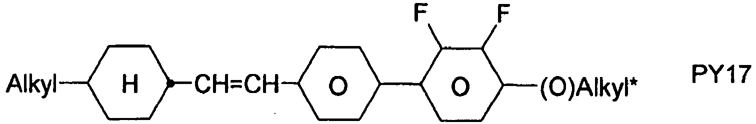 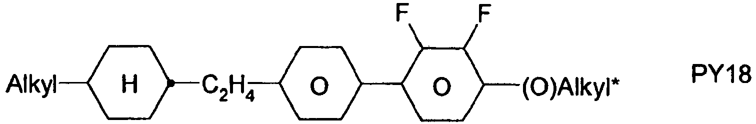 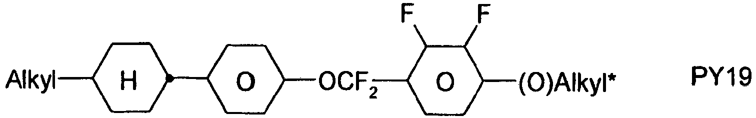 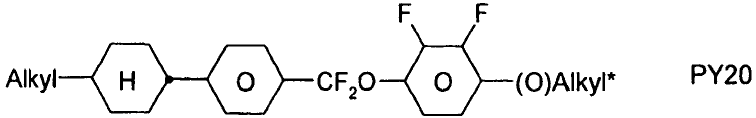 worin Alkyl und Alkyl* jeweils unabhängig voneinander einen geradkettigen Alkylrest mit 1-6 C-Atomen und Alkenyl einen geradkettigen Alkenylrest mit 2-6 C-Atomen, und (O) ein Sauerstoffatom oder eine Einfachbindung bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Die Konzentration einer einzelnen Verbindung der Formel CY oder PY in der FK-Mischung beträgt vorzugsweise 2 bis 20%.
   Die Gesamtkonzentration an Verbindungen der Formel CY und PY in der FK-Mischung beträgt vorzugsweise 1 bis 90%, besonders bevorzugt 10 bis 70%.
2) FK-Mischung oder FK-Medium, enthaltend zusätzlich eine oder mehrere Verbindungen der folgenden Formel: 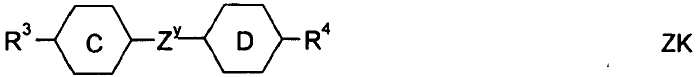 worin die einzelnen Reste folgende Bedeutung besitzen 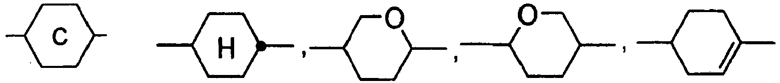 oder 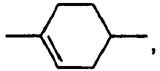 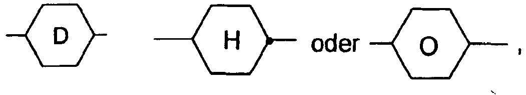
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
   - Z^{Y}: -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung.

   Die Verbindungen der Formel ZK sind vorzugsweise ausgewählt aus der Gruppe bestehend aus folgenden Unterformeln: 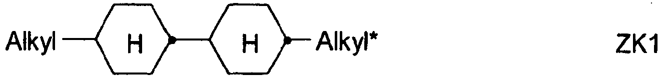 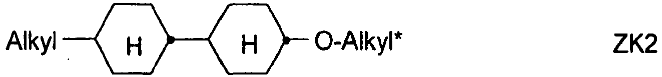 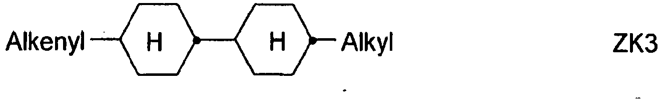 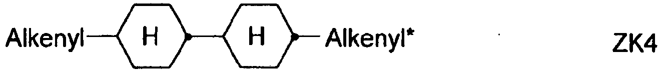 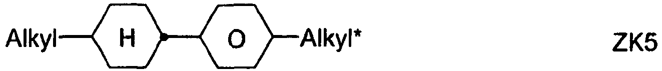 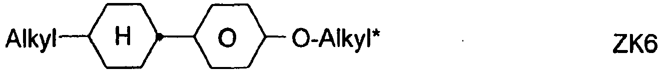 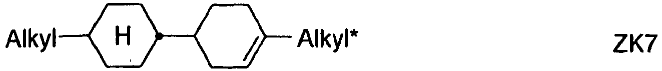 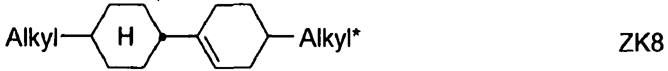 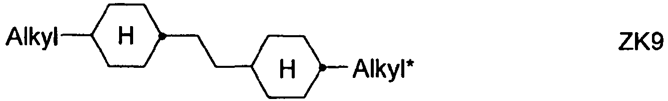 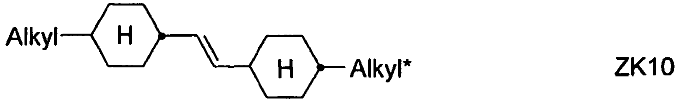 worin Alkyl und Alkyl* jeweils unabhängig voneinander einen geradkettigen Alkylrest mit 1-6 C-Atomen bedeuten, und Alkenyl einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Die Konzentration einer einzelnen Verbindung der Formel ZK in der FK-Mischung beträgt vorzugsweise 2 bis 20%.
3) FK-Mischung oder FK-Medium, enthaltend zusätzlich eine oder mehrere Verbindungen der folgenden Formel: 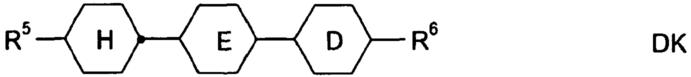 worin die einzelnen Reste bei jedem Auftreten gleich oder verschieden folgende Bedeutung haben:
   - R⁵ und R⁶: jeweils unabhängig voneinander eine der oben für R¹ angegebenen Bedeutungen,

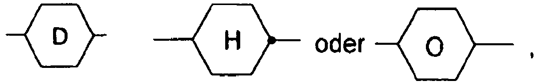

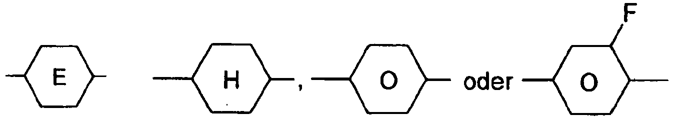

   Die Verbindungen der Formel DK sind vorzugsweise ausgewählt aus der Gruppe bestehend aus folgenden Unterformeln: 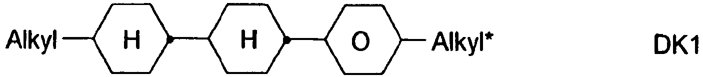 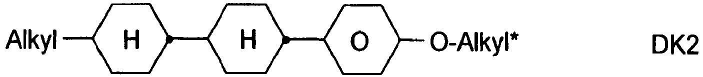 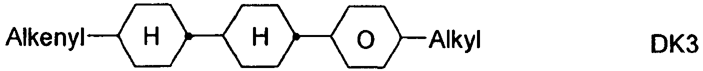 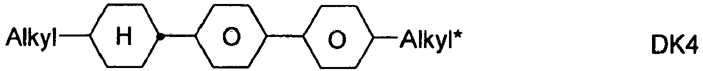 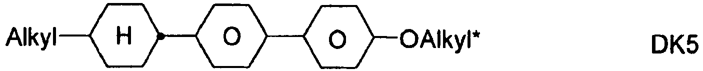 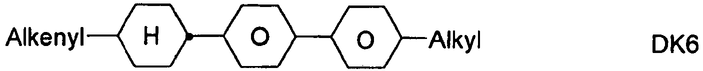 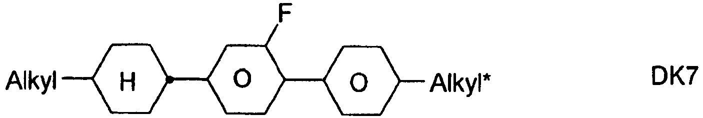 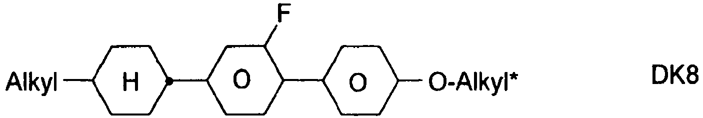 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Besonders bevorzugt sind Verbindungen der Formel DK1, DK2, DK4 und DK5.
4) FK-Mischung oder FK-Medium, enthaltend zusätzlich eine oder mehrere Verbindungen der folgenden Formel: 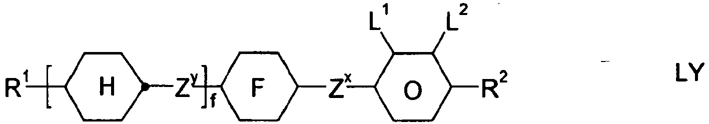 worin die einzelnen Reste folgende Bedeutung besitzen 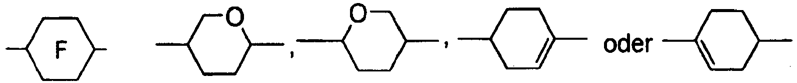
   - f: 0 oder 1,
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.

   Vorzugsweise bedeuten beide Reste L¹ und L² F oder einer der Reste L¹ und L² F und der andere Cl.
   Die Verbindungen der Formel LY sind vorzugsweise ausgewählt aus der Gruppe bestehend aus folgenden Unterformeln 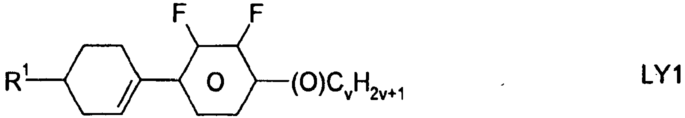 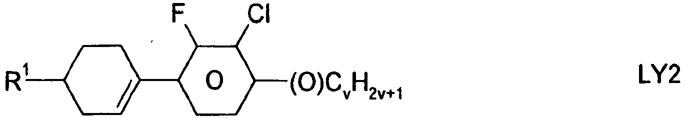 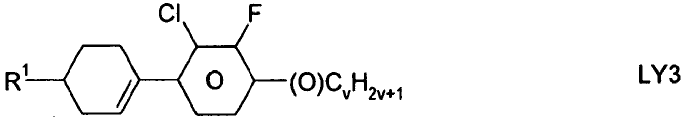 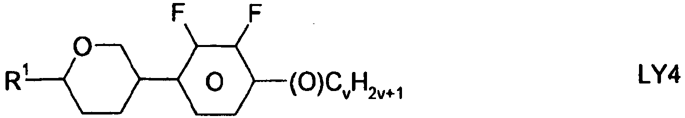 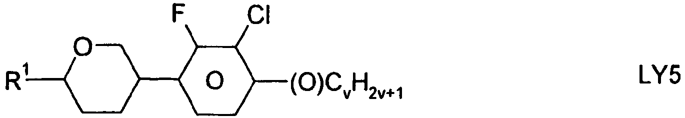 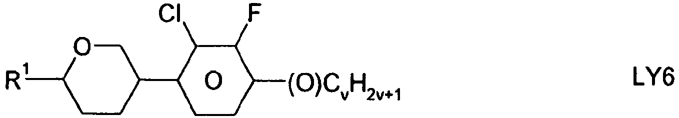 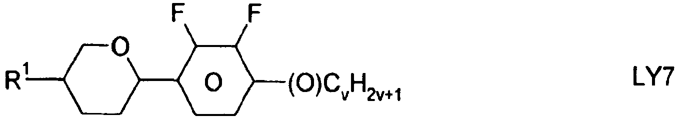 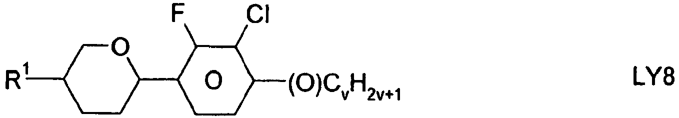 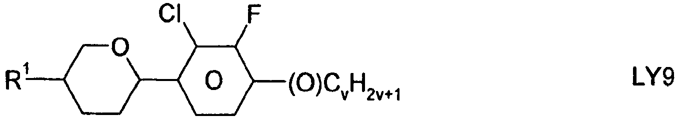 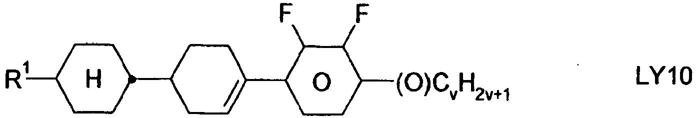 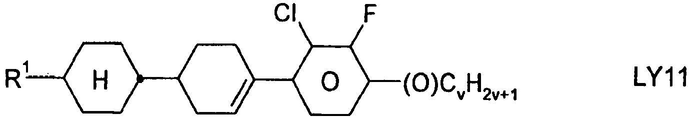 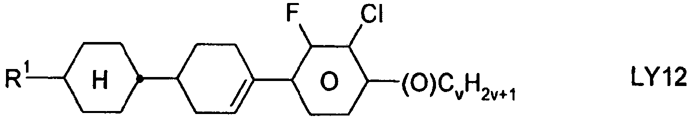 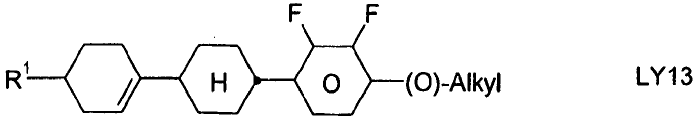 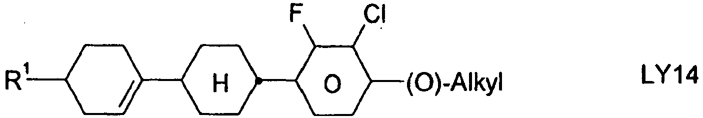 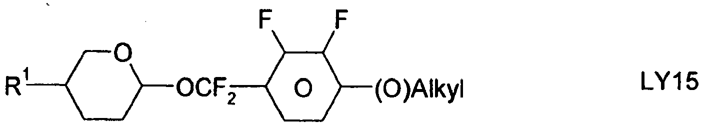 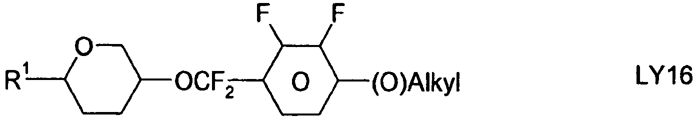 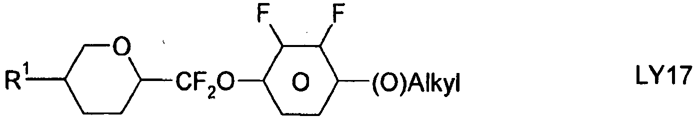 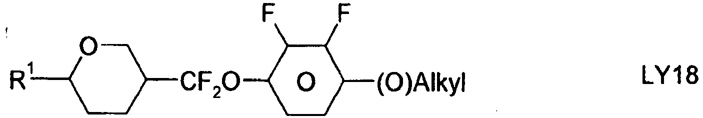 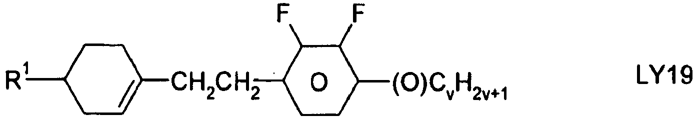 worin R¹ die oben angegebene Bedeutung hat, Alkyl einen geradkettigen Alkylrest mit 1-6 C-Atomen, (O) ein Sauerstoffatom oder eine Einfachbindung und v eine ganze Zahl von 1 bis 6 bedeuten. R¹ bedeutet vorzugsweise geradkettiges Alkyl mit 1 bis 6 C-Atomen oder geradkettiges Alkenyl mit 2 bis 6 C-Atomen, insbesondere CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Die Konzentration einer einzelnen Verbindung der Formel LY in der FK-Mischung beträgt vorzugsweise 2 bis 20%.
5) FK-Mischung oder FK-Medium, enthaltend zusätzlich eine oder mehrere Verbindungen ausgewählt aus der Gruppe bestehend aus folgenden Formeln: 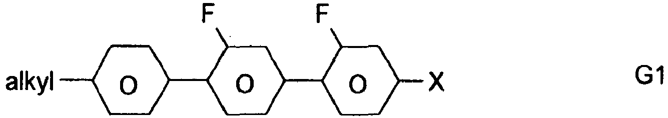 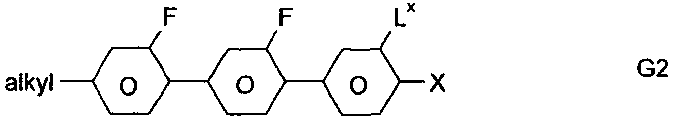 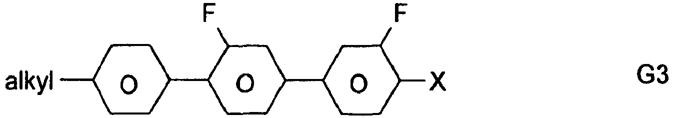 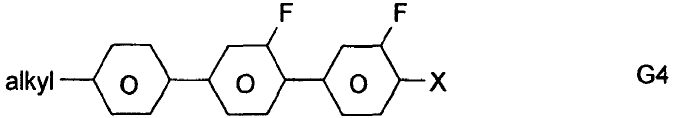 worin alkyl C₁₋₆-alkyl, L^{x} H oder F und X F, Cl, OCF₃, OCHF₂ oder OCH=CF₂ bedeutet. Besonders bevorzugt sind Verbindungen der Formel G1, worin X F bedeutet.
6) FK-Mischung oder FK-Medium, enthaltend zusätzlich eine oder mehrere Verbindungen ausgewählt aus der Gruppe bestehend aus folgenden Formeln: 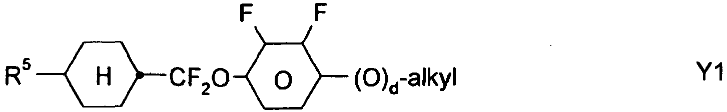 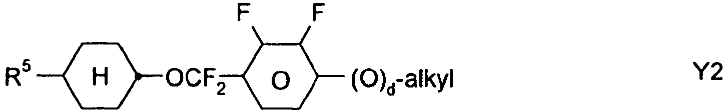 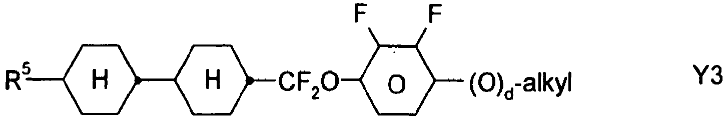 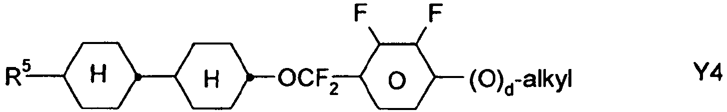 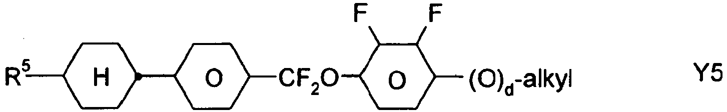 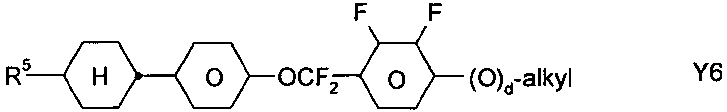 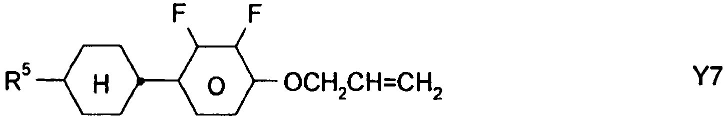 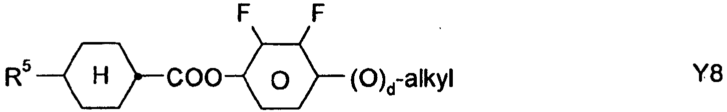 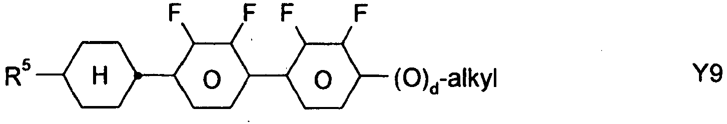 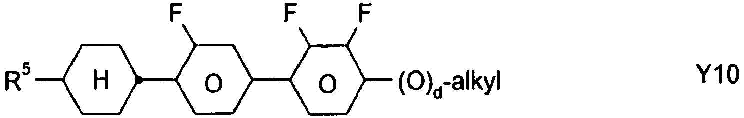 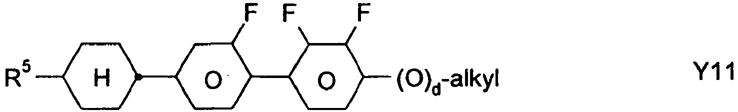 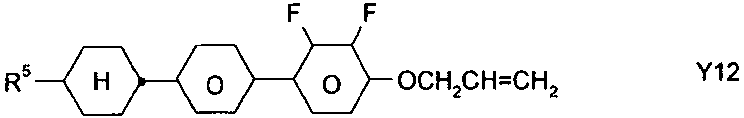 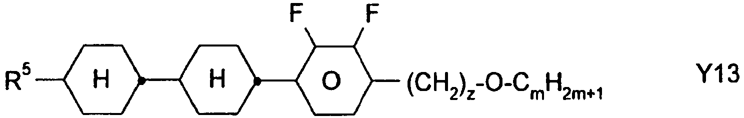 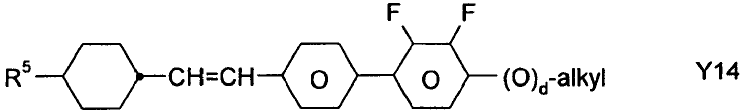 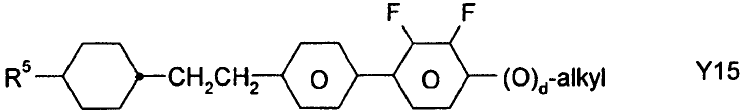 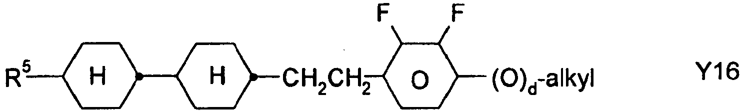 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält das erfindungsgemäße FK-Medium eine oder mehrere Verbindungen der oben genannten Formeln in Mengen von ≥ 5 Gew.%.
7) FK-Mischung oder FK-Medium, enthaltend zusätzlich eine oder mehrere Biphenylverbindungen ausgewählt aus der Gruppe bestehend aus folgenden Formeln: 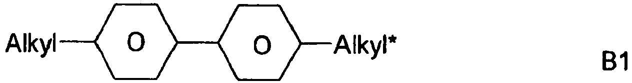 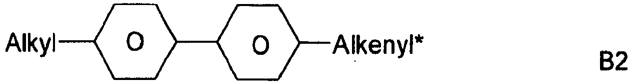 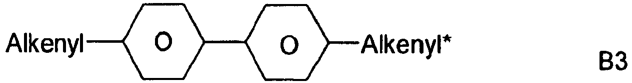 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Der Anteil der Biphenyle der Formeln B1 bis B3 in der FK-Mischung beträgt vorzugsweise mindestens 3 Gew.%, insbesondere ≥ 5 Gew.%.
   Die Verbindungen der Formel B2 sind besonders bevorzugt.
   Die Verbindungen der Formel B1 bis B3 sind vorzugsweise ausgewählt aus der Gruppe bestehend aus folgenden Unterformeln 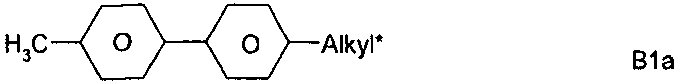 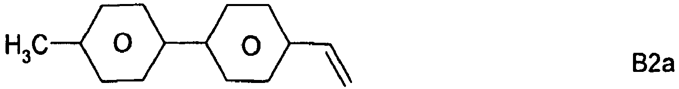 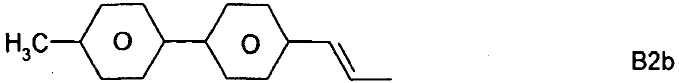 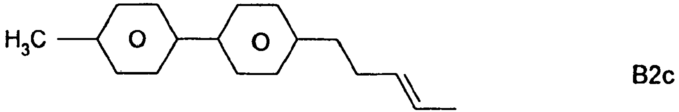 worin Alkyl* einen Alkylrest mit 1-6 C-Atomen bedeutet. Insbesondere bevorzugt enthält das erfindungsgemäße Medium eine oder mehrere Verbindungen der Formeln B1a und/oder B2c.
8) FK-Mischung oder FK-Medium, enthaltend zusätzlich eine oder mehrere Terphenylverbindungen der folgenden Formel: 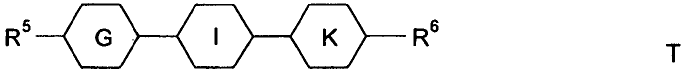 worin R⁵ und R⁶ jeweils unabhängig voneinander eine der oben für R¹ angegebenen Bedeutungen besitzen und 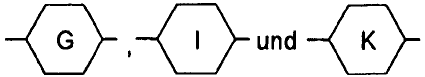 jeweils unabhängig voneinander 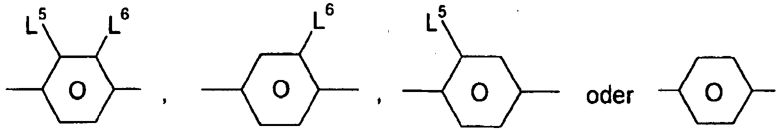 bedeuten, worin L⁵ F oder Cl, vorzugsweise F, und L⁶ F, Cl, OCF₃, CF₃, CH₃, CH₂F oder CHF₂, vorzugsweise F, bedeuten.
   Die Verbindungen der Formel T sind vorzugsweise ausgewählt aus der Gruppe bestehend aus folgenden Unterformeln 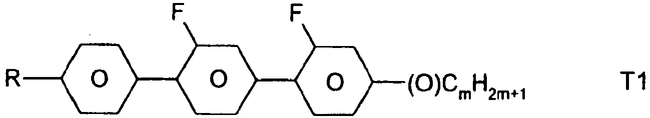 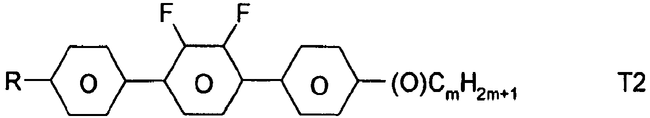 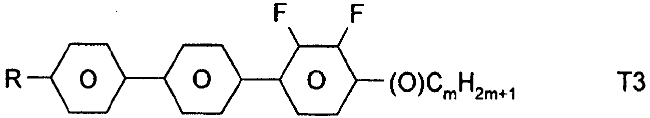 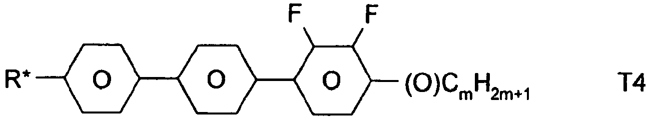 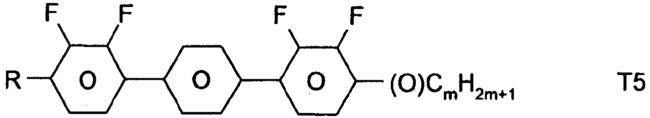 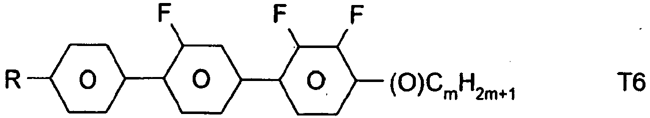 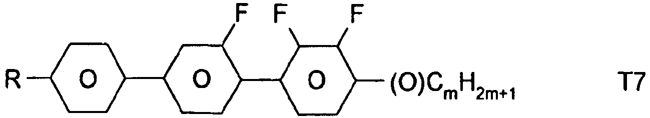 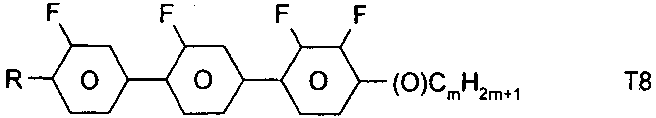 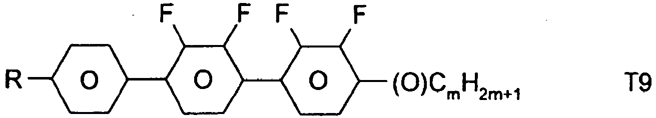 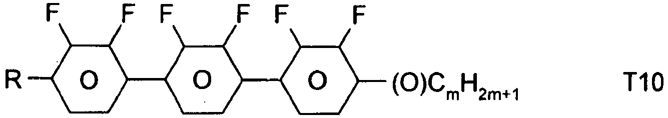 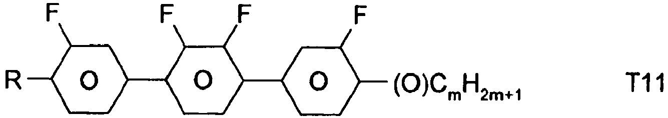 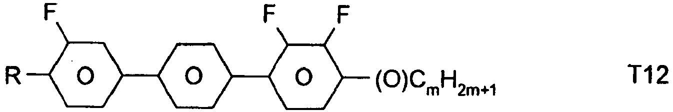 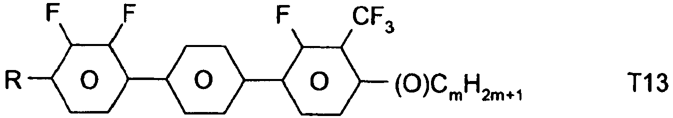 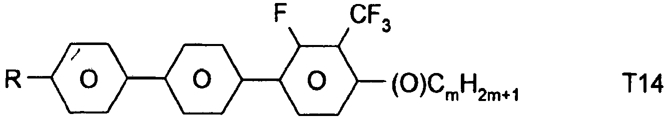 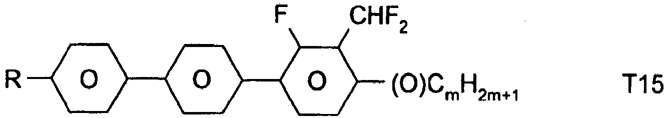 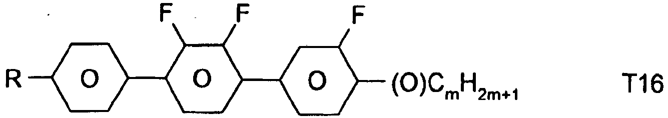 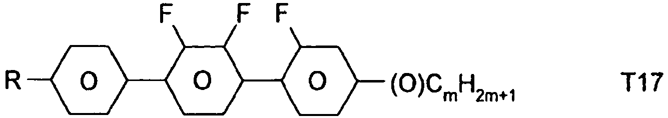 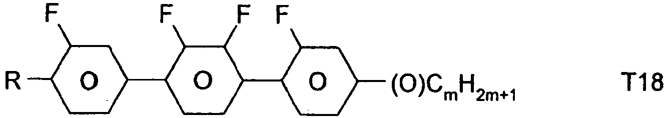 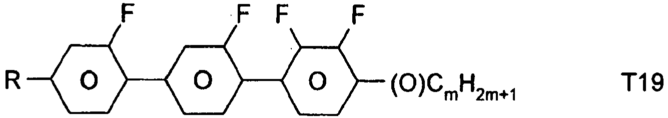 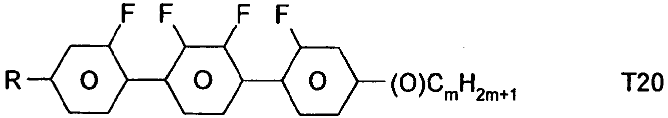 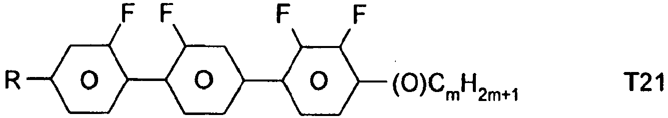 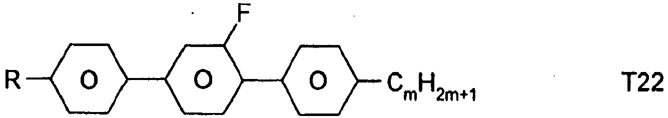 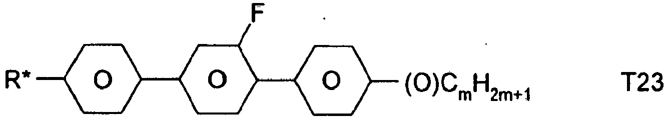 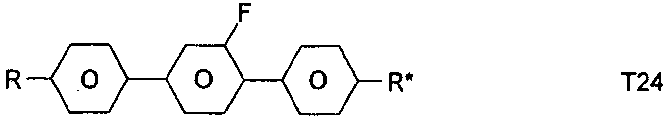 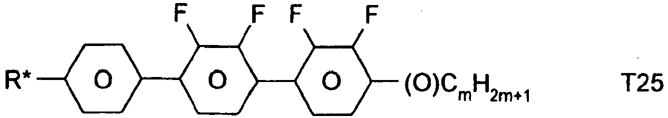 worin R einen geradkettigen Alkyl- oder Alkoxyrest mit 1-7 C-Atomen, R* einen geradkettigen Alkenylrest mit 2-7 C-Atomen, (O) ein Sauerstoffatom oder eine Einfachbindung, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Vorzugsweise bedeutet R Methyl, Ethyl, Propyl, Butyl, Pentyl, Hexyl Methoxy, Ethoxy, Propoxy, Butoxy oder Pentoxy.
   Das erfindungsgemäße FK-Medium enthält die Terphenyle der Formeln T und deren bevorzugte Unterformeln vorzugsweise in einer Menge von 2-50 Gew.%, insbesondere von 5-20 Gew.%.
   Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.
   Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
9) FK-Mischung oder FK-Medium, enthaltend zusätzlich eine oder mehrere Verbindungen ausgewählt aus der Gruppe bestehend aus folgenden Formeln: 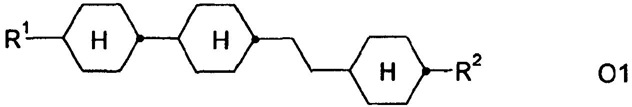 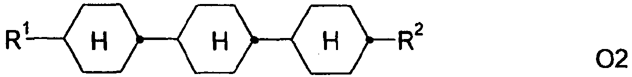 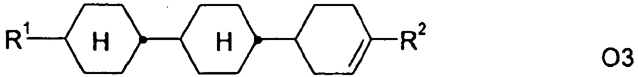 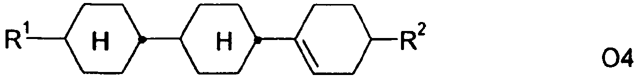 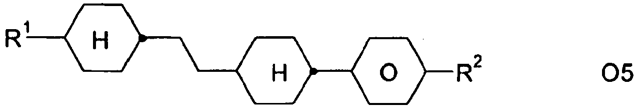 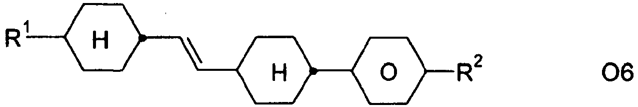 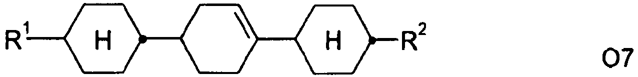 worin R¹ und R² die oben angegebenen Bedeutungen haben, und vorzugsweise jeweils unabhängig voneinander geradkettiges Alkyl mit 1 bis 6 C-Atomen oder geradkettiges Alkenyl mit 2 bis 6 C-Atomen bedeuten.
   Bevorzugte Medien enthalten eine oder mehrere Verbindungen ausgewählt aus den Formeln 01, 03 und 04.
10) FK-Mischung oder FK-Medium, enthaltend zusätzlich eine oder mehrere Verbindungen der folgenden Formel: 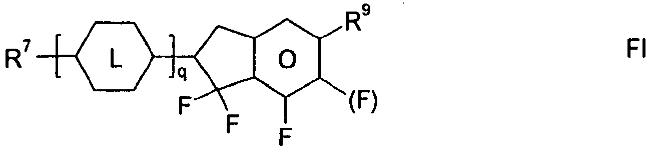 worin 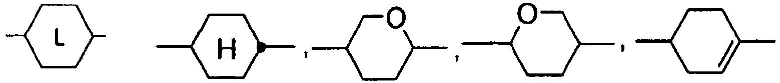 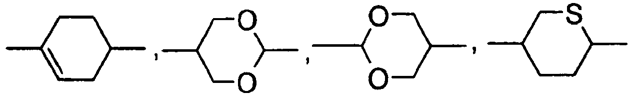 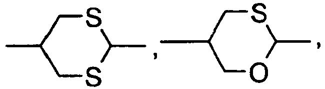
   R⁹ H, CH₃, C₂H₅ oder n-C₃H₇, (F) einen optionalen Fluorsubstituenten und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.
   Besonders bevorzugte Verbindungen der Formel FI sind ausgewählt aus der Gruppe bestehend aus folgenden Unterformeln: 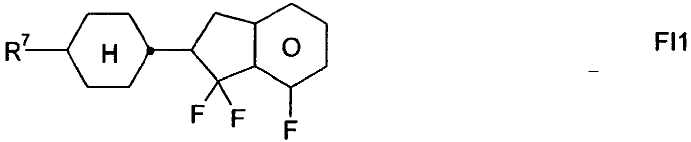 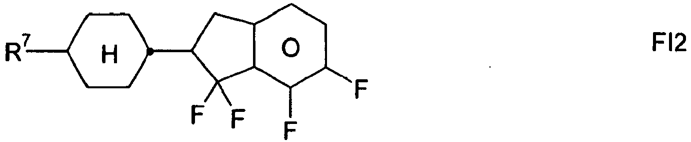 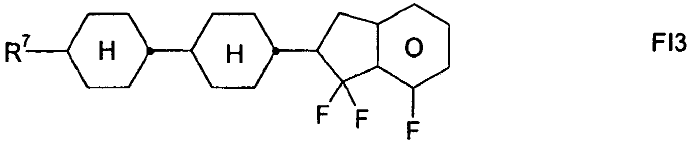 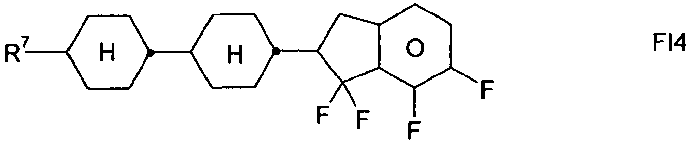 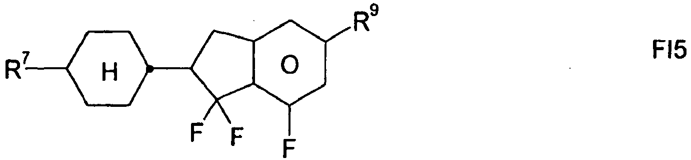 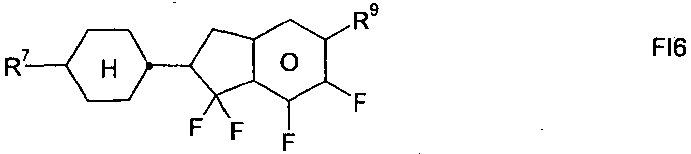 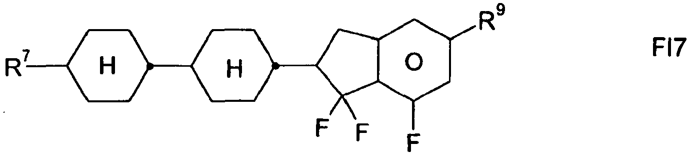 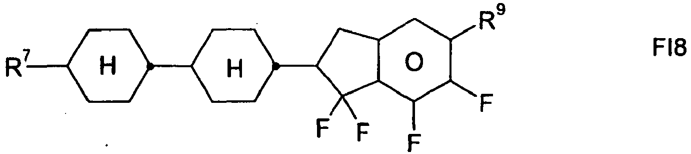 worin R⁷ vorzugsweise geradkettiges Alkyl bedeutet und R⁹ CH₃, C₂H₅ oder n-C₃H₇ bedeutet. Besonders bevorzugt sind die Verbindungen der Formel FI1, FI2 und FI3.
11) FK-Mischung oder FK-Medium, enthaltend zusätzlich eine oder mehrere Verbindungen, die eine Tetrahydronaphthyl- oder Naphthyl-Einheit aufweisen, wie z.B. die Verbindungen ausgewählt aus der Gruppe bestehend aus folgenden Formeln: 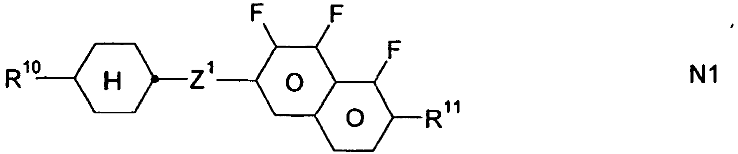 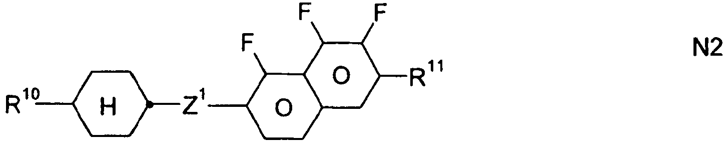 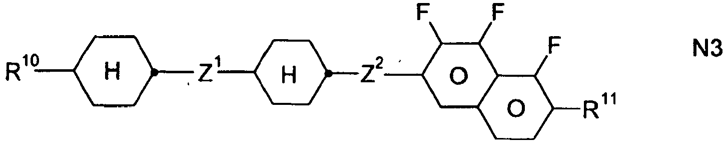 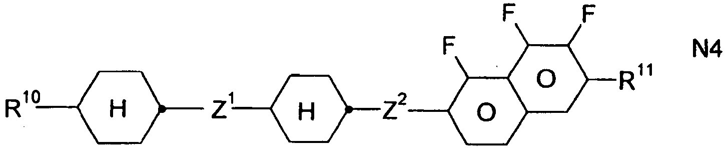 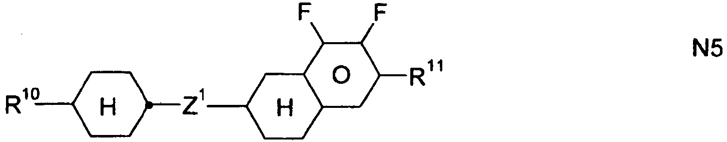 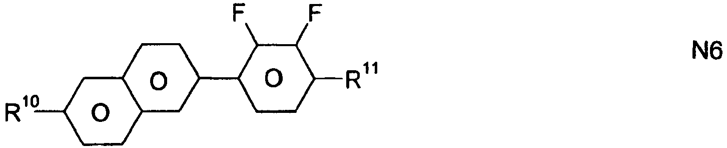 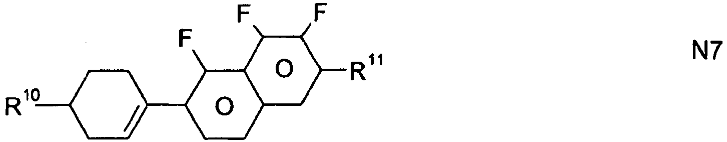 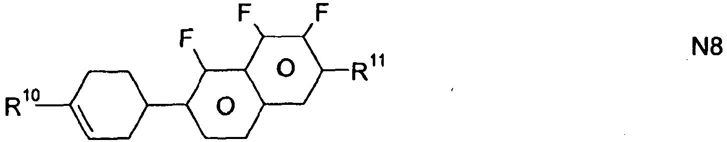 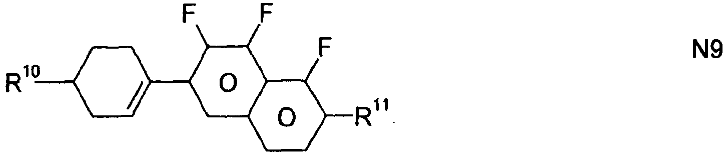 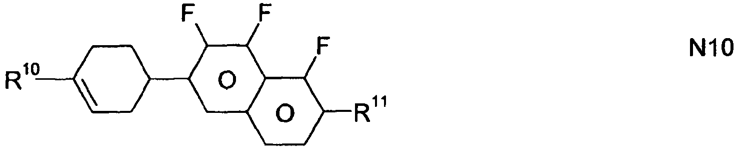 worin R¹⁰ und R¹¹ jeweils unabhängig voneinander eine der für R¹ angegebenen Bedeutungen haben, vorzugsweise geradkettiges Alkyl oder Alkoxy mit 1 bis 6 C-Atomen oder geradkettiges Alkenyl mit 2 bis 6 C-Atomen bedeuten, und Z¹ und Z² jeweils unabhängig voneinander -C₂H₄-, -CH=CH-, -(CH₂)₄-, -(CH₂)₃O-, -O(CH₂)₃-,-CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CH₂- oder eine Einfachbindung bedeuten.
12) FK-Mischung oder FK-Medium, enthaltend zusätzlich eine oder mehrere eine oder mehrere Difluordibenzochromane und/oder Chromane der folgenden Formeln: 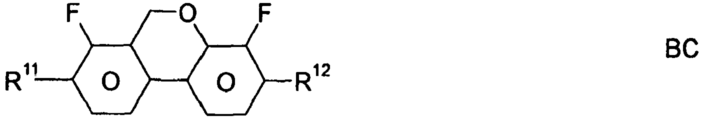 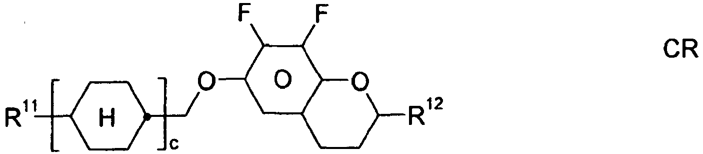 worin R¹¹ und R¹² jeweils unabhängig voneinander die oben angegebene Bedeutung aufweisen, und c 0 oder 1 bedeutet, vorzugsweise in Mengen von 3 bis 20 Gew.%, insbesondere in Mengen von 3 bis 15 Gew.%.
   Besonders bevorzugte Verbindungen der Formeln BC und CR sind ausgewählt aus der Gruppe bestehend aus folgenden Unterformeln: 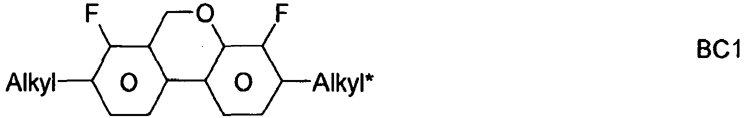 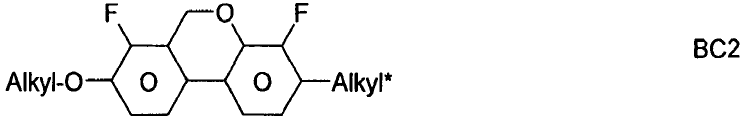 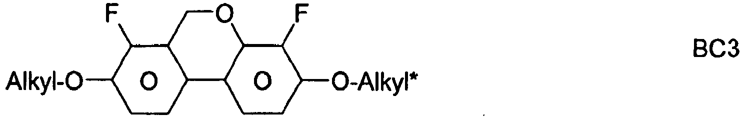 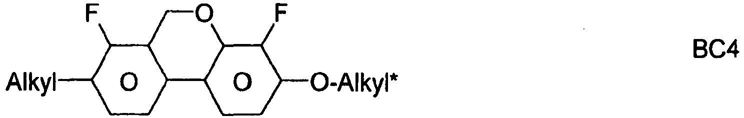 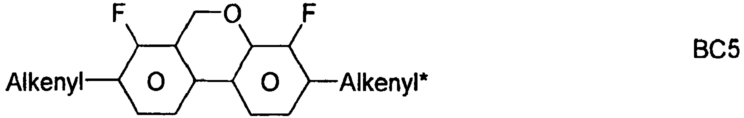 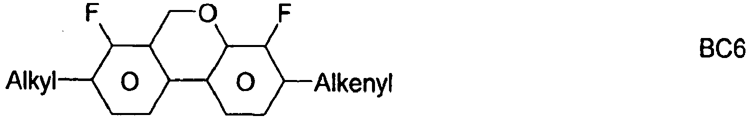 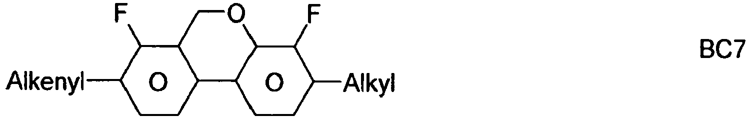 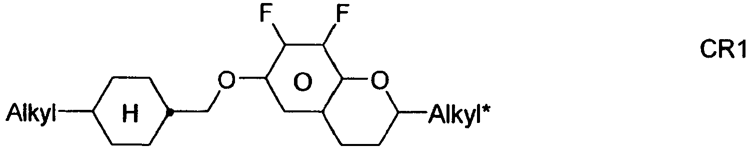 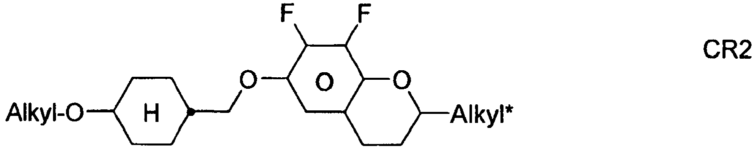 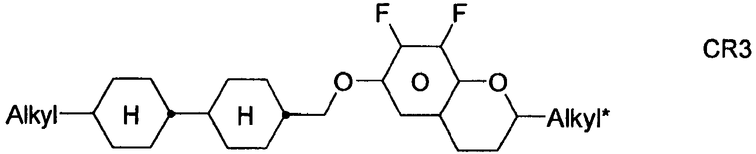 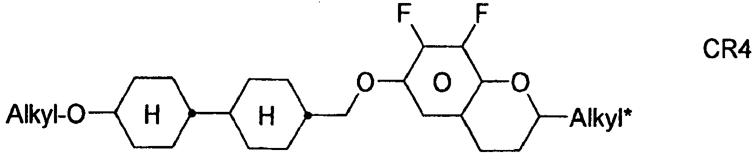 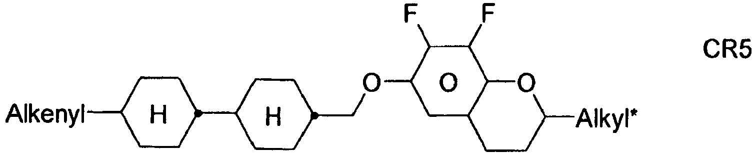 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Ganz besonders bevorzugt sind Mischungen enthaltend eine, zwei oder drei Verbindungen der Formel BC-2.
13) FK-Mischung oder FK-Medium, enthaltend zusätzlich eine oder mehrere fluorierte Phenanthrene und/oder Dibenzofurane der folgenden Formeln: 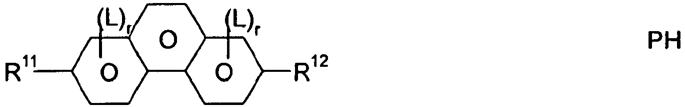 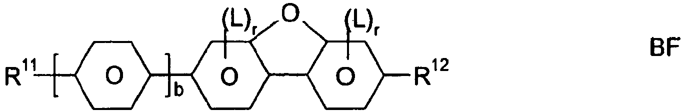 worin R¹¹ und R¹² jeweils unabhängig voneinander die oben angegebenen Bedeutungen besitzen, b 0 oder 1, L F und r 1, 2 oder 3 bedeutet.
   Besonders bevorzugte Verbindungen der Formeln PH und BF sind ausgewählt aus der Gruppe bestehend aus folgenden Unterformeln: 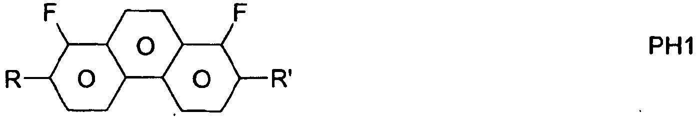 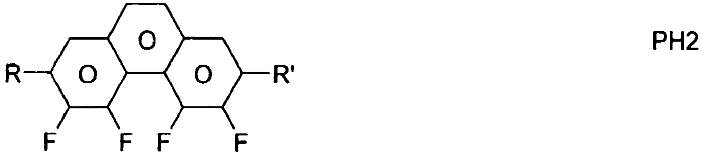 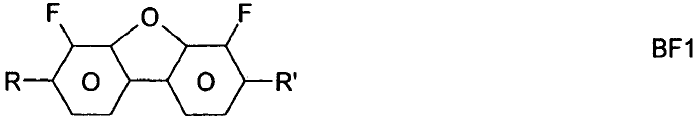 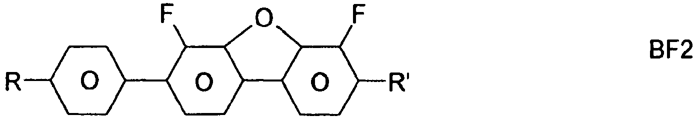 worin R und R' jeweils unabhängig voneinander einen geradkettigen Alkyl- oder Alkoxyrest mit 1-7 C-Atomen bedeuten.
14) FK-Mischung, die keine Verbindungen, insbesondere keine mesogenen oder flüssigkristallinen Verbindungen, enthält, welche eine oder mehrere Alkenylgruppen aufweisen, oder welche eine oder mehrere Alkylgruppen aufweisen, worin eine oder mehrere CH₂-Gruppen durch CH=CH und ggf. zusätzlich durch andere Gruppen ersetzt sind.
15) FK-Mischung, enthaltend eine oder mehrere Verbindungen ausgewählt aus der Gruppe bestehend aus Formel CY worin a=1, Formel PY worin b=0, und Formel LY worin f=0, in einer Gesamtkonzentration von 1 bis 60%.
16) FK-Mischung, enthaltend eine oder mehrere Verbindungen ausgewählt aus der Gruppe bestehend aus Formel CY worin a=2, und Formel PY worin b=1, in einer Gesamtkonzentration von 1 bis 60%.
17) FK-Mischung, enthaltend eine oder mehrere Verbindungen ausgewählt aus der Gruppe bestehend aus Formel CY worin a=2 und R¹, R² eine Alkyl- oder Alkenylgruppe bedeuten, und Formel T, in einer Gesamtkonzentration von 1 bis 50%.
18) FK-Mischung, enthaltend eine oder mehrere Verbindungen ausgewählt aus der Gruppe bestehend aus Formel ZK1, ZK2, ZK5, ZK6, DK1, DK2, DK4, DK5, B1 und T1, in einer Gesamtkonzentration von 1 bis 60%.
19) FK-Mischung, enthaltend eine oder mehrere Verbindungen der Formel ZK1 und/oder ZK2 in einer Gesamtkonzentration von 1 bis 40%.
20) FK-Mischung, enthaltend eine oder mehrere Verbindungen ausgewählt aus der Gruppe bestehend aus Formel ZK3, ZK4, B2 und B3, in einer Gesamtkonzentration von 1 bis 70%.
21) FK-Mischung, enthaltend eine oder mehrere Verbindungen der Formel FI in einer Gesamtkonzentration von 1 bis 25%.
22) FK-Medium, worin die Konzentration der polymerisierbaren Komponente bzw. Komponente A) ≤ 5%, vorzugsweise ≤ 1%, besonders bevorzugt ≤ 0.5%, und vorzugsweise ≥ 0.01%, besonders bevorzugt ≥ 0.1% beträgt.
23) FK-Medium, worin die Konzentration der flüssigkristallinen Komponente (FK-Mischung) bzw. Komponente B) ≥ 95%, besonders bevorzugt ≥ 99% beträgt.
24) FK-Medium, welches außer den polymerisierbaren Verbindungen der Komponente A keine Verbindungen enthält, die eine endständige Vinyloxygruppe (-O-CH=CH₂) aufweisen.
25) PSA-VA-Anzeige, worin der pretilt-Winkel vorzugsweise ≤ 85°, besonders bevorzugt ≤ 80° beträgt.

Die einzelnen Komponenten der bevorzugten Ausführungsformen 1)-21) der erfindungsgemäßen FK-Mischungen sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren. Entsprechende Verbindungen der Formel CY werden beispielsweise in EP-A-0 364 538 beschrieben. Entsprechende Verbindungen der Formel ZK werden beispielsweise in DE-A-26 36 684 und DE-A-33 21 373 beschrieben.

Die Kombination von FK-Mischungen der oben genannten bevorzugten Ausführungsformen 1)-21) mit den vor- und nachstehend genannten polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die schnelle Einstellung eines besonders niedrigen pretilt-Winkels in PSA-Anzeigen. Insbesondere zeigen die FK-Medien in PSA-Anzeigen im Vergleich zu den Medien aus dem Stand der Technik deutlich verringerte Schaltzeiten, insbesondere auch der Graustufenschaltzeiten.

Vorzugsweise weist die FK-Mischung einen nematischen Phasenbereich von mindestens 80 K, besonders bevorzugt von mindestens 100 K, und eine Rotationsviskosität von nicht mehr als 250, vorzugsweise nicht mehr als 200 mPa·s, bei 20°C auf.

In den erfindungsgemäßen Anzeigen des VA-Typs sind die Moleküle in der Schicht des FK-Mediums im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle mit den Moleküllängsachsen parallel zu den Elektrodenflächen statt.

Erfindungsgemäße FK-Mischungen zur Verwendung in Anzeigen des VA-Typs weisen eine negative dielektrische Anisotropie Δε auf, vorzugsweise von -0,5 bis -10, insbesondere von -2,5 bis -7,5 bei 20°C und 1 kHz.

Die Doppelbrechung Δn in erfindungsgemäßen FK-Mischungen zur Verwendung in Anzeigen des VA-Typs liegt vorzugsweise unter 0,16, besonders bevorzugt zwischen 0,06 und 0,14, insbesondere zwischen 0,07 und 0,12.

Die erfindungsgemäßen FK-Mischungen und FK-Medien können auch weitere, dem Fachmann bekannte und in der Literatur beschriebene Zusätze oder Additive enthalten, wie beispielsweise Polymerisationsinitiatoren, Inhibitoren, Stabilisatoren, oberflächenaktive Substanzen oder chirale Dotierstoffe. Diese können polymerisierbar oder unpolymerisierbar sein. Polymerisierbare Additive werden dementsprechend der polymerisierbaren Komponente oder Komponente A) zugerechnet. Unpolymerisierbare Additive werden dementsprechend der FK-Mischung (Hostmischung) bzw. der unpolymerisierbaren Komponente oder Komponente B) zugerechnet.

Die FK-Mischungen und FK-Medien können beispielsweise einen oder mehrere chirale Dotierstoffe enthalten, vorzusgweise ausgewählt aus der Gruppe bestehend aus Verbindungen der nachfolgenden Tabelle B.

FK-Medien ohne chirale opder optisch aktive Komponenten sind jedoch generell bevorzugt.

Ferner können den FK-Medien 0 bis 15%, vorzugsweise 0 bis 10%, eines oder mehrere Additive ausgewählt aus der Gruppe enthaltend pleochroitische Farbstoffe, Nanopartikel, Leitsalze, Komplexsalze und Substanzen zur Veränderung der dielektrischen Anisotropie, der Viskosität und/oder der Orientierung der nematischen Phasen zugesetzt werden. Geeignete und bevorzugte Leitsalze sind beispielsweise Ethyldimethyldodecyl-ammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258, 1973). Derartige Substanzen sind z.B. in DE-A-22 09 127, DE-A-22 40 864, DE-A-23 21 632, DE-A-23 38 281, DE-A-24 50 088, DE-A-26 37 430 und DE-A-28 53 728 beschrieben.

Zur Herstellung von PSA-Anzeigen werden die polymerisierbaren Verbindungen im FK-Medium zwischen den Substraten der FK-Anzeige unter Anlegen einer Spannung durch in-situ-Polymerisation polymerisiert oder vernetzt (falls eine Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5%, besonders bevorzugt 0,001 bis 1%. Die Polymerisation kann aber auch ohne Zusatz eines Initiators erfolgen. In einer weiteren bevorzugten Ausführungsform enthält das FK-Medium keinen Polymerisationsinitiator.

Die polymerisierbare Komponente A) oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente A), vorzugsweise 10 - 10000 ppm, besonders bevorzugt 50 - 500 ppm.

Die polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte.

Die erfindungsgemäßen FK-Medien zur Verwendung in PSA-Anzeigen enthalten vorzugsweise ≤ 5%, besonders bevorzugt ≤ 1%, ganz besonders bevorzugt ≤ 0,5%, und vorzugsweise ≥ 0,01 %, besonders bevorzugt ≥ 0, 1 %, an polymerisierbaren Verbindungen, insbesondere polymerisierbaren Verbindungen der vor- und nachstehend genannten Formeln.

Besonders bevorzugt sind FK-Medien enthaltend eine, zwei oder drei polymerisierbare Verbindungen.

Ferner bevorzugt sind achirale polymerisierbare Verbindungen, sowie FK-Medien worin die Verbindungen der Komponente A) und/oder B) ausschließlich aus der Gruppe bestehend aus achiralen Verbindungen ausgewählt sind.

Ferner bevorzugt sind FK-Medien, worin die polymerisierbare Komponente bzw. Komponente A) eine oder mehrere polymerisierbare Verbindungen mit einer polymerisierbaren Gruppe (monoreaktiv) und eine oder mehrere polymerisierbare Verbindungen mit zwei oder mehr, vorzugsweise zwei polymerisierbaren Gruppen (di- oder multireaktiv) enthält.

Ferner bevorzugt sind PSA-Anzeigen und FK-Medien, worin die polymerisierbare Komponente bzw. Komponente A) ausschließlich polymerisierbare Verbindungen mit zwei polymerisierbaren Gruppen (direaktiv) enthält.

Die polymerisierbaren Verbindungen können einzeln den FK-Medien zugesetzt werden, es können aber auch Mischungen enthaltend zwei oder mehr erfindungsgemäße polymerisierbare Verbindungen verwendet werden. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen können mesogen oder nicht-mesogen sein. Besonders bevorzugt sind polymerisierbare mesogene Verbindungen, auch als reaktive Mesogene (RMs) bezeichnet.

Geeignete und bevorzugte RMs für die Verwendung in erfindungsgemäßen FK-Medien und PSA-Anzeigen sind nachfolgend beschrieben.

In einer bevorzugten Ausführungsform der Erfindung sind die polymerisierbaren Verbindungen ausgewählt aus Formel I*

R^{a}-B¹-(Z^{b}-B²)ₘ-R^{b} I*

worin die einzelnen Reste folgende Bedeutung haben
- R^{a} und R^{b}: jeweils unabhängig voneinander P, P-Sp-, H, Halogen, SF₅, NO₂, eine Kohlenstoffgruppe oder Kohlenwasserstoffgruppe, wobei mindestens einer der Reste R^{a} und R^{b} eine Gruppe P oder P-Sp- bedeutet oder enthält, und wobei, falls B¹ und/oder B² ein gesättigtes C-Atom enthalten, R^{a} und/oder R^{b} auch einen mit diesem gesättigten C-Atom spiro-verknüpften Rest bedeuten können,
- P: bei jedem Auftreten gleich oder verschieden eine polymerisierbare Gruppe,
- Sp: bei jedem Auftreten gleich oder verschieden eine Abstandsgruppe oder eine Einfachbindung,
- B¹ und B²: jeweils unabhängig voneinander eine aromatische, heteroaromatische, alicyclische oder heterocyclische Gruppe, vorzugsweise mit 4 bis 25 Ringatomen, welche auch anellierte Ringe enthalten kann, und welche auch durch L ein- oder mehrfach substituiert sein kann,
- L: P-Sp-, H, OH, CH₂OH, Halogen, SF₅, NO₂, eine Kohlenstoffgruppe oder Kohlenwasserstoffgruppe,
- Z^{b}: bei jedem Auftreten gleich oder verschieden -O-, -S-, -CO-, - CO-O-, -OCO-, -O-CO-O-, -OCH₂-, -CH₂O- -SCH₂-, -CH₂S-, -CF₂O-, -OCF₂-, -CF₂S-, -SCF₂-, -(CH₂)ₙ₁-, -CF₂CH₂-,-CH₂CF₂-, -(CF₂)ₙ₁-, -CH=CH-, -CF=CF-, -C≡C-, -CH=CH-COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- m: 0, 1, 2, 3 oder 4,
- n1: 1, 2, 3 oder 4.

Besonders bevorzugte Verbindungen der Formel I* sind solche, worin
- R^{a} und R^{b}: jeweils unabhängig voneinander P, P-Sp-, H, F, Cl, Br, I, - CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch - C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, CI, Br, I, CN, P oder P-Sp- ersetzt sein können, wobei mindestens einer der Reste R^{a} und R^{b} eine Gruppe P oder P-Sp- bedeutet oder enthält, wobei, falls B¹ und/oder B² ein gesättigtes C-Atom enthalten, R^{a} und/oder R^{b} auch einen mit diesem gesättigten C-Atom spiro-verknüpften Rest bedeuten können,
- B¹ und B²: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂ , -NCO, -NCS, - OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F, Cl, P oder P-Sp- ersetzt sein können,
- P und Sp: die oben angegebene Bedeutung,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, - CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Besonders bevorzugte Verbindungen der Formel I* sind aus folgenden Unterformeln ausgewählt 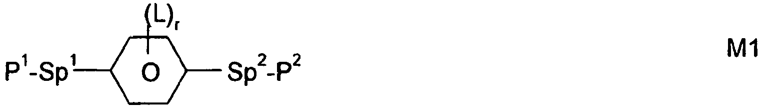 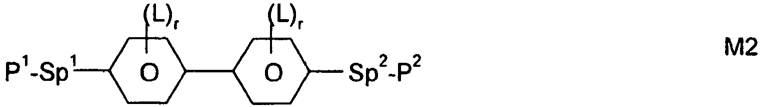 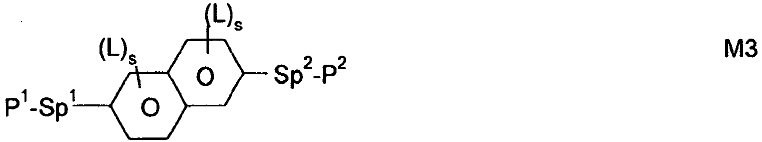 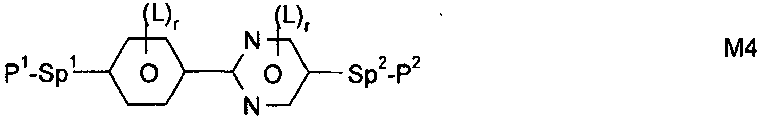 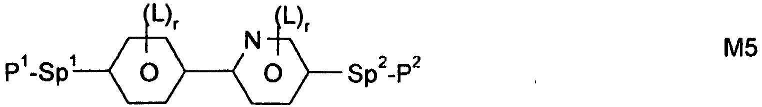 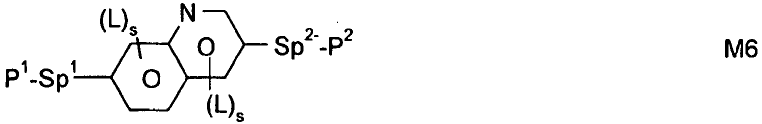 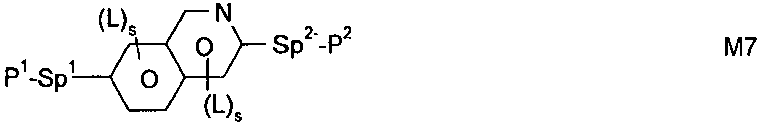 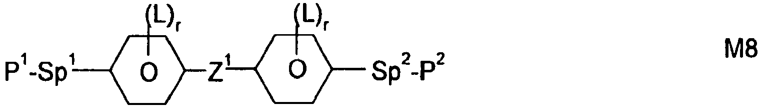 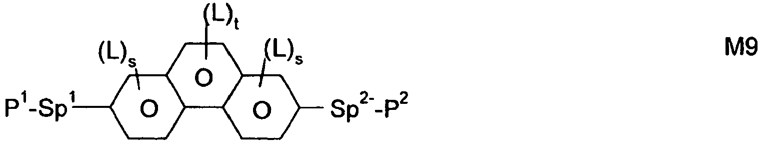 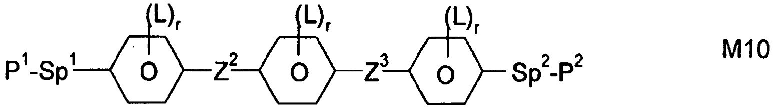 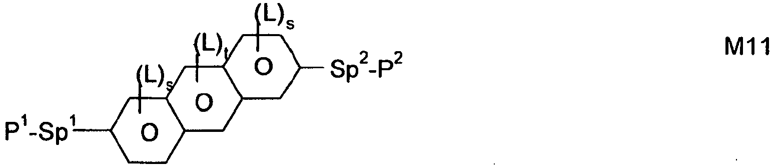 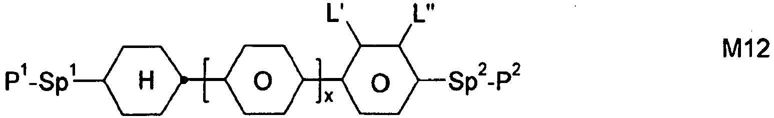 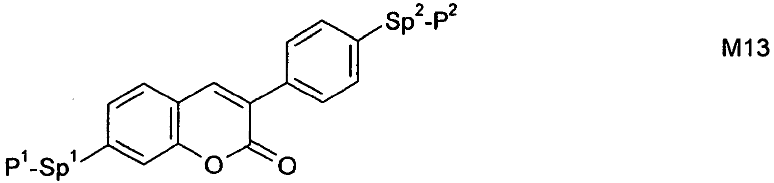 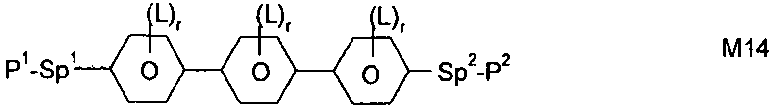 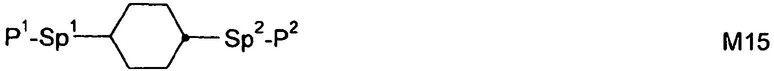 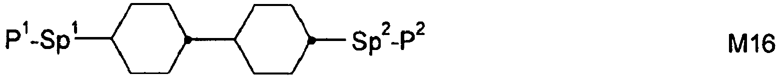 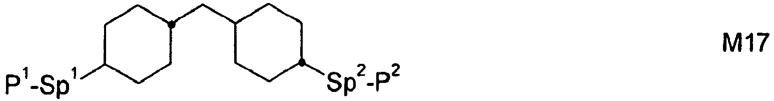 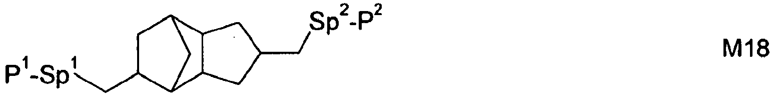 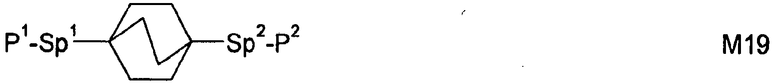 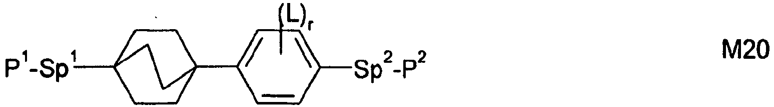 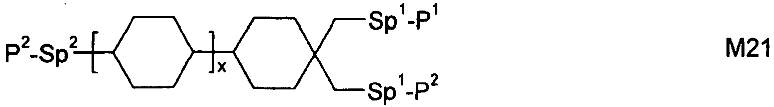 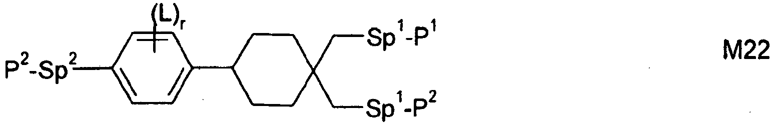 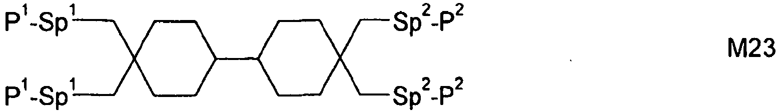 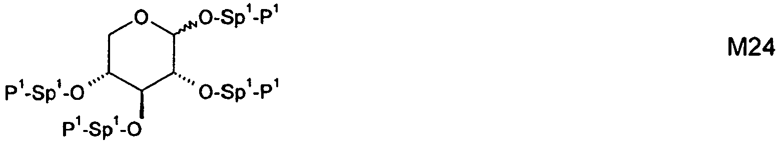 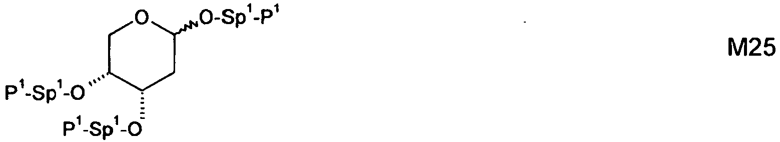 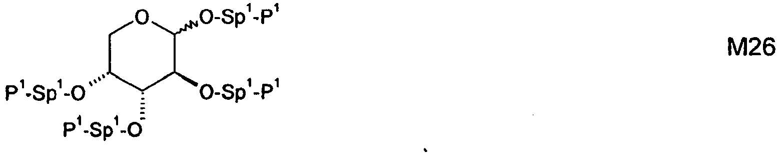 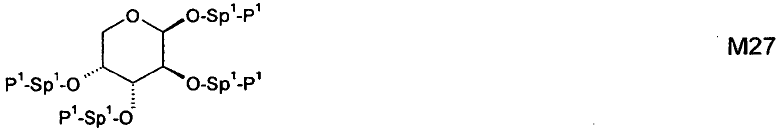 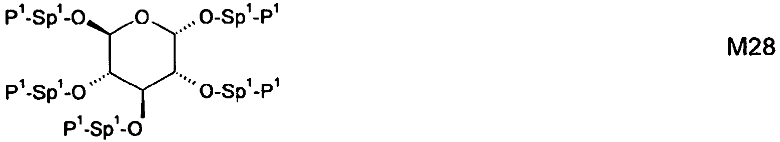 worin die einzelnen Reste folgende Bedeutung besitzen:
- P¹ und P²: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O- bedeuten, worin p1 eine ganze Zahl von 1 bis 12 ist, und wobei in den letztgenannten Gruppen die Verknüpfung zur benachbarten Ring über das O-Atom erfolgt,
wobei auch einer oder mehrere der Reste P¹-Sp¹- und P²-Sp²- R^{aa} bedeuten können, mit der Maßgabe dass mindestens einer der vorhandenen Reste P¹-Sp¹- und P²-Sp²- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, - OCH₂-, -CF₂O-, -OCF₂-, oder -(CH₂)ₙ-, wobei n 2, 3 oder 4 ist,
- L: bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

In einer bevorzugten Ausführungsform enthalten die FK-Medien eine oder mehrere, vorzugsweise ausschliesslich, RMs ausgewählt aus der Gruppe bestehend aus Verbindungen der Formel I* oder deren Unterformeln, welche genau einen Rest P-Sp- oder P¹-Sp¹ oder P²-Sp² enthalten, worin Sp bzw. Sp¹ bzw. Sp² eine Einfachbindung bedeutet und genau einen Rest P-Sp- oder P¹-Sp¹ oder P²-Sp² enthalten worin Sp bzw. Sp¹ bzw. Sp² von einer Einfachbindung verschieden ist ("Monospacerverbindungen").

In einer weiteren bevorzugten Ausführungsform der Erfindung sind die polymerisierbaren Verbindungen chirale oder optisch aktive Verbindungen ausgewählt aus Formel II* (chirale RMs):

(R*-(B¹-Z^{b})ₘ)ₖ-Q II*

worin B¹, Z^{b} und m bei jedem Auftreten gleich oder verschieden eine der in Formel I* angegebenen Bedeutungen besitzen,
- R*: bei jedem Auftreten gleich oder verschieden eine der für R^{a} in Formel I* angegebenen Bedeutungen besitzt, wobei R* chiral oder achiral sein kann,
- Q: eine k-valente chirale Gruppe bedeutet, welche optional ein- oder mehrfach mit L wie in Formel I* definiert substituiert ist,
- k: 1, 2, 3, 4, 5 oder 6 ist,
wobei die Verbindungen mindestens einen Rest R* oder L enthalten, der eine Gruppe P oder P-Sp- wie oben definiert bedeutet oder enthält.

Besonders bevorzugte Verbindungen der Formel II* enthalten eine monovalente Gruppe Q der Formel III* 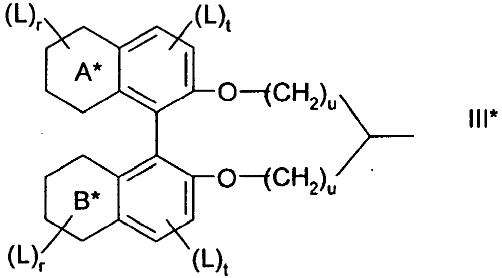 worin L und r bei jedem Auftreten gleich oder verschieden die oben angegebene Bedeutung besitzen,
- A* und B*: jeweils unabhängig voneinander anelliertes Benzol, Cyclohexan oder Cyclohexen,
- t: bei jedem Auftreten gleich oder verschieden 0, 1 oder 2, und
- u: bei jedem Auftreten gleich oder verschieden 0, 1 oder 2
bedeutet. Besonders bevorzugt sind Gruppen der Formel III*, worin u 1 bedeutet.

Weitere bevorzugte Verbindungen der Formel II* enthalten eine monovalente Gruppe Q oder eine oder mehrere Gruppen R* der Formel IV* 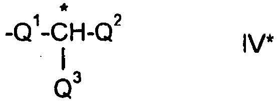 worin
- Q¹: Alkylen oder Alkylenoxy mit 1 bis 9 C-Atomen oder eine Einfachbindung,
- Q²: optional fluoriertes Alkyl oder Alkoxy mit 1 bis 10 C-Atomen, worin auch eine oder zwei nicht benachbarte CH₂-Gruppen durch -O-, -S-, -CH=CH-, -CO-, -OCO-, -COO-, -O-COO-, -S-CO-, -CO-S- oder - C≡C- so ersetzt sein können, dass O- und/oder S-Atome nicht direkt miteinander verknüpft sind,
- Q³: F, Cl, CN oder Alkyl oder Alkoxy wie für Q² definiert, aber von Q² verschieden
bedeuten.

Bevorzugte Gruppen der Formel IV* sind beispielsweise 2-butyl (=1-methylpropyl), 2-methylbutyl, 2-methylpentyl, 3-methylpentyl, 2-ethylhexyl, 2-propylpentyl, insbesondere 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy.

Weitere bevorzugte Verbindungen der Formel II* enthalten eine bivalente Gruppe Q der Formel V* 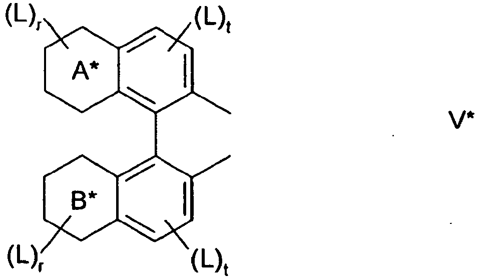 worin L, r, t, A* und B* die oben angegebene Bedeutung besitzen.

Weitere bevorzugte Verbindungen der Formel II* enthalten eine bivalente Gruppe Q ausgewählt aus folgenden Formeln 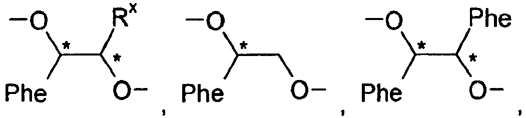 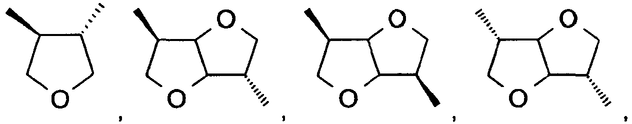 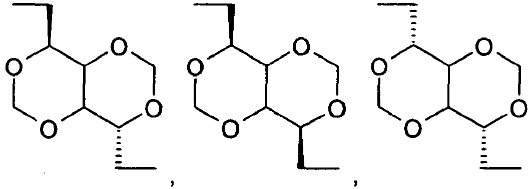 worin Phe Phenyl bedeutet, welches optional durch L ein- oder mehrfach substituiert ist, und R^{x} F oder optional fluoriertes Alkyl mit 1 bis 4 C-Atomen bedeutet.

Geeignete chirale RMs sind beispielsweise in GB 2 314 839 A, US 6,511,719, US 7,223,450, WO 02/34739 A1, US 7,041,345, US 7,060,331 oder US 7,318,950 beschrieben. Geeignete RMs mit Binaphthylgruppen sind beispielsweise in US 6,818,261, US 6,916,940, US 7,318,950 und US 7,223,450 beschrieben.

Die vor- und nachstehend gezeigten chiralen Strukturelemente, sowie polymerisierbare und polymerisierte Verbindungen enthaltend solche chiralen Strukturelemente, können in optisch aktiver Form, also als reine Enantiomere oder als beliebige Mischung beider Enantiomere, oder auch als Racemat eingesetzt werden. Bevorzugt ist die Verwendung von Racematen. Die Verwendung der Racemate besitzt gegenüber der Verwendung von reinen Enantiomeren einige Vorteile, wie beispielsweise ein deutlich geringerer Syntheseaufwand und geringere Materialkosten. Zudem kann durch Verwendung von Racematen eine unerwünschte Verdrillung der FK-Moleküle in der FK-Anzeige vermieden werden.

Besonders bevorzugte Verbindungen der Formel II* sind aus folgenden Unterformeln ausgewählt 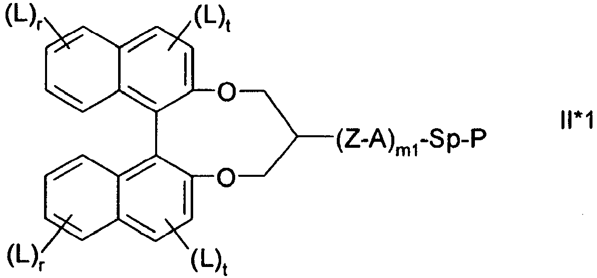 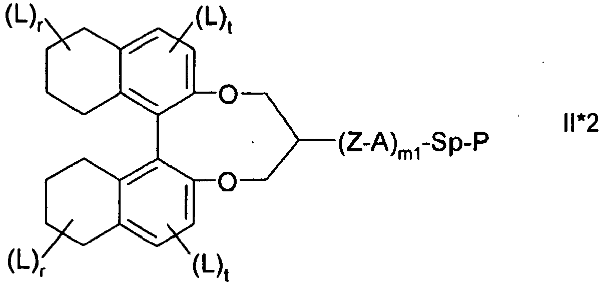 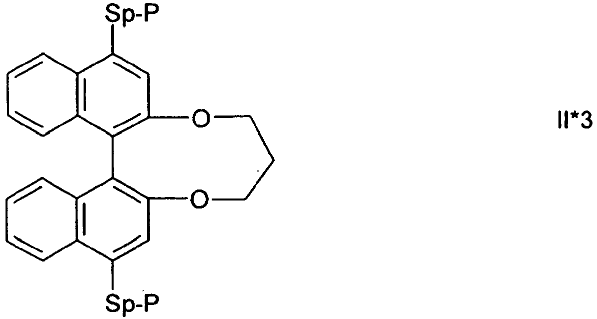 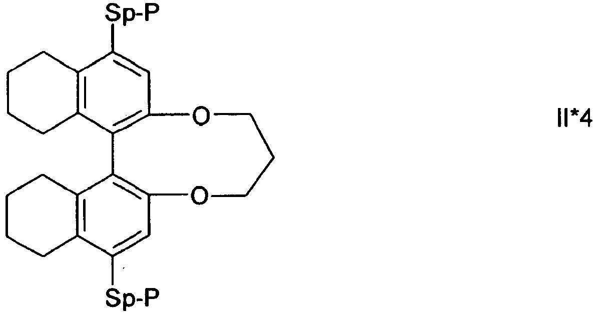 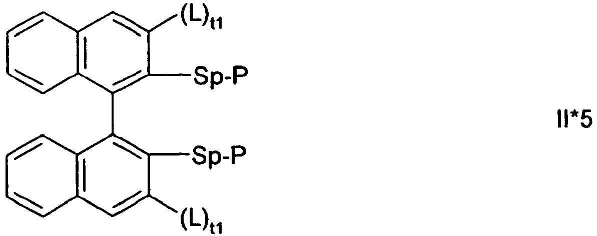 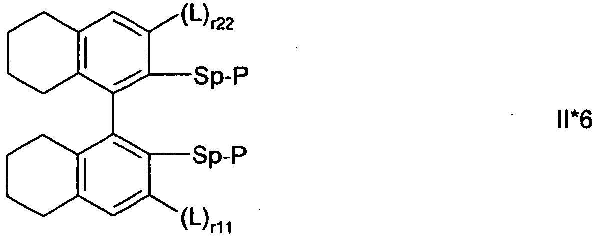 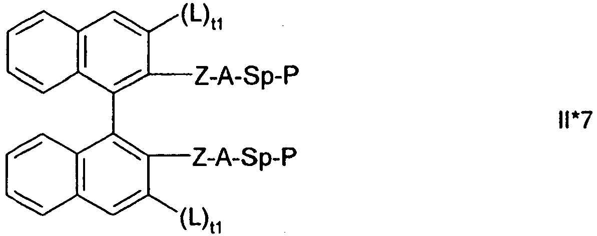 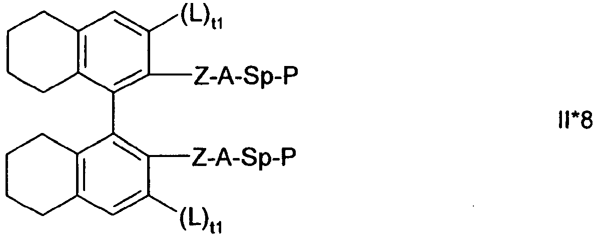 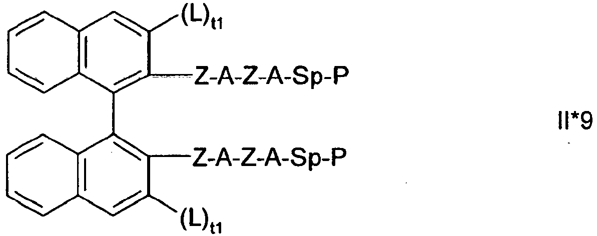 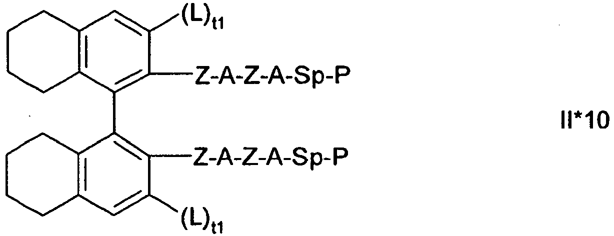 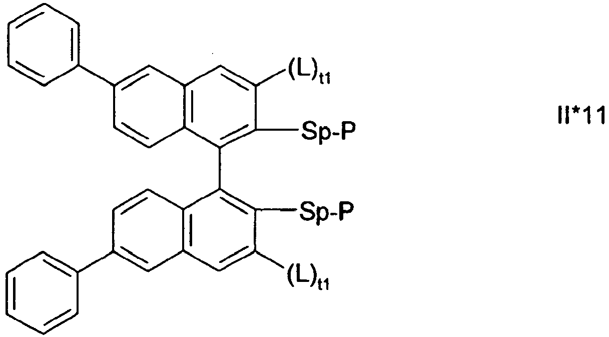 worin L, P, Sp, m, r und t die oben angegebene Bedeutung haben, Z bzw. A bei jedem Auftreten gleich oder verschieden eine der für Z¹ bzw. A¹ angegebenen Bedeutungen haben, und t1 bei jedem Auftreten gleich oder verschieden 0 oder 1 bedeutet.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂-C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch-C(R^{x})=C(R^{x})-, -C≡C-, -N(R^{x})-, -O-, -S-, -CO-, -CO-O-, -O-CO-, -O-CO-O-so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Aminogruppen sind beispielsweise Dimethylamino, Methylamino, Methylphenylamino, Phenylamino, etc.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1,1':3',1"]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, vor- und nachstehend auch als "L" bezeichnet, sind beispielsweise F, Cl, Br, I, -CN, -NO₂, -NCO, -NCS, -OCN, -SCN,-C(=O)N(R^{x})₂, -C(=O)Y¹, -C(=O)R^{x}, -N(R^{x})₂, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 Atomen, worin ein oder mehrere H-Atome gegebenenfalls durch F oder Cl ersetzt sein können.

"Substituiertes Silyl oder Aryl" bedeutet vorzugsweise durch Halogen, -CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 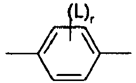 ist vorzugsweise 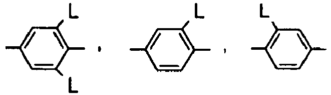 oder 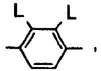 worin L eine der oben angegebenen Bedeutungen hat.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P sind ausgewählt aus CH₂=CW¹-COO-, CH₂=CW¹- 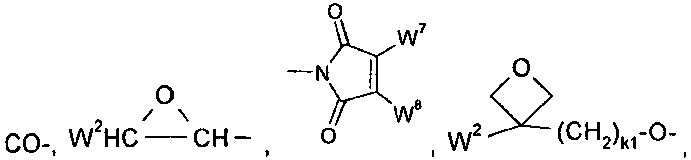 CH₂=CW²- (O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶, jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einen oder mehreren, von P-Sp- verschiedenen, Resten L wie oben definiert substiuiert ist, k₁, k₂ und k₃ jeweils unabhängig voneinander 0 oder 1 bedeuten, k₃ vorzugsweise 1 bedeutet.

Besonders bevorzugte Gruppen P sind CH₂=CW¹-COO-, insbesondere CH₂=CH-COO-, CH₂=C(CH₃)-COO- und CH₂=CF-COO-, ferner CH₂=CH-O-, (CH₂=CH)₂CH-OCO-, (CH₂=CH)₂CH-O-, 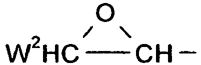 und

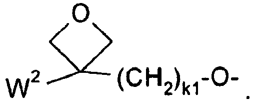

Ganz besonders bevorzugte Gruppen P sind Vinyloxy, Acrylat, Methacrylat, Fluoracrylat, Chloracrylat, Oxetan und Epoxy, insbesondere Acrylat und Methacrylat.

Bevorzugte Abstandsgruppen Sp sind ausgewählt aus der Formel Sp'-X', so dass der Rest P-Sp- der Formel P-Sp'-X'- entspricht, wobei
- Sp': Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-,-NH-, -NR⁰-, -SiR⁰⁰R⁰⁰⁰-, -CO-, -COO-, -OCO-, -OCO-O-, -S-CO-,-CO-S-, -NR⁰⁰-CO-O-, -O-CO-NR⁰⁰-, -NR⁰⁰-CO-NR⁰⁰-, -CH=CH- oder -C≡C- ersetzt sein können, dass O- und/oder S-Atome nicht direkt miteinander verknüpft sind,
- X': -O-, -S-, -CO-, -COO-, -OCO-, -O-COO-, -CO-NR⁰⁰-, -NR⁰⁰-CO-,-NR⁰⁰-CO-NR⁰⁰-, -OCH₂-, -CH₂O-, -SCH₂-, -CH₂S-, -CF₂O-, -OCF₂-,-CF₂S-, -SCF₂-, -CF₂CH₂-, -CH₂CF₂-, -CF₂CF₂-, -CH=N-, -N=CH-,-N=N-, -CH=CR⁰-, -CY²=CY³-, -C≡C-, -CH=CH-COO-, -OCO-CH=CH-oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.

X' ist vorzugsweise -O-, -S -CO-, -COO-, -OCO-, -O-COO-, -CO-NR⁰-,-NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)p₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -X'-Sp'- sind -(CH₂)ₚ₁-, -O-(CH₂)p₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

In einer weiteren bevorzugten Ausführungsform der Erfindung bedeutet P-Sp- einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste P-Sp- ausgewählt aus folgenden Formeln

-X-alkyl-CHP¹-CH₂-CH₂P² I*a

-X-alkyl-C(CH₂P¹)(CH₂P²)-CH₂P³ I*b

-X-alkyl-CHP¹CHP²-CH₂P³ I*c

-X-alkyl-C(CH2P¹)(CH₂P²)-Cₐₐ.H₂ₐₐ₊₁ I*d

-X-alkyl-CHP¹-CH₂P² I*e

-X-alkyl-CHP¹P² I*f

-X-alkyl-CP¹P²-CₐₐH₂ₐₐ₊₁ I*g

-X-alkyl-C(CH₂P¹)(CH₂P²)-CH₂OCH₂-C(CH₂P³)(CH₂P⁴)CH₂P⁵ I*h

-X-alkyl-CH((CH₂)ₐₐP¹)((CH₂)_{bb}P²) I*i

-X-alkyl-CHP¹CHP²-CₐₐH₂ₐₐ₊₁ I*k

-X'-alkyl-C(CH₃)(CH₂P¹)(CH₂P²) I*m

worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-,-CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
- aa und bb: jeweils unabhängig voneinander 0, 1, 2, 3, 4, 5 oder 6 bedeuten,
- X: eine der für X' angegebenen Bedeutungen besitzt, und
- P¹⁻⁵: jeweils unabhängig voneinander eine der für P angegebenen Bedeutungen besitzen.

Ferner bevorzugt sind Verbindungen der Formel I* und deren Unterformeln, worin B¹ und/oder B² einen zumindest teilweise gesättigten Rest bedeuten, vorzugsweise Cyclohexylen, worin R^{a} und/oder R^{b} P- oder P-Sp bedeuten und mit einem sp³-hybridisierten C-Atom dieses Restes B¹ oder B² verknüpft sind, und worin dieses sp³-hybridisierte C-Atom als weiteren Substituenten einen Rest P (bzw. P^{1/2}) oder P-Sp- (bzw. P¹-Sp¹- oder P²-Sp²-) aufweist, der vorzugsweise dieselbe Bedeutung wie der mit demselben sp³-C-Atom verknüpfte Rest R^{a} bzw. R^{b} besitzt. Besonders bevorzugte Verbindungen enthalten ein Strukturelement der Formel -C^{sP}((CH₂)ₐₐP¹)((CH₂)_{bb}P²) I*n worin C^{sp3} das sp³-hybridisierte C-Atom in dem Rest B¹ oder B² bedeutet und P¹, P², aa, und bb die oben angegebene Bedeutung besitzen.

Die polymerisierbaren Verbindungen und RMs können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Weitere Syntheseverfahren finden sich in den vor- und nachstehend zitierten Dokumenten. Im einfachsten Fall erfolgt die Synthese solcher RMs zum Beispiel durch Veresterung oder Veretherung von 2,6-Dihydroxynaphthalin oder 4,4'-Dihydroxybiphenyl mit entsprechenden Säuren, Säurederivaten, oder halogenierten Verbindungen enthaltend eine Gruppe P, wie zum Beispiel (Meth)acrylsäurechlorid oder (Meth)acrylsäure, in Gegenwart von einem wasserentziehenden Reagens wie zum Beispiel DCC (Dicyclohexylcarbodiimid).

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Es versteht sich für den Fachmann von selbst, daß die erfindungsgemäßen FK-Medien auch Verbindungen enthalten können, worin beispielsweise H, N, O, Cl, F durch die entsprechenden Isotope ersetzt sind.

Der Aufbau der erfindungsgemäßen FK-Anzeigen entspricht der für PSA-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Farbfilter-Seite unstrukturiert ist und lediglich die Elektrode auf der TFT-Seite Schlitze aufweist. Besonders geeignete und bevorzugte Elektrodenstrukturen für PS-VA-Anzeigen sind beispielsweise in US 2006/0066793 A1 beschrieben.

Die erfindungsgemäßen FK-Mischungen und FK-Medien eignen sich prinzipiell für jede Art von PS- oder PSA-Anzeige, insbesondere solche beruhend auf FK-Medien mit negativer dielektrischer Anisotropie, besonders bevorzugt für PSA-VA-, PSA-IPS- oder PS-FFS-Anzeigen. Der Fachmann kann jedoch, ohne erfinderisches Zutun, geeignete erfindungsgemäße FK-Mischungen und FK-Medien auch in anderen Anzeigen des PS- oder PSA-Typs einsetzen, beispielsweise in PS-TN- oder PS-OCB-Anzeigen, die sich von den oben genannten Anzeigen beispielsweise durch ihren prinzipiellen Aufbau oder durch die Art, Anordnung oder Struktur der einzelnen verwendeten Komponenten, wie beispielsweise der Substrate, Orientierungsschichten, Elektroden, Ansteuerelemente, Hintergrundbeleuchtung, Polarisatoren, Farbfilter, ggf. vorhandenen Kompensationsfolien etc., unterscheiden.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

Folgende Abkürzungen werden verwendet:
(n, m, z: jeweils unabhängig voneinander 1, 2, 3, 4, 5 oder 6)

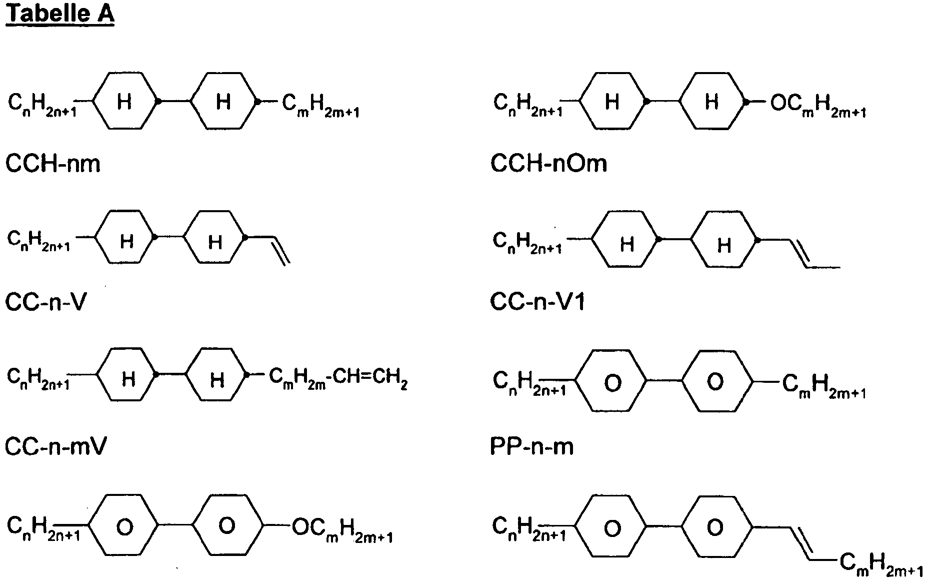

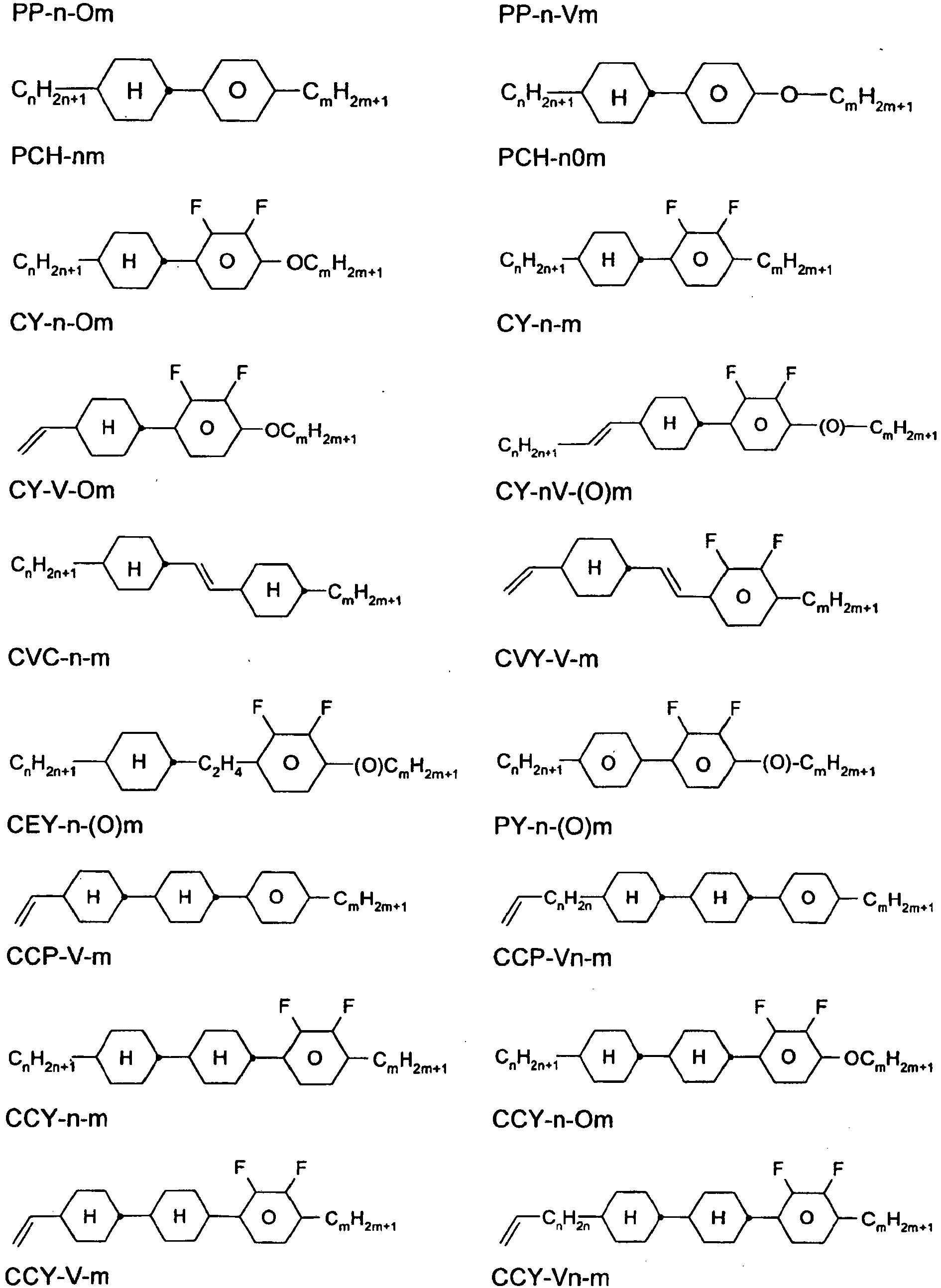

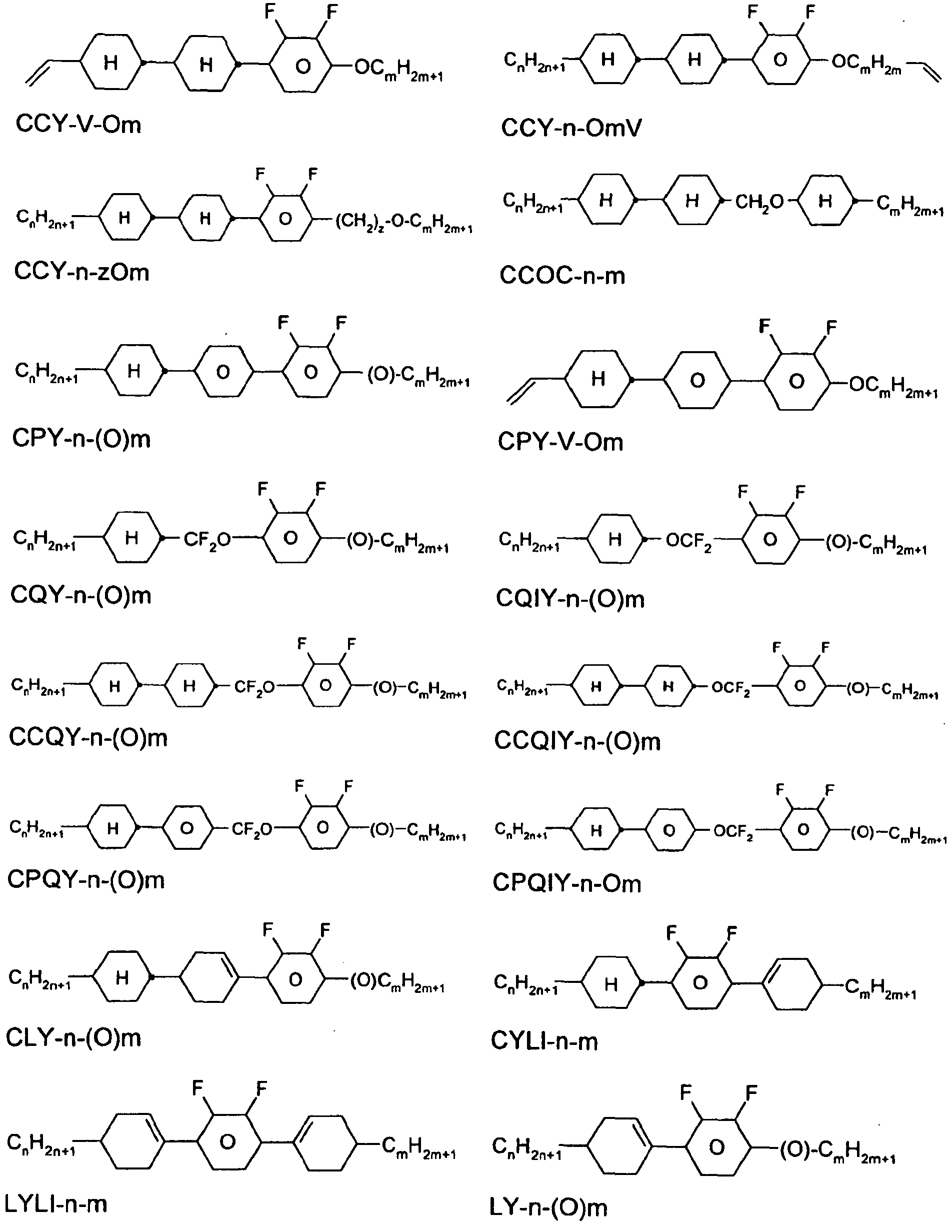

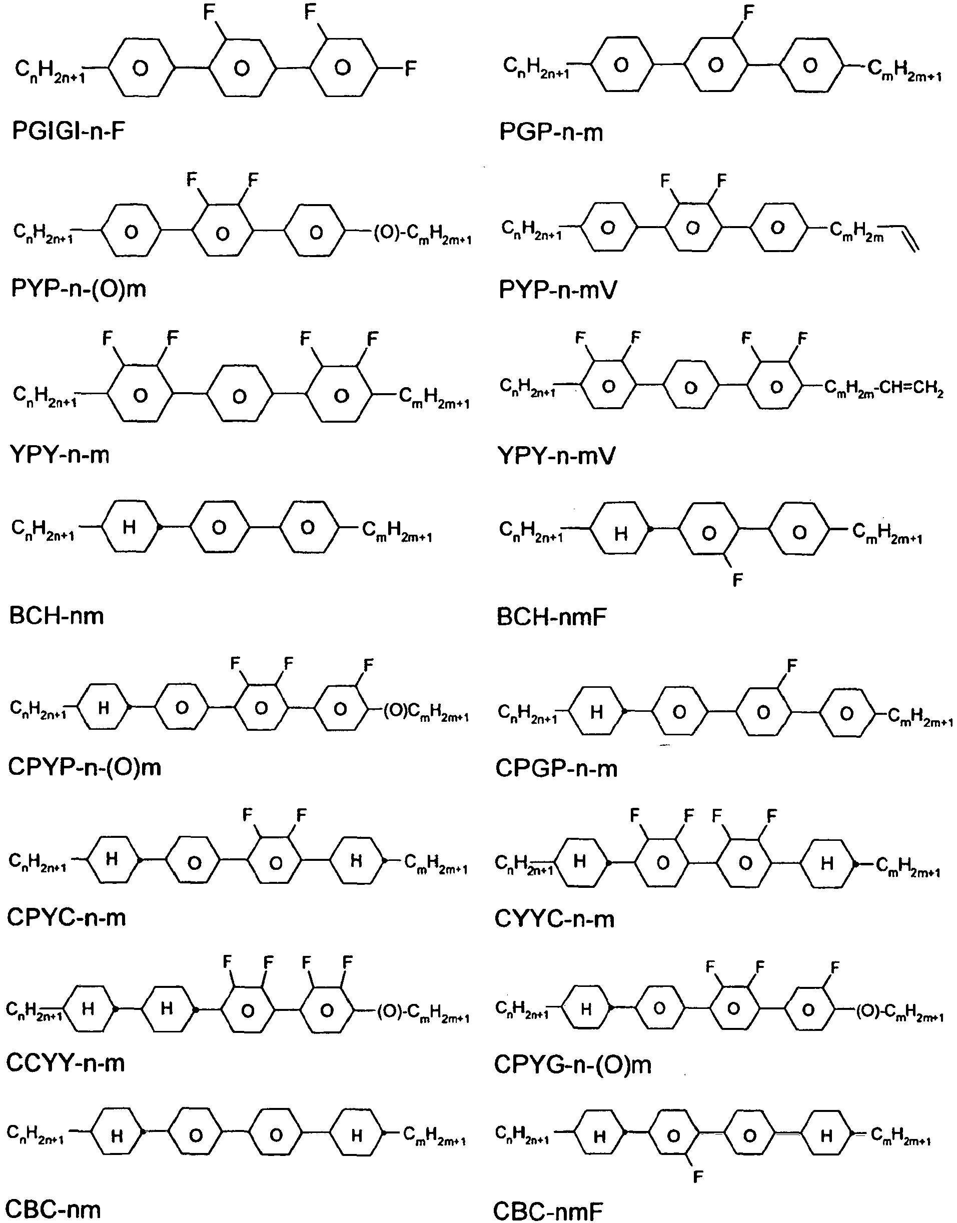

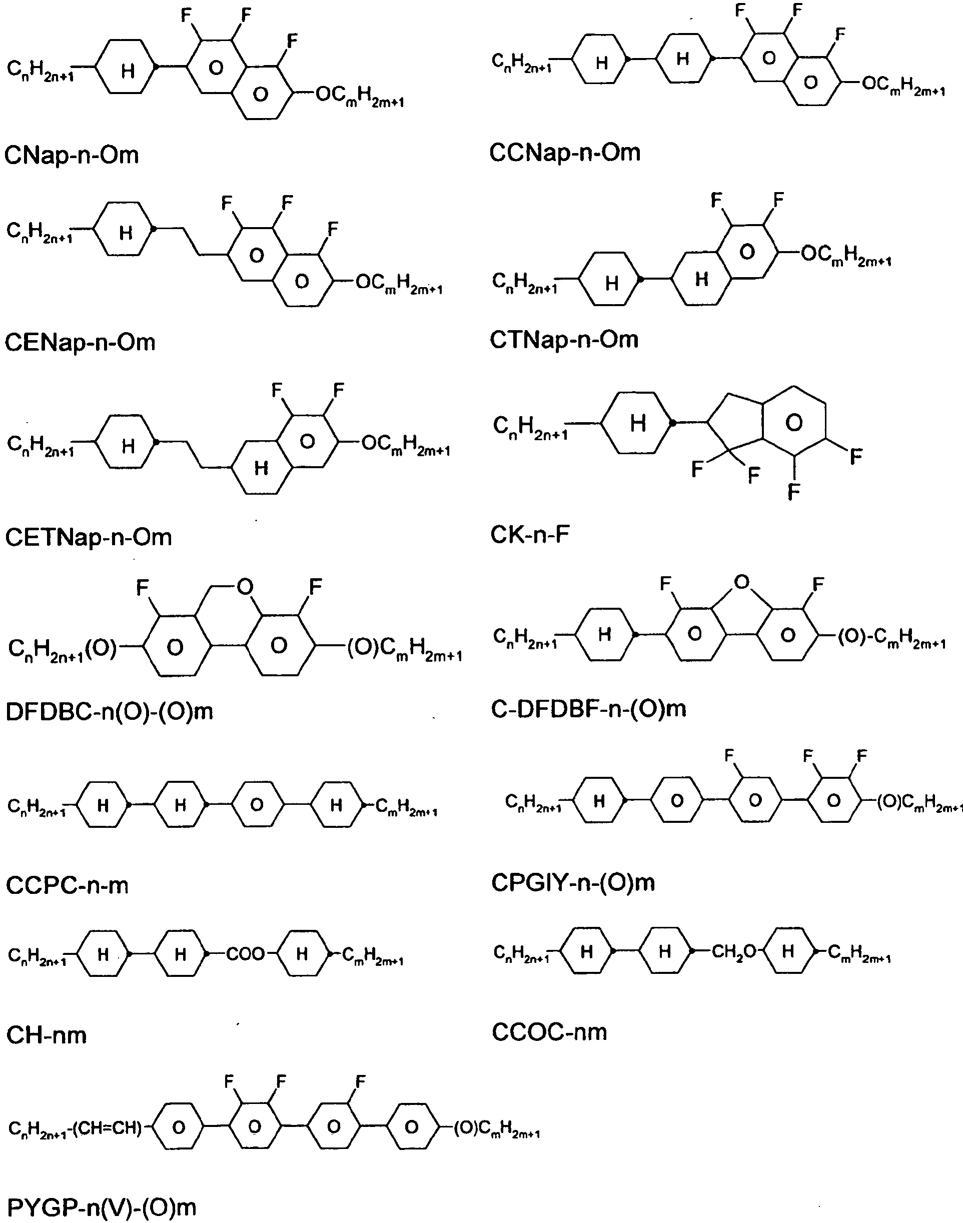

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabelle A.

**Tabelle B**

| In der Tabelle B werden mögliche chirale Dotierstoffe angegeben, die den erfindungsgemäßen FK-Medien zugesetzt werden können. | |
|---|---|
| 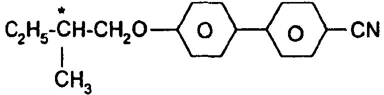 | 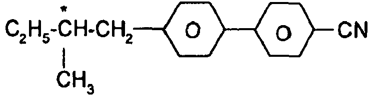 |
| **C15** | **CB 15** |
| 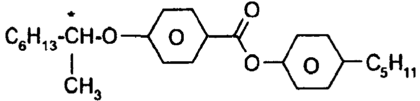 | 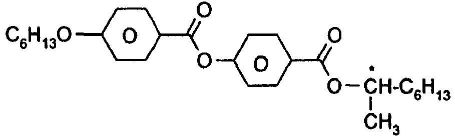 |
| **CM 21** | **R/S-811** |
| 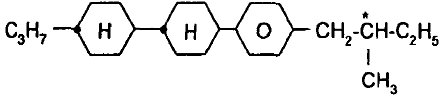 | 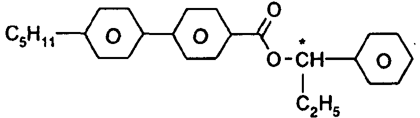 |
| **CM 44** | **CM 45** |
| 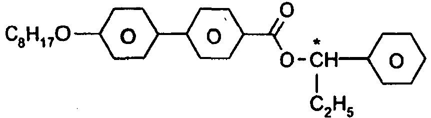 | 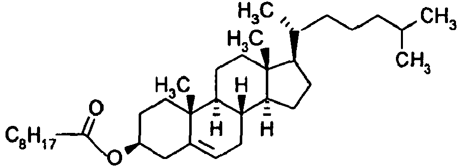 |
| **CM 47** | **CN** |
| 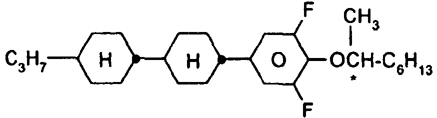 | 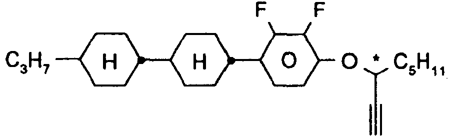 |
| **R/S-2011** | **R/S-3011** |
| 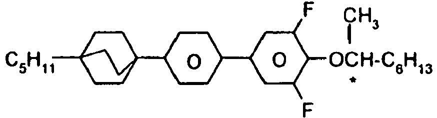 | 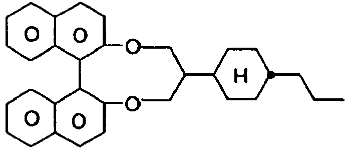 |
| **R/S-4011** | **R/S-5011** |
| 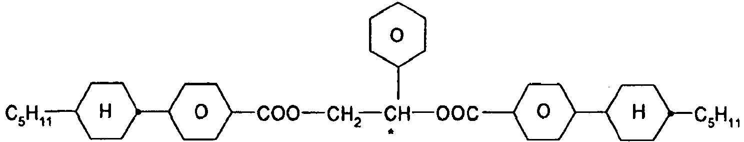 | |
| **R/S-1011** | |

Vorzugsweise enthalten die FK-Medien 0 bis 10%, insbesondere 0,01 bis 5% und besonders bevorzugt 0,1 bis 3% an Dotierstoffen. Vorzugsweise enthalten die FK-Medien einen oder mehrere Dotierstoffe ausgewählt aus der Guppe bestehend aus Verbindungen der Tabelle B.

**Tabelle C**

| In der Tabelle C werden mögliche Stabilisatoren angegeben, die den erfindungsgemäßen FK-Medien zugesetzt werden können. (n bedeutet hier eine ganze Zahl von 1 bis 12) | |
|---|---|
| 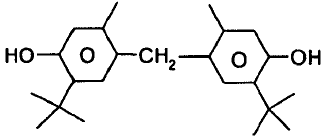 | 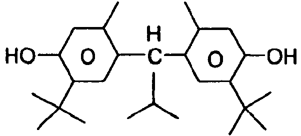 |
| 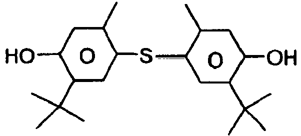 | 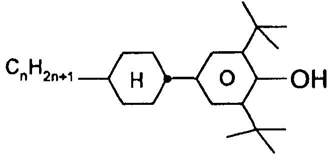 |
| 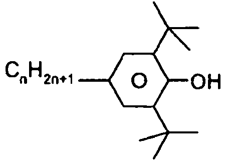 | 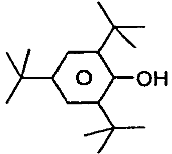 |
| 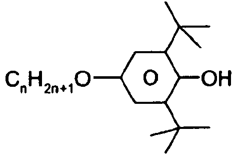 | 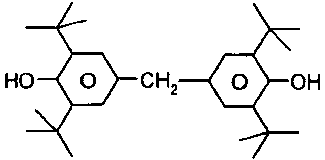 |
| 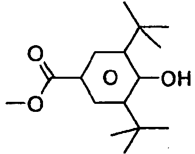 | 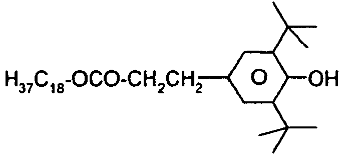 |
| 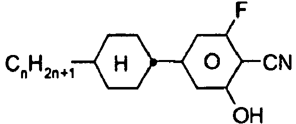 | 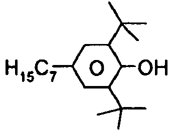 |
| 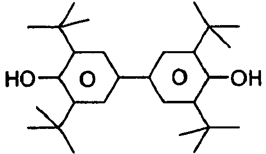 | 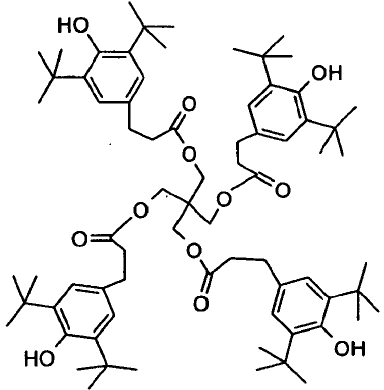 |
| 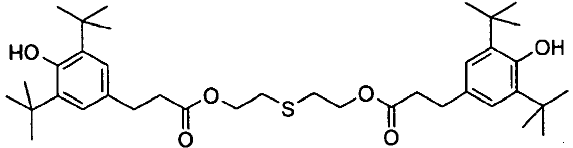 | |
| 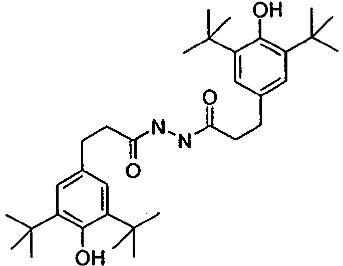 | 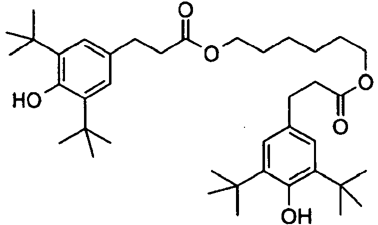 |
| 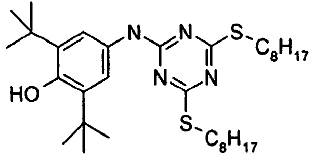 | 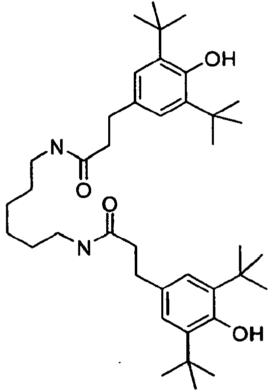 |
| 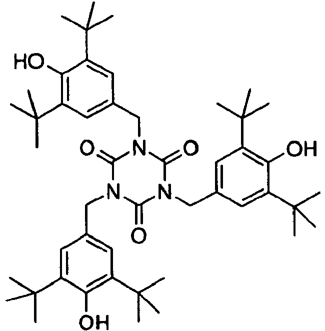 | 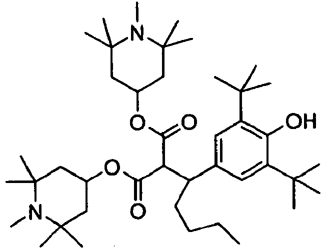 |
| 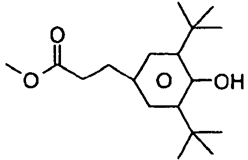 | 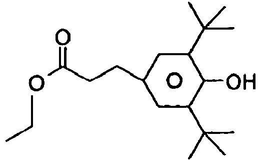 |
| 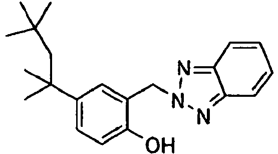 | 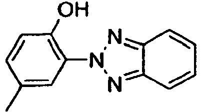 |
| 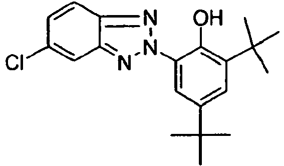 | 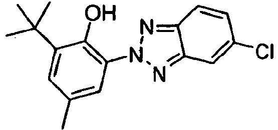 |
| 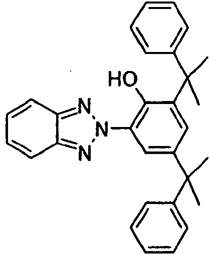 | 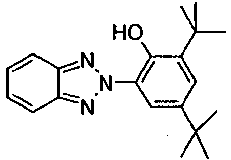 |
| 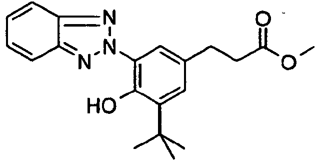 | 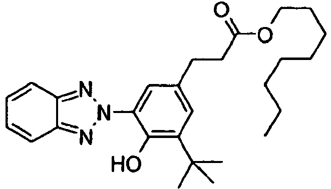 |
| 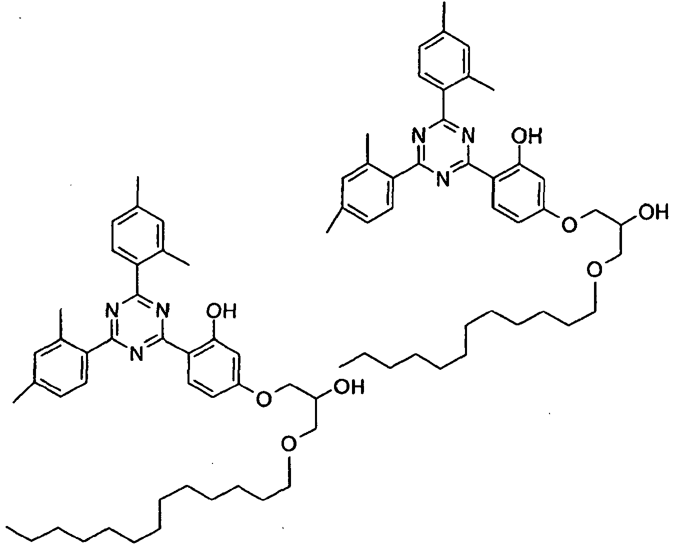 | |
| 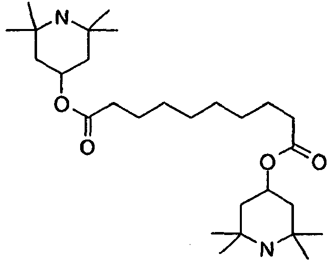 | 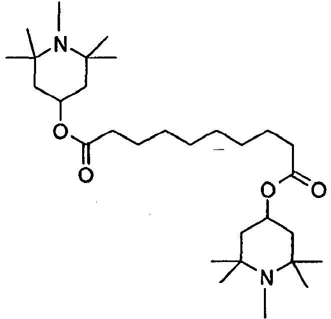 |

Vorzugsweise enthalten die FK-Medien 0 bis 10%, insbesondere 1 ppm bis 5% und besonders bevorzugt 1 ppm bis 1 % an Stabilisatoren. Vorzugsweise enthalten die FK-Medien einen oder mehrere Stabilisatoren ausgewählt aus der Gruppe bestehend aus Verbindungen der Tabelle C.

**Tabelle D**

| |
|---|
| In der Tabelle D sind Beispielverbindungen zusammengestellt, die in den FK-Medien gemäß der vorliegenden Erfindung vorzugsweise als reaktive mesogene Verbindungen verwendet werden können. |
| 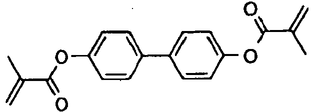 |
| **RM-1** |
| 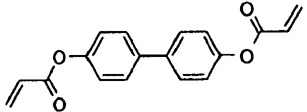 |
| **RM-2** |
| 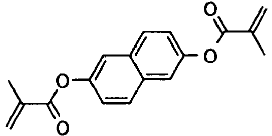 |
| **RM-3** |
| 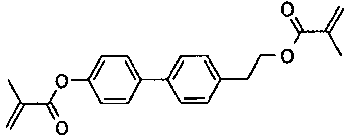 |
| **RM-4** |
| 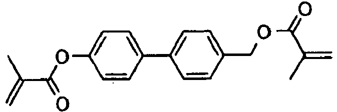 |
| **RM-5** |
| 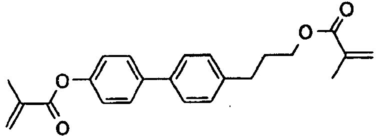 |
| **RM-6** |
| 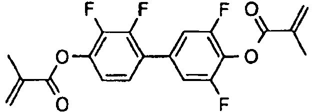 |
| **RM-7** |
| 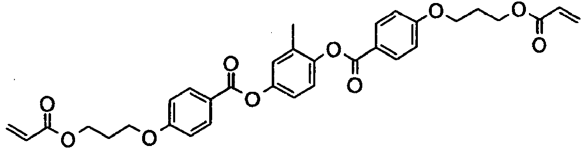 |
| **RM-8** |
| 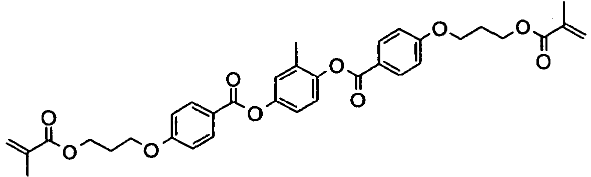 |
| **RM-9** |
| 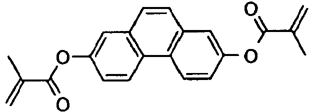 |
| **RM-10** |
| 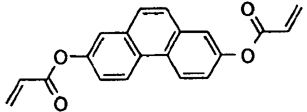 |
| **RM-11** |
| 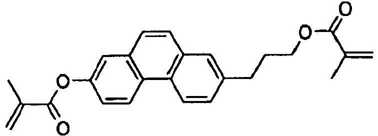 |
| **RM-12** |
| 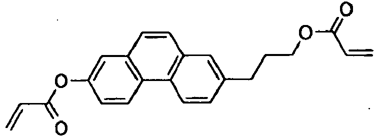 |
| **RM-13** |
| 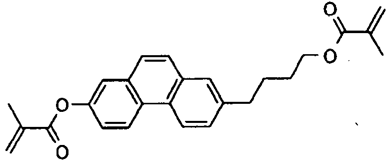 |
| **RM-14** |
| 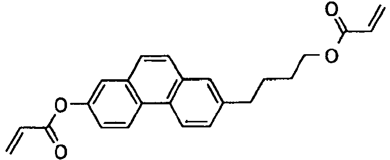 |
| **RM-15** |
| 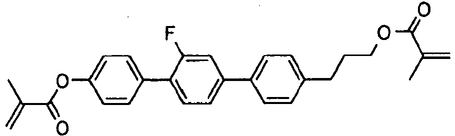 |
| **RM-16** |
| 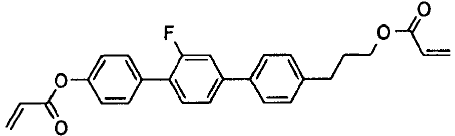 |
| **RM-17** |
| 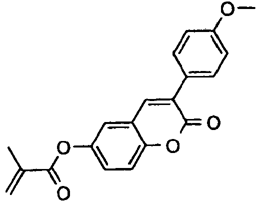 |
| **RM-18** |
| 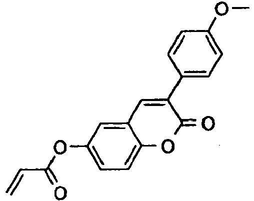 |
| **RM-19** |
| 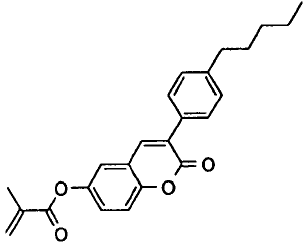 |
| **RM-20** |
| 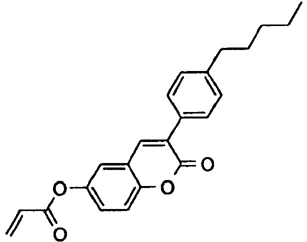 |
| **RM-21** |
| 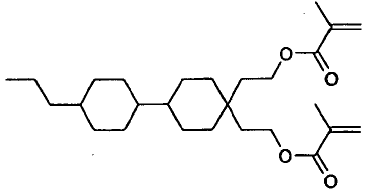 |
| **RM-22** |
| 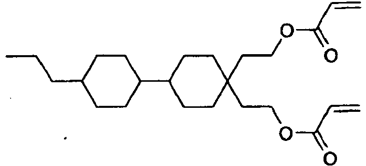 |
| **RM-23** |
| 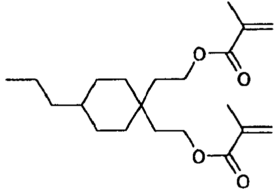 |
| **RM-24** |
| 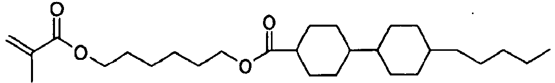 |
| **RM-25** |
| 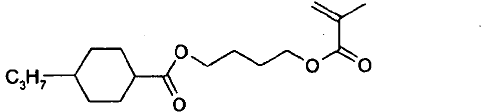 |
| **RM-26** |
| 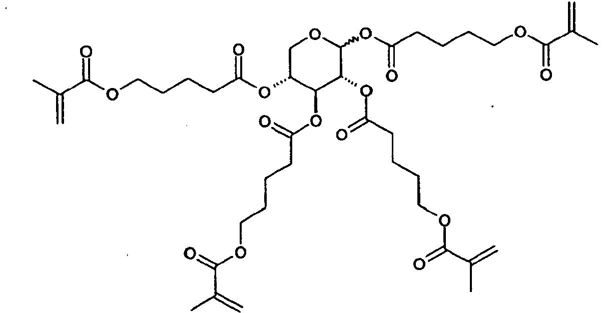 |
| **RM-27** |
| 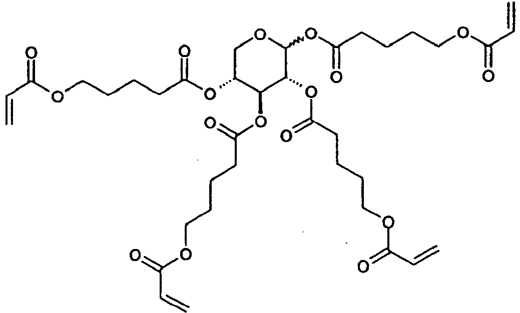 |
| **RM-28** |
| 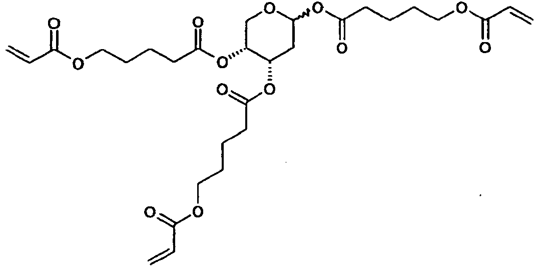 |
| **RM-29** |
| 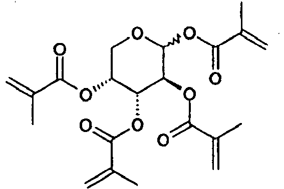 |
| **RM-30** |

In einer bevorzugten Ausführungsform der vorliegenden Erfindung enthalten die mesogenen Medien eine oder mehrere Verbindungen ausgewählt aus der Gruppe der Verbindungen der Tabelle D.

Außerdem werden folgende Abkürzungen und Symbole verwendet:
- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Suszeptibilität senkrecht zum Direktor bei 20°C und 1 kHz,
- ε_{∥}: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen und %-Werte (mit Ausnahme der Werte für HR, Kontrast und Transmission) in Gewichtsprozent angegeben und beziehen sich auf die jeweilige Gesamtmischung, enthaltend alle festen oder flüssigkristallinen Komponenten, ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10% relativen Kontrast (V₁₀) angegeben werden.

Die zur Messung der kapazitiven Schwellenspannung verwendete Anzeige besteht aus zwei planparallelen Glasträgerplatten im Abstand von 20 µm, welche auf den Innenseiten jeweils ein Elektrodenschicht sowie eine darüberliegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 µm, welche auf den Innenseiten jeweils ein Elektrodenschicht sowie eine darüberliegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht bei vorgegebener Zeit polymerisiert, wobei gleichzeitig eine Spannung an die Anzeige angelegt wird (üblicherweise 10V bis 30V Wechselstrom, 1 kHz). In den Beispielen wird, falls nicht anders angegeben, eine Quecksilberdampflampe mit 28 mW/cm² verwendet, die Intensität wird mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0.3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d≈4µm). Der HR-Wert wird nach 5min bei 100°C vor und nach 2h UV-Belastung (suntest) bei 1V, 60Hz, 64µs pulse bestimmt (Messgerät: Autronic-Melchers VHRM-105).

### Beispiel 1 - Vergleichsbeispiel

Die nematische FK-Mischung N1 wird wie folgt formuliert, enthaltend 4% einer Verbindung der Formel I (CPGP-4-3)

| | | | |
|---|---|---|---|
| CY-3-02 | 19,00 % | Kp. | + 78,0 |
| CY-5-O2 | 2,00 % | An | 0,0949 |
| CCY-3-O2 | 11,00 % | Δε | - 3,3 |
| CCY-3-O3 | 10,00 % | ε_{∥} | 3,5 |
| CCY-4-O2 | 10,00 % | K₃/K₁ | 1,07 |
| CPY-3-02 | 6,00 % | γ₁ | 131 |
| CCH-25 | 9,00 % | V₀ | 2,17 |
| CCH-34 | 9,00 % | | |
| BCH-32 | 6,00 % | | |
| PCH-32 | 14,00 % | | |
| CPGP-4-3 | 4,00 % | | |

### Beispiel 2

Die erfindungsgemäße nematische FK-Mischung N2 wird wie folgt formuliert, enthaltend 5% einer Verbindung der Formel (CPYP-3-2)

| | | | |
|---|---|---|---|
| CY-3-02 | 22,00 % | Kp. | + 80,0 |
| CY-5-O2 | 2,00 % | Δn | 0,0960 |
| CCY-3-O2 | 8,00 % | Δε | - 3,2 |
| CCY-4-O2 | 4,00 % | ε_{∥} | 3,5 |
| CPY-2-O2 | 6,00 % | K₃/K₁ | 1,05 |
| CPY-3-O2 | 10,00 % | γ₁ | 120 |
| CCH-23 | 22,00 % | V₀ | 2,26 |
| CCH-34 | 6,00 % | | |
| BCH-32 | 4,00 % | | |
| CCH-501 | 6,00 % | | |
| CCP-3-3 | 5,00 % | | |
| CPYP-3-2 | 5,00 % | | |

### Beispiel 3 Vergleichsbeispiel

Die nematische FK-Mischung N3 wird wie folgt formuliert, enthaltend 7% an Verbindungen der Formel I (CCOC-3-3, CCOC-4-3, CBC-33F)

| | | | |
|---|---|---|---|
| CY-3-O4 | 24,00 % | Kp. | + 76,1 |
| CCY-3-O2 | 6,00 % | Δn | 0,0945 |
| CCY-3-O3 | 3,00 % | Δε | - 2,8 |
| CCY-2-1 | 10,00 % | ε_{∥} | 3,5 |
| CCY-3-1 | 10,00 % | K₃/K₁ | 0,95 |
| PYP-2-3 | 10,50 % | γ₁ | 138 |
| PYP-2-4 | 3,00 % | V₀ | 2,25 |
| CCH-34 | 14,50 % | | |
| CCH-503 | 7,00 % | | |
| CCH-501 | 5,00 % | | |
| CCOC-3-3 | 2,00 % | | |
| CCOC-4-3 | 3,00 % | | |
| CBC-33F | 2,00 % | | |

### Beispiel 4-Vergleichsbeispiel

Die nematische FK-Mischung N4 wird wie folgt formuliert, enthaltend 4% an Verbindungen der Formel I (CCOC-3-3, CCOC-4-3)

| | | | |
|---|---|---|---|
| CY-3-02 | 20,00 % | Kp. | + 76,0 |
| CY-5-O2 | 9,00 % | Δn | 0,0956 |
| CCY-3-O3 | 9,00 % | Δε | - 3,2 |
| CCY-4-O2 | 5,00 % | ε_{∥} | 3,5 |
| CPY-3-O2 | 7,00 % | K₃/K₁ | 1,04 |
| PYP-2-3 | 3,00 % | γ₁ | 132 |
| PYP-2-4 | 5,00 % | V₀ | 2,24 |
| CCP-31 | 5,00 % | | |
| CCP-33 | 5,00 % | | |
| CCH-34 | 10,00 % | | |
| CCH-25 | 10,00 % | | |
| PCH-302 | 8,00 % | | |
| CCOC-3-3 | 2,00 % | | |
| CCOC-4-3 | 2,00 % | | |

### Vergleichsbeispiel 1

Die nematische FK-Mischung V1 wird wie folgt formuliert

| | | | |
|---|---|---|---|
| CY-3-O4 | 14,00 % | Kp. | + 70,0 |
| CY-5-O4 | 13,00 % | Δn | 0,0825 |
| CCY-3-O2 | 8,00 % | Δε | - 3,5 |
| CCY-5-O2 | 8,00 % | ε_{∥} | 3,5 |
| CCY-21 | 9,00 % | K₃/K₁ | 1,00 |
| CCY-31 | 9,00 % | γ₁ | 141 |
| CPY-2-O2 | 8,00 % | V₀ | 2,06 |
| CCH-501 | 9,00 % | | |
| CCH-35 | 14,00 % | | |
| PCH-53 | 8,00 % | | |

### Beispiel 5

Zu den FK-Mischungen N1-N4 sowie der Vergleichsmischung V1 werden jeweils 0.3% des RM1 (Biphenyl-4,4'-dimethacrylat) zugesetzt:

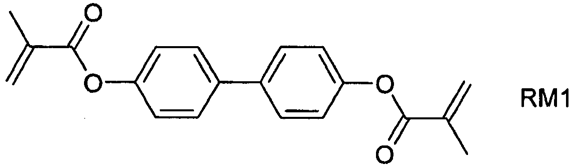

Die dadurch entstandenen FK-Medien werden jeweils in VA-e/o-Testzellen wie oben beschrieben gefüllt. Unter Anlegen einer Spannung von 24V (Wechselstrom) werden die Zellen für verschiedene Dauer mit UV-Licht (365nm) der Intensität 50mW/cm² bestrahlt, dadurch erfolgt Polymerisation des RMs.

Zur Bestimmung der Polymerisationsgeschwindigkeit wird der Restgehalt an unpolymerisiertem RM1 (in Gew.%) in den Testzellen nach verschiedenen Belichtungszeiten mit der HPLC-Methode gemessen. Dazu wird jede Mischung jeweils unter den angegebenen Bedingungen in der Testzelle polymerisiert. Danach wird die Mischung aus der Testzelle mit MEK (Methylethylketon) gespült und vermessen. Die Ergebnisse sind in Tabelle 1 zusammengefasst.

**Tabelle 1**

| **Gehalt RM [%]** | **Belichtungszeit [s]** | | | |
|---|---|---|---|---|
| **FK-Medium** | **0** | **120** | **240** | **360** |
| N1+RM1 | 0,3000 | 0,2165 | 0,1650 | 0,1130 |
| N2+RM1 | 0,3000 | 0,1810 | 0,1170 | 0,0850 |
| N3+RM1 | 0,3000 | 0,1900 | 0,1130 | 0,0820 |
| N4+RM1 | 0,3000 | 0,1655 | 0,1100 | 0,0775 |
| V1+RM1 | 0,3000 | 0,2590 | 0,2005 | 0,1635 |

Wie aus Tabelle 1 ersichtlich ist, ist im Falle der FK-Mischungen N1-N4 bereits nach kurzer Zeit nur noch wenig unpolymerisiertes RM1 in der Zelle vorhanden, während bei der Vergleichsmischung V1 nach der jeweils gleichen Belichtungszeit noch deutlich mehr unpolymerisiertes RM1 vorhanden ist. Daraus kann auf eine deutlich höhere Polymerisationsgeschwindigkeit des RM1 in den FK-Mischungen N1-N4 geschlossen werden.

So weist beispielsweise das FK-Medium N1+RM1 nach 6 Minuten Belichtungszeit 30% weniger RM-Restgehalt als das Vergleichsmedium V1+RM1 auf. Bei den FK-Medien N2+RM1, N3+RM1 und N4+RM1 konnte der RM-Restgehalt gegenüber dem Vergleichsmedium V1+RM1 sogar halbiert werden.

### Beispiel 6

Die in Beispiel 5 beschriebenen FK-Medien aus 0,3% RM1 in den FK-Mischungen N1-N4 bzw. V1 werden in VA-e/o-Testzellen wie oben beschrieben gefüllt. Unter Anlegen einer Spannung von 24V (Wechselstrom) werden die Zellen für verschiedene Dauer mit UV-Licht der Wellenlänge 365nm und der Intensität 50mW/cm² bestrahlt, dadurch erfolgt Polymerisation des RMs.

Für jede Testzelle wird der pretilt-Winkel wie oben angegeben bestimmt. Der für die verschiedenen Belichtungszeiten jeweils erzielte pretilt-Winkel ist in Tabelle 2 zusammengefasst.

**Tabelle 2**

| FK-Medium | Belichtungszeit [s] | Tilt [°] |
|---|---|---|
| N1 + RM1 | 0 | 89,1 |
| | 30 | 88,1 |
| | 60 | 82,3 |
| | 120 | 76,0 |
| | 240 | 71,5 |
| | 360 | 67,0 |
| N2 + RM1 | 0 | 88,9 |
| | 30 | 87,6 |
| | 60 | 81,8 |
| | 120 | 74,9 |
| | 240 | 69,9 |
| | 360 | 68,5 |
| N3 + RM1 | 0 | 89,3 |
| | 30 | 87,4 |
| | 60 | 80,1 |
| | 120 | 74,3 |
| | 240 | 71,0 |
| | 360 | 69,9 |
| N4 + RM1 | 0 | 89,0 |
| | 30 | 85,7 |
| | 60 | 81,3 |
| | 120 | 72,2 |
| | 240 | 71,8 |
| | 360 | 69,5 |
| V1 + RM1 | 0 | 89,5 |
| | 30 | 88,8 |
| | 60 | 87,4 |
| | 120 | 82,7 |
| | 240 | 75,6 |
| | 360 | 74,1 |

Wie aus Tabelle 2 ersichtlich ist, kann mit den FK-Medien enthaltend eine N1, N2, N3 oder N4 ein niedrigerer pretilt-Winkel erzielt werden als mit dem FK-Medium enthaltend die Vergleichsmischung V1. Tabelle 2 zeigt auch, dass mit den FK-Mischungen N1-N4 bereits nach deutlich kürzerer Belichtungszeit vergleichbare pretilt-Winkel erreicht werden als mit dem FK-Medium enthaltend Vergleichsmischung V1.

So zeigt beispielsweise das Vergleichsmedium V1+RM1 nach einer Belichtungszeit von 120s einen Tiltwinkel von 82,7° auf. Dagegen wird beim FK-Medium N1+RM1 eine ähnlicher Tiltwinkel von 82,3° bereits nach 60s erreicht, die Belichtungszeit konnte also gegenüber dem Vergleichsmedium halbiert werden.

Nach 360s Belichtungszeit wird beim Vergleichsmedium V1+RM1 ein Tiltwinkel von 74,1° erreicht. Dagegen werden vergleichbare Werte bei den FK-Medien N2+RM1, N3+RM1 und N4+RM1 bereits nach 120s, also einem Drittel der Zeit, erreicht.

## Patentansprüche

1. FK-Medium enthaltend
- eine polymerisierbare Komponente A) enthaltend eine oder mehrere polymerisierbare Verbindungen, sowie
- eine flüssigkristalline Komponente B) bestehend aus einer FK-Mischung mit negativer dielektrischer Anisotropie enthaltend 1 bis 25% einer oder mehrerer Verbindungen ausgewählt aus den Formeln I6-I13 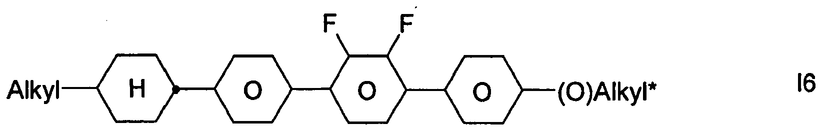 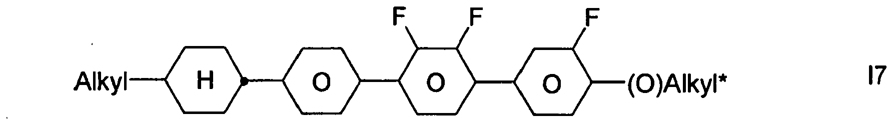 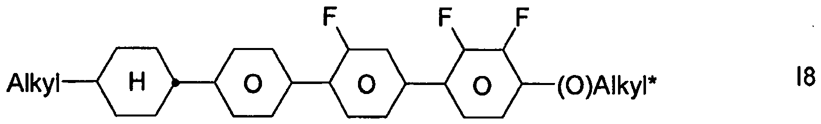 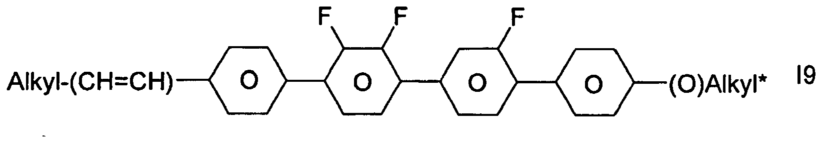 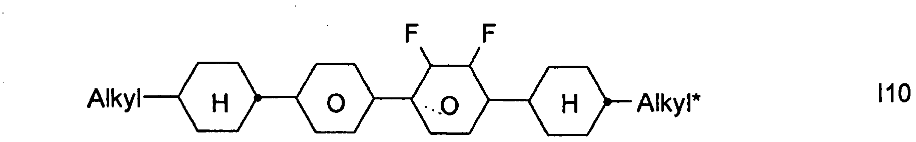 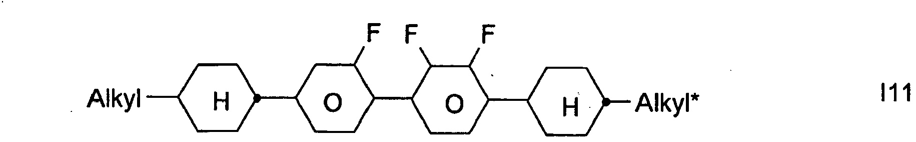 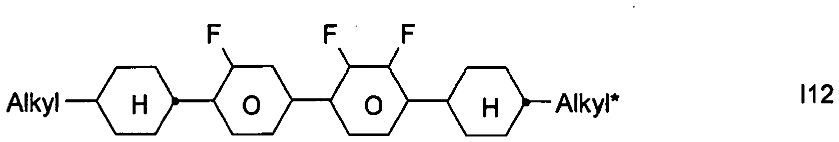 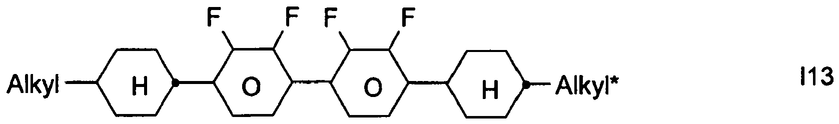 worin Alkyl und Alkyl* jeweils unabhängig voneinander einen geradkettigen Alkylrest mit 1-12, vorzugsweise 1 bis 6, C-Atomen, (O) ein Sauerstoffatom oder eine Einfachbindung, (CH=CH) eine Ethenylengruppe oder eine Einfachbindung, und L H oder F bedeuten.

2. FK-Medium nach Anspruch 1, **dadurch gekennzeichnet, dass** die FK-Mischung zusätzlich zu den Verbindungen der Formeln I6-I13 eine oder mehrere Verbindungen der Formel CY und/oder PY und/oder LY enthält: 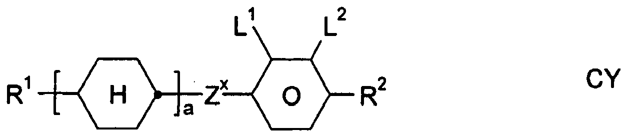 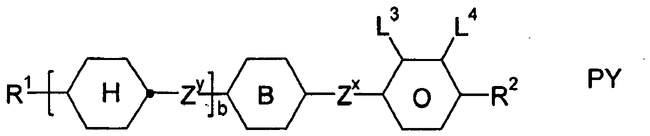 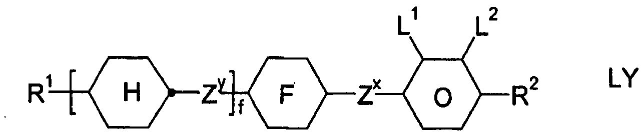 worin die einzelnen Reste folgende Bedeutung besitzen
a 1 oder 2,
b 0 oder 1,
f 0 oder 1, 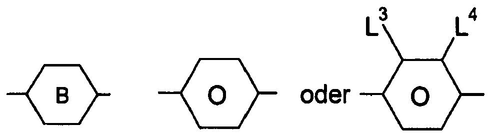 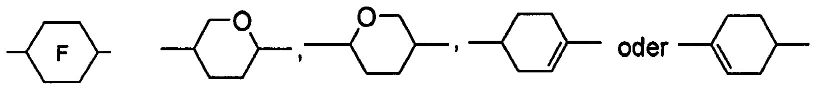
R¹ und R² jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
Z^{x} und Z^{y} jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung,
L¹⁻⁴ jeweils unabhängig voneinander F, Cl, OCF₃, CF₃, CH₃, CH₂F, CHF₂.

3. FK-Medium nach Anspruch 1 oder 2, **dadurch gekennzeichnet, dass** die FK-Mischung zusätzlich zu den Verbindungen der Formeln I6-I13 eine oder mehrere Verbindungen der Formel ZK enthält: 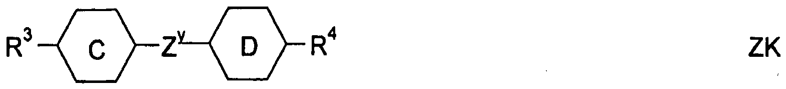 worin die einzelnen Reste folgende Bedeutung besitzen 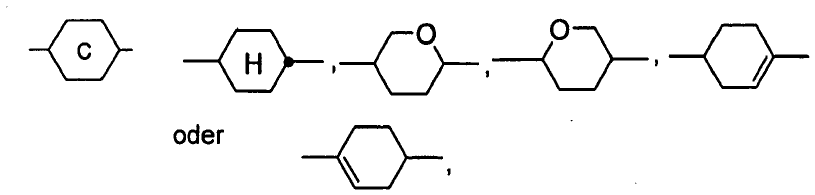 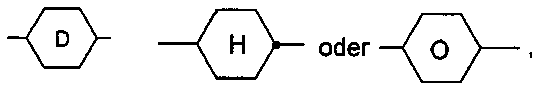
R³ und R⁴ jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
Z^{y} -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung.

4. FK-Medium nach einem oder mehreren der Ansprüche 1 bis 3, **dadurch gekennzeichnet, dass** die FK-Mischung zusätzlich zu den Verbindungen der Formeln I6-I13 eine oder mehrere Verbindungen der Formel DK enthält: 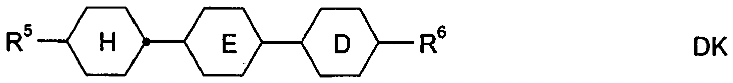 worin die einzelnen Reste bei jedem Auftreten gleich oder verschieden folgende Bedeutung haben:
R⁵ und R⁶ jeweils unabhängig voneinander eine der oben für R¹ angegebenen Bedeutungen,

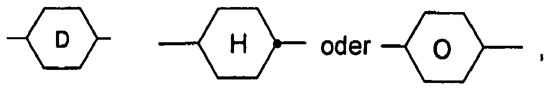

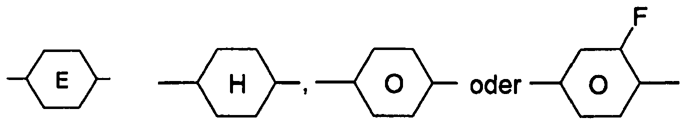

5. FK-Medium nach einem oder mehreren der Ansprüche 1 bis 4, **dadurch gekennzeichnet, dass** die FK-Mischung zusätzlich zu den Verbindungen der Formeln I6-I13 eine oder mehrere Verbindungen der Formel T enthält: 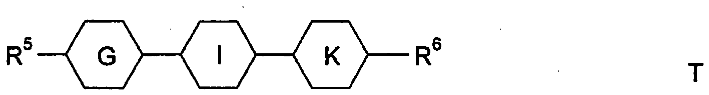 worin R⁵ und R⁶ jeweils unabhängig voneinander eine der oben für R¹ angegebenen Bedeutungen besitzen und 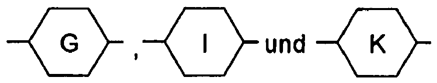 jeweils unabhängig voneinander 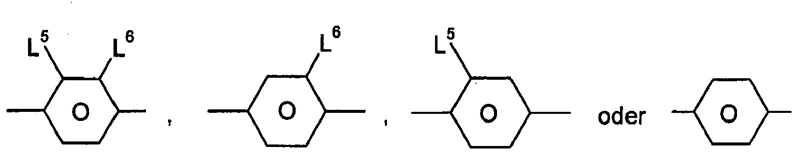 bedeuten, worin L⁵ F oder Cl, vorzugsweise F, und L⁶ F, Cl, OCF₃, CF₃, CH₃, CH₂F oder CHF₂, vorzugsweise F, bedeuten.

6. FK-Medium nach einem oder mehreren der Ansprüche 1 bis 5, **dadurch gekennzeichnet, dass** die FK-Mischung 2 bis 10% einer oder mehrerer Verbindungen der Formeln I6-I13 enthält.

7. FK.Medium nach einem oder mehreren der Ansprüche 1 bis 6, **dadurch gekennzeichnet, dass** die FK-Mischung eine oder mehrere Verbindungen ausgewählt aus der Gruppe bestehend aus Formel CY worin a=1, Formel PY worin b=0, und Formel LY worin f=0, in einer Gesamtkonzentration von 1 bis 60% enthält.

8. FK-Medium nach einem oder mehreren der Ansprüche 1 bis 7, **dadurch gekennzeichnet, dass** die FK-Mischung eine oder mehrere Verbindungen ausgewählt aus der Gruppe bestehend aus Formel CY worin a=2, und Formel PY worin b=1, in einer Gesamtkonzentration von 1 bis 60% enthält.

9. FK-Medium nach einem oder mehreren der Ansprüche 1 bis 8, **dadurch gekennzeichnet, dass** die FK-Mischung eine oder mehrere Verbindungen ausgewählt aus der Gruppe bestehend aus Formel ZK1, ZK2, ZK5, ZK6, DK1, DK2, DK4, DK5, B1 und T1, in einer Gesamtkonzentration von 1 bis 60% enthält.

10. FK-Medium nach einem oder mehreren der Ansprüche 1 bis 9, **dadurch gekennzeichnet, dass** die FK-Mischung eine oder mehrere Verbindungen ausgewählt aus der Gruppe bestehend aus Formel CY worin a=2 und R¹, R² eine Alkyl- oder Alkenylgruppe bedeuten, und Formel T, in einer Gesamtkonzentration von 1 bis 50% enthält.

11. FK-Medium enthaltend
- ein Polymer erhältlich durch Polymerisation einer polymerisierbaren Komponente A) enthaltend eine oder mehrere polymerisierbare Verbindungen, sowie
- eine flüssigkristalline Komponente B) bestehend aus einer FK-Mischung wie in einem oder mehreren der Ansprüche 1 bis 10 definiert.

12. FK-Medium nach Anspruch 11, dadurch gekennnzeichnet, dass die Polymerisation ohne Zusatz eines Initiators erfolgt.

13. FK-Medium nach einem oder mehreren der Ansprüche 1 bis 12, **dadurch gekennzeichnet, dass** die Konzentration der polymerisierbaren Komponente A) ≤ 5% und ≥ 0.01% beträgt.

14. FK-Medium nach einem oder mehreren der Ansprüche 1 bis 13, **dadurch gekennzeichnet, dass** die polymerisierbare Komponente A) eine oder mehrere polymerisierbare Verbindungen der Formel I* enthält
R^{a}-B¹-(Z^{b}-B²)ₘ-R^{b} I*
worin die einzelnen Reste folgende Bedeutung haben
R^{a} und R^{b} jeweils unabhängig voneinander P, P-Sp-, H, Halogen, SF₅, NO₂, eine Kohlenstoffgruppe oder Kohlenwasserstoffgruppe, wobei mindestens einer der Reste R^{a} und R^{b} eine Gruppe P oder P-Sp- bedeutet oder enthält, und wobei, falls B¹ und/oder B² ein gesättigtes C-Atom enthalten, R^{a} und/oder R^{b} auch einen mit diesem gesättigten C-Atom spiro-verknüpften Rest bedeuten können,
P bei jedem Auftreten gleich oder verschieden eine polymerisierbare Gruppe,
Sp bei jedem Auftreten gleich oder verschieden eine Abstandsgruppe oder eine Einfachbindung,
B¹ und B² jeweils unabhängig voneinander eine aromatische, heteroaromatische, alicyclische oder heterocyclische Gruppe, vorzugsweise mit 4 bis 25 Ringatomen, welche auch anellierte Ringe enthalten kann, und welche auch durch L ein- oder mehrfach substituiert sein kann,
L P-Sp-, H, OH, CH₂OH, Halogen, SF₅, NO₂, eine Kohlenstoffgruppe oder Kohlenwasserstoffgruppe,
Z^{b} bei jedem Auftreten gleich oder verschieden -O-, -S-, - CO-, -CO-O-, -OCO-, -O-CO-O-, -OCH₂-, -CH₂O-, - SCH₂-, -CH₂S-, -CF₂O-, -OCF₂-, -CF₂S-, -SCF₂-,-(CH₂)ₙ₁-, -CF₂CH₂-, -CH₂CF₂-, -(CF₂)ₙ₁-, -CH=CH-,-CF=CF-, -C≡C-, -CH=CH-COO-, -OCO-CH=CH-, CR⁰R⁰⁰ oder eine Einfachbindung,
R⁰ und R⁰⁰ jeweils unabhängig voneinander H oder Alkyl mit 1 bis 12 C-Atomen,
m 0, 1, 2, 3 oder 4,
n1 1, 2, 3 oder 4.

15. FK-Medium nach Anspruch 14, **dadurch gekennzeichnet, dass** in den Verbindungen der Formel I*
R^{a} und R^{b} jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Spersetzt sein können, wobei mindestens einer der Reste R^{a} und R^{b} eine Gruppe P oder P-Sp- bedeutet oder enthält, wobei, falls B¹ und/oder B² ein gesättigtes C-Atom enthalten, R^{a} und/oder R^{b} auch einen mit diesem gesättigten C-Atom spiro-verknüpften Rest bedeuten können,
B¹ und B² jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
L P, P-Sp-, OH, CH₂OH, F, Cl, Br, I, -CN, -NO₂, -NCO, - NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F, Cl, P oder P-Spersetzt sein können,
P und Sp die in Anspruch 17 angegebene Bedeutung,
Y¹ Halogen,
R^{x} P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch-O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

16. FK-Medium nach Anspruch 14 oder 15, **dadurch gekennzeichnet, dass** P Vinyloxy, Acrylat, Methacrylat, Fluoracrylat, Chloracrylat, Oxetan oder Epoxy bedeutet.

17. FK-Medium nach eine oder mehreren der Ansprüche 14 bis 16, **dadurch gekennzeichnet, dass** in den Verbindungen der Formel I* Sp ausgewählt ist aus der Formel Sp'-X', so dass der Rest P-Sp- der Formel P-Sp'-X'- entspricht, wobei
Sp' Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -NR⁰-, -SiR⁰⁰R⁰⁰⁰-. -CO-, -COO-, -OCO-, -OCO-O-, -S-CO-, - CO-S-, -NR⁰⁰-CO-O-, -O-CO-NR⁰⁰-, -NR⁰⁰-CO-NR⁰⁰-, - CH=CH- oder -C=C- ersetzt sein können, dass O- und/oder S-Atome nicht direkt miteinander verknüpft sind,
X' -O-, -S-, -CO-, -COO-, -OCO-, -O-COO-, -CO-NR⁰⁰-,-NR⁰⁰-CO-, -NR⁰⁰-CO-NR⁰⁰-, -OCH₂-, -CH₂O-, -SCH₂-,-CH₂S-, -CF₂O-, -OCF₂-, -CF₂S-, -SCF₂-, -CF₂CH₂-,-CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- oder eine Einfachbindung bedeutet,
R⁰⁰ und R⁰⁰⁰ jeweils unabhängig voneinander H oder Alkyl mit 1 bis 12 C-Atomen bedeuten, und
Y² und Y³ jeweils unabhängig voneinander H, F, Cl oder CN bedeuten.

18. FK-Medium nach einem oder mehreren der Ansprüche 14 bis 17, **dadurch gekennzeichnet, dass** die Verbindungen der Formel I* aus folgenden Unterformeln ausgewählt sind 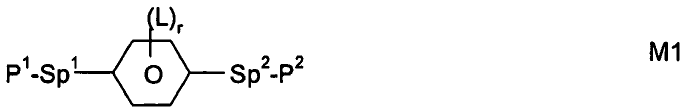 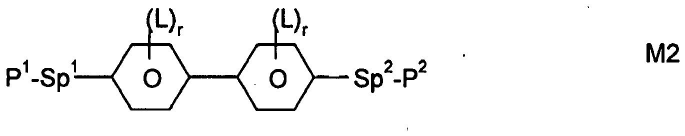 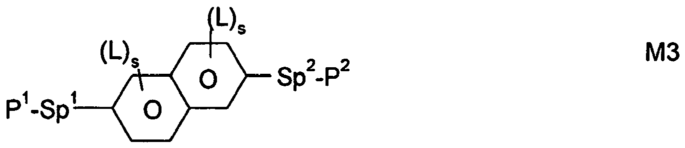 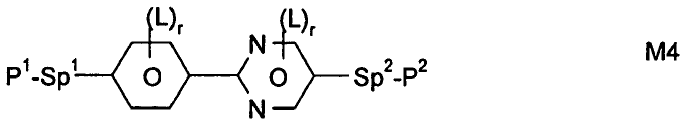 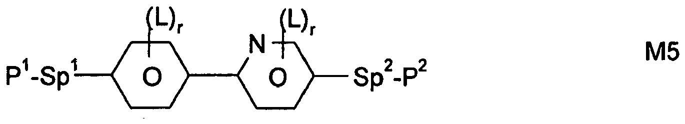 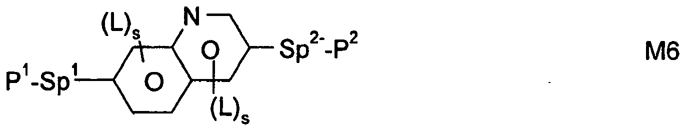 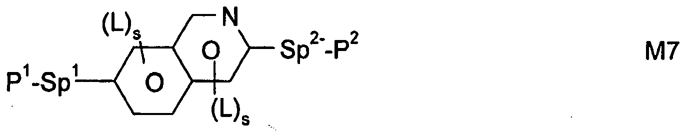 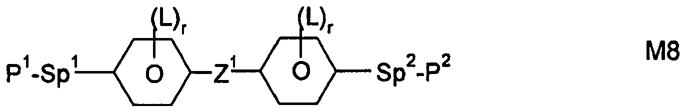 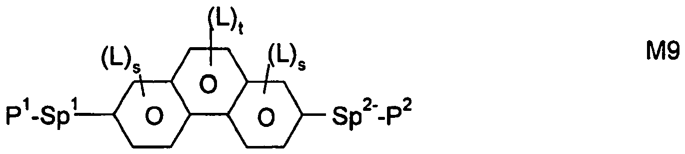 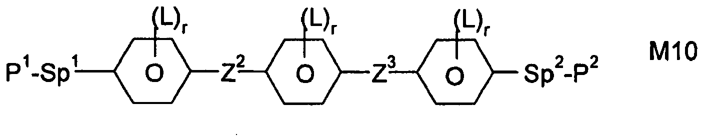 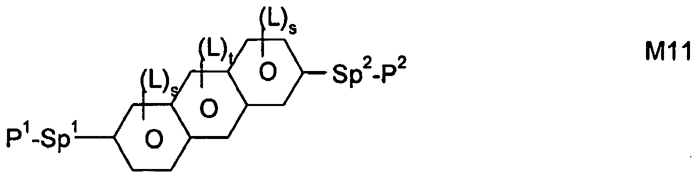 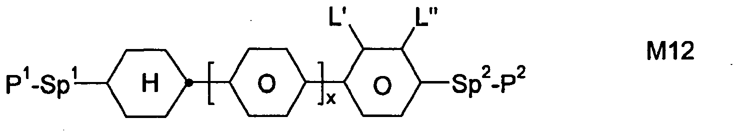 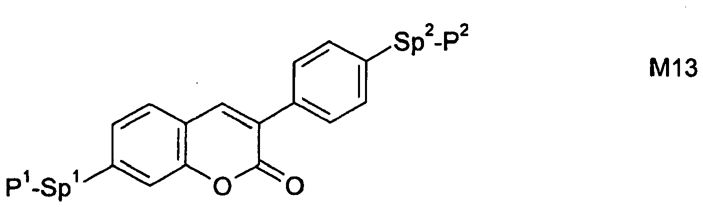 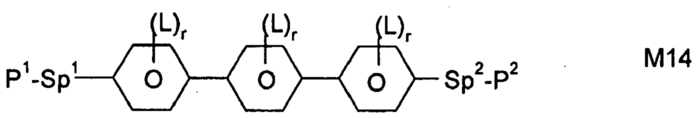 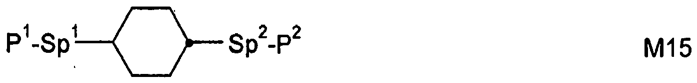 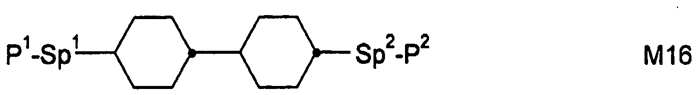 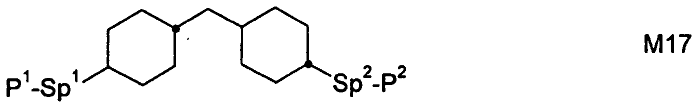 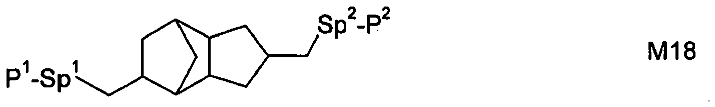 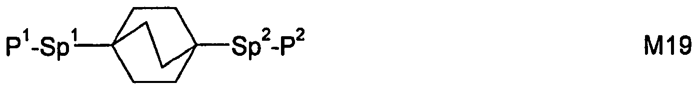 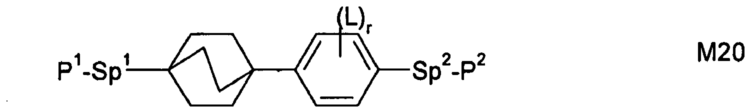 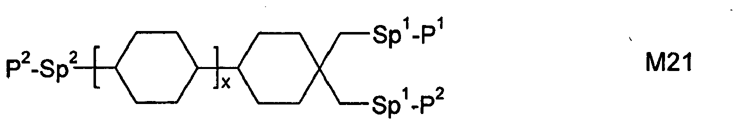 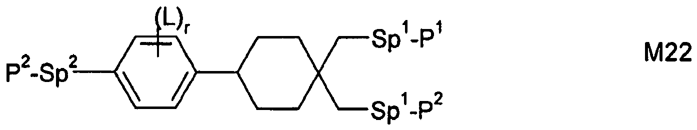 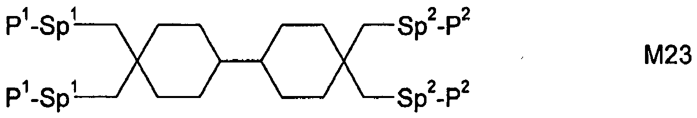 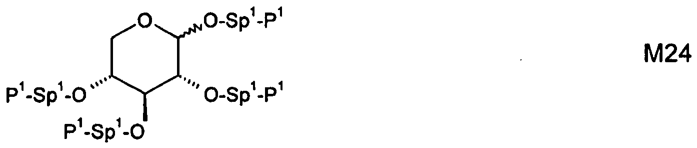 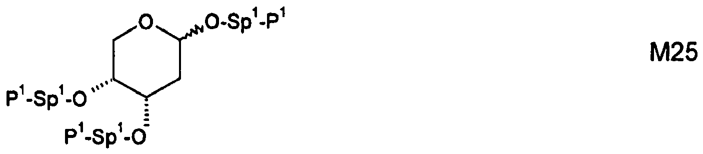 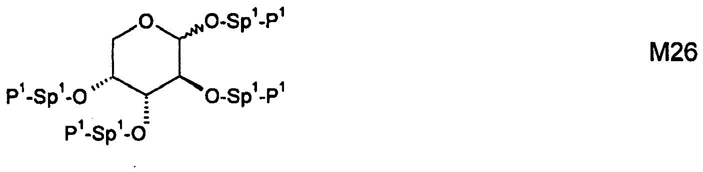 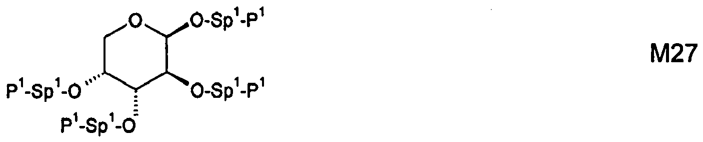 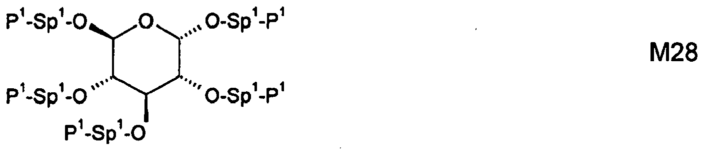 worin die einzelnen Reste folgende Bedeutung besitzen:
P¹ und P² jeweils unabhängig voneinander eine polymerisierbare Gruppe, vorzugsweise mit einer der in Anspruch 14 oder 16 für P angegebenen Bedeutungen, besonders bevorzugt eine Acrylat-, Methacrylat-, Fluoracrylat-, Oxetan-, Vinyloxy- oder Epoxygruppe,
Sp¹ und Sp² jeweils unabhängig voneinander eine Einfachbindung oder eine Abstandsgruppe, vorzugsweise mit einer der in Anspruch 14 oder 17 für Sp angegebenen Bedeutungen, und besonders bevorzugt -(CH₂)ₚ₁-, -(CH₂)ₚ₁-O-,-(CH₂)ₚ₁-CO-O- oder -(CH₂)ₚ₁-O-CO-O- bedeuten, worin p1 eine ganze Zahl von 1 bis 12 ist, und wobei in den letztgenannten Gruppen die Verknüpfung zur benachbarten Ring über das O-Atom erfolgt,
wobei auch einer oder mehrere der Reste P¹-Sp¹- und P²-Sp²- R^{aa} bedeuten können, mit der Maßgabe dass mindestens einer der vorhandenen Reste P¹-Sp¹- und P²-Sp²- nicht R^{aa} bedeutet,
R^{aa} H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-,-S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, wobei die Alkenyl- und Alkinylreste mindestens zwei und die verzweigten Reste mindestens drei C-Atome aufweisen,
R⁰, R⁰⁰ jeweils unabhängig voneinander und bei jedem Auftreten gleich oder verschieden H oder Alkyl mit 1 bis 12 C-Atomen,
R^{y} und R^{z} jeweils unabhängig voneinander H, F, CH₃ oder CF₃,
Z¹ -O-, -CO-, -C(R^{y}R^{z})-, oder -CF₂CF₂-,
Z² und Z³ jeweils unabhängig voneinander -CO-O-, -O-CO-, - CH₂O-, -OCH₂-, -CF₂O-, -OCF₂-, oder -(CH₂)ₙ-, wobei n 2, 3 oder 4 ist,
L bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, vorzugsweise F,
L' und L" jeweils unabhängig voneinander H, F oder Cl,
r 0, 1, 2, 3 oder 4,
s 0, 1, 2 oder 3,
t 0, 1 oder 2,
x 0 oder 1.

19. FK-Medium nach einem oder mehreren der Ansprüche 14 bis 18, **dadurch gekennzeichnet, dass** die Verbindungen der Formel I* oder deren Unterformeln genau einen Rest P-Sp- oder P¹-Sp¹ oder P²-Sp² enthalten, worin Sp bzw. Sp¹ bzw. Sp² eine Einfachbindung bedeutet und genau einen Rest P-Sp- oder P¹-Sp¹ oder P²-Sp² enthalten worin Sp bzw. Sp¹ bzw. Sp² von einer Einfachbindung verschieden ist.

20. Verwendung eines FK-Mediums nach einem oder mehreren der Ansprüche 1 bis 19 in FK-Anzeigen des PS-(polymer stabilized) oder PSA-(polymer sustained alignment) Typs.

21. Verwendung eines FK-Mediums nach einem oder mehreren der Ansprüche 1 bis 19 in PS- und PSA-Anzeigen zur Erzeugung eines Tiltwinkels im FK-Medium durch in situ-Polymerisation der polymerisierbare(n) Verbindung(en) in der PSA-Anzeige unter Anlegen eines elektrischen oder magnetischen Feldes.

22. FK-Anzeige des PS- oder PSA-Typs enthaltend eine FK-Mischung oder ein FK-Medium nach einem oder mehreren der Ansprüche 1 bis 19.

23. FK-Anzeige nach Anspruch 22, **dadurch gekennzeichnet, dass** sie eine PSA-VA-, PS-IPS- oder PS-FFS-Anzeige ist.

24. FK-Anzeige, enthaltend eine FK-Zelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium unter Anlegen einer elektrischen Spannung, und wobei die niedermolekulare Komponente eine FK-Mischung wie in einem oder mehreren der Ansprüche 1 bis 10 definiert ist.

25. Verfahren zur Herstellung einer FK-Anzeige nach einem oder mehreren der Ansprüche 22 bis 24, indem man eine FK-Mischung wie in einem oder mehreren der Ansprüche 1 bis 10 definiert mit einer oder mehreren polymerisierbaren Verbindungen, und gegebenenfalls mit weiteren flüssigkristallinen Verbindungen und/oder Additiven, mischt, die so erhaltene Mischung in eine FK-Zelle wie in Anspruch 24 beschrieben füllt, und die polymerisierbare(n) Verbindung(en) unter Anlegen einer elektrischen Spannung polymerisiert.

## Claims

1. LC medium comprising
- a polymerisable component A) comprising one or more polymerisable compounds, and
- a liquid-crystalline component B) consisting of an LC mixture having negative dielectric anisotropy comprising 1 to 25% of one or more compounds selected from the formulae I6-I13 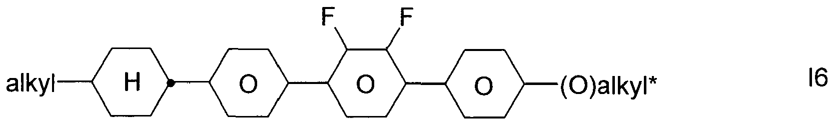 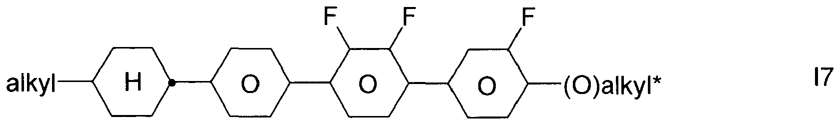 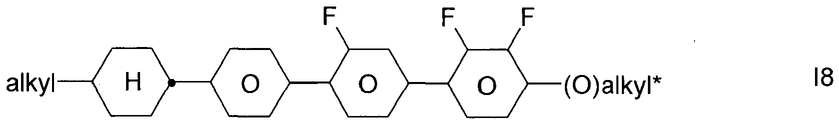 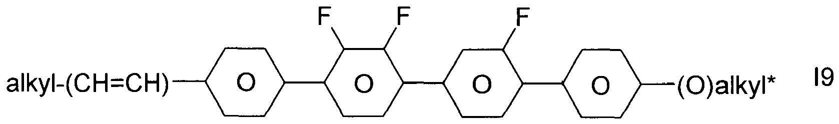 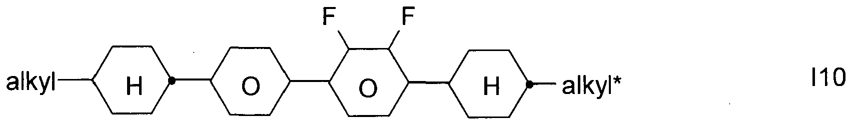 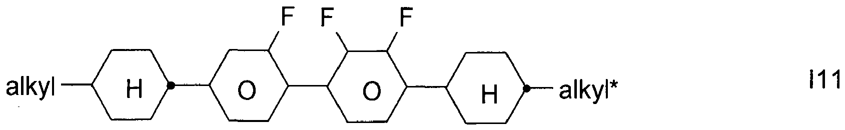 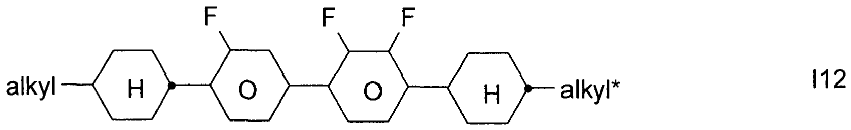 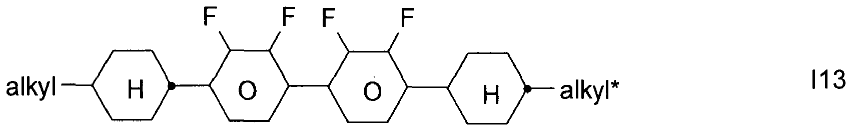 in which alkyl and alkyl* each, independently of one another, denote a straight-chain alkyl radical having 1-12, preferably 1 to 6, C atoms, (O) denotes an oxygen atom or a single bond, (CH=CH) denotes an ethenylene group or a single bond, and L denotes H or F.

2. LC medium according to Claim 1, **characterised in that**, in addition to the compounds of the formulae I6-I13, the LC mixture comprises one or more compounds of the formula CY and/or PY and/or LY: 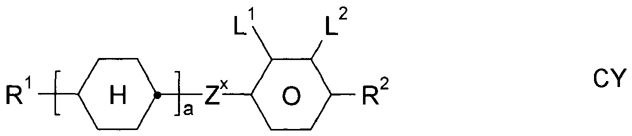 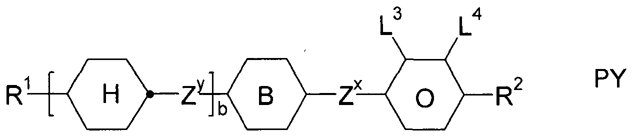 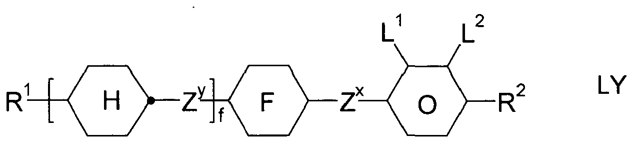 in which the individual radicals have the following meanings:
a denotes 1 or 2,
b denotes 0 or 1,
f denotes 0 or 1, 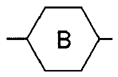
denotes 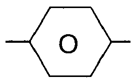 or 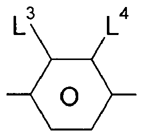 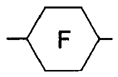 denotes 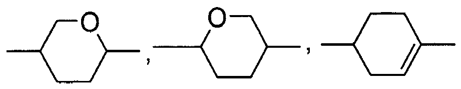 or 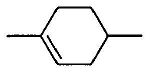
R¹ and R² each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another,
Z^{x} and Z^{y} each, independently of one another, denote -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- or a single bond,
L¹⁻⁴ each, independently of one another, denote F, Cl, OCF₃, CF₃, CH₃, CH₂F, CHF₂.

3. LC medium according to Claim 1 or 2, **characterised in that**, in addition to the compounds of the formulae I6-I13, the LC mixture comprises one or more compounds of the formula ZK: 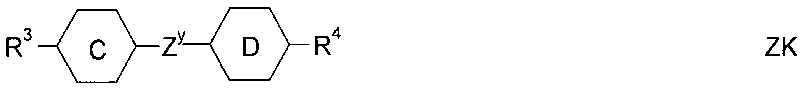 in which the individual radicals have the following meanings: 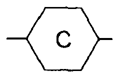 denotes 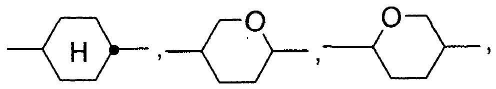 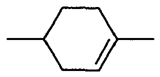 or 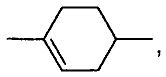 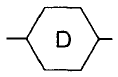 denotes 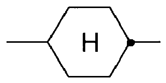 or 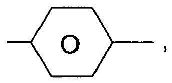
R³ and R⁴ each, independently of one another, denote alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
Z^{y} denotes -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-or a single bond.

4. LC medium according to one or more of Claims 1 to 3, **characterised in that**, in addition to the compounds of the formulae I6-I13, the LC mixture comprises one or more compounds of the formula DK: 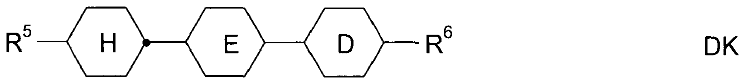 in which the individual radicals on each occurrence, identically or differently, have the following meanings:
R⁵ and R⁶ each, independently of one another, have one of the meanings indicated above for R¹, 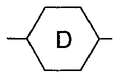
denotes 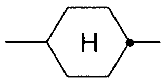 or 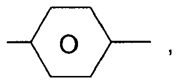 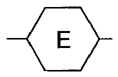 denotes 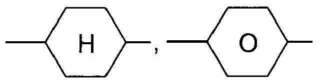 or

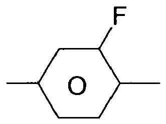

5. LC medium according to one or more of Claims 1 to 4, **characterised in that**, in addition to the compounds of the formulae I-I13, the LC mixture comprises one or more compounds of the formula T: 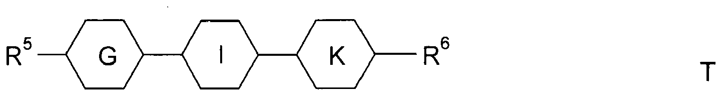 in which R⁵ and R⁶ each, independently of one another, have one of the meanings indicated above for R¹, and 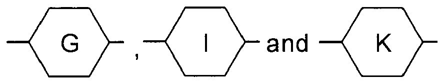 each, independently of one another, denote 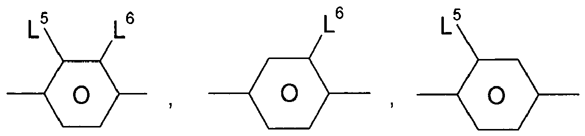 or 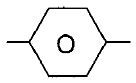 in which L⁵ denotes F or Cl, preferably F, and L⁶ denotes F, Cl, OCF₃, CF₃, CH₃, CH₂F or CHF₂, preferably F.

6. LC medium according to one or more of Claims 1 to 5, **characterised in that** the LC mixture comprises 2 to 10% of one or more compounds of the formulae I6-I13.

7. LC medium according to one or more of Claims 1 to 6, **characterised in that** the LC mixture comprises one or more compounds selected from the group consisting of formula CY in which a = 1, formula PY in which b = 0 and formula LY in which f = 0, in a total concentration of 1 to 60%.

8. LC medium according to one or more of Claims 1 to 7, **characterised in that** the LC mixture comprises one or more compounds selected from the group consisting of formula CY in which a = 2 and formula PY in which b = 1, in a total concentration of 1 to 60%.

9. LC medium according to one or more of Claims 1 to 8, **characterised in that** the LC mixture comprises one or more compounds selected from the group consisting of formulae ZK1, ZK2, ZK5, ZK6, DK1, DK2, DK4, DK5, B1 and T1, in a total concentration of 1 to 60%.

10. LC medium according to one or more of Claims 1 to 9, **characterised in that** the LC mixture comprises one or more compounds selected from the group consisting of formula CY in which a = 2 and R¹, R² denote an alkyl or alkenyl group, and formula T, in a total concentration of 1 to 50%.

11. LC medium comprising
- a polymer obtainable by polymerisation of a polymerisable component A) comprising one or more polymerisable compounds, and
- a liquid-crystalline component B) consisting of an LC mixture as defined in one or more of Claims 1 to 14.

12. LC medium according to Claim 11, **characterised in that** the polymerisation is carried out without addition of an initiator.

13. LC medium according to one or more of Claims 1 to 12, **characterised in that** the concentration of the polymerisable component A) is ≤ 5% and ≥ 0.01%.

14. LC medium according to one or more of Claims 1 to 13, **characterised in that** the polymerisable component A) comprises one or more polymerisable compounds of the formula I*
R^{a}-B¹-(Z^{b}-B²)ₘ-R^{b} I*
in which the individual radicals have the following meanings:
R^{a} and R^{b} each, independently of one another, denote P, P-Sp-, H, halogen, SF₅, NO₂, a carbon group or hydrocarbon group, where at least one of the radicals R^{a} and R^{b} denotes or contains a group P or P-Sp-, and where, if B¹ and/or B² contain a saturated C atom, R^{a} and/or R^{b} may also denote a radical which is spiro-linked to this saturated C atom,
P on each occurrence, identically or differently, denotes a polymerisable group,
Sp on each occurrence, identically or differently, denotes a spacer group or a single bond,
B¹ and B² each, independently of one another, denote an aromatic, heteroaromatic, alicyclic or heterocyclic group, preferably having 4 to 25 ring atoms, which may also contain fused rings, and which may also be mono- or polysubstituted by L,
L denotes P-Sp-, H, OH, CH₂OH, halogen, SF₅, NO₂, a carbon group or hydrocarbon group,
Z^{b} on each occurrence, identically or differently, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
R⁰ and R⁰⁰ each, independently of one another, denote H or alkyl having 1 to 12 C atoms,
m denotes 0, 1, 2, 3 or 4,
n1 denotes 1, 2, 3 or 4.

15. LC medium according to Claim 14, **characterised in that**, in the compounds of the formulae I*,
R^{a} and R^{b} each, independently of one another, denote P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where at least one of the radicals R^{a} and R^{b} denotes or contains a group P or P-Sp-, where, if B¹ and/or B² contain a saturated C atom, R^{a} and/or R^{b} may also denote a radical which is spiro-linked to this saturated C atom,
B¹ and B² each, independently of one another, denote 1,4-phenylene, naphthalene-1,4-diyl, naphthalene-2,6-diyl, phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
L denotes P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxy-carbonyl, alkylcarbonyloxy or alkoxycarbonyloxy having 1 to 25 C atoms, in which, in addition, one or more H atoms may be replaced by F, Cl, P or P-Sp-,
P and Sp have the meaning indicated in Claim 14,
Y¹ denotes halogen,
R^{x} denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O-in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

16. LC medium according to Claim 14 or 15, **characterised in that** P denotes vinyloxy, acrylate, methacrylate, fluoroacrylate, chloroacrylate, oxetane or epoxy.

17. LC medium according to one or more of Claims 14 to 16, **characterised in that**, in the compounds of the formula I*, Sp is selected from the formula Sp'-X' in such a way that the radical P-Sp- corresponds to the formula P-Sp'-X'-, where
Sp' denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -NR⁰-, -SiR⁰⁰R⁰⁰⁰-, -CO-, -COO-, -OCO-, -OCO-O-, -S-CO-, -CO-S-, -NR⁰⁰-CO-O-, -O-CO-NR⁰⁰-, -NR⁰⁰-CO-NR⁰⁰-, -CH=CH- or -C≡C- in such a way that O and/or S atoms are not linked directly to one another,
X' denotes -O-, -S-, -CO-, -COO-, -OCO-, -O-COO-, -CO-NR⁰⁰-, -NR⁰⁰-CO-, -NR⁰⁰-CO-NR⁰⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- or a single bond,
R⁰⁰ and R⁰⁰⁰ each, independently of one another, denote H or alkyl having 1 to 12 C atoms, and
Y² and Y³ each, independently of one another, denote H, F, Cl or CN.

18. LC medium according to one or more of Claims 14 to 17, **characterised in that** the compounds of the formula I* are selected from the following sub-formulae: 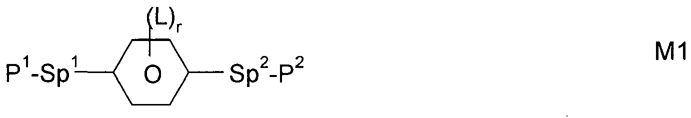 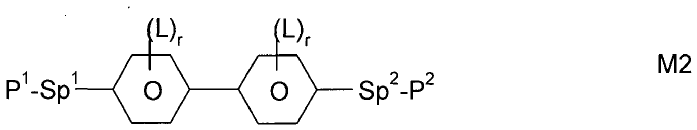 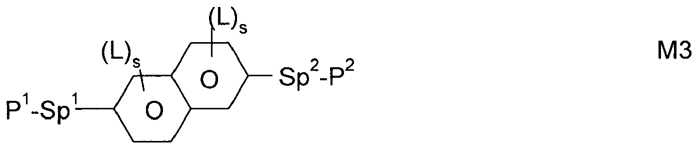 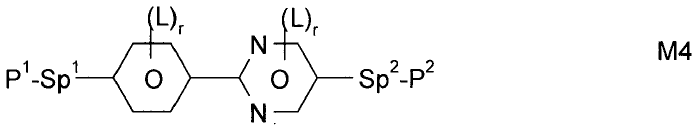 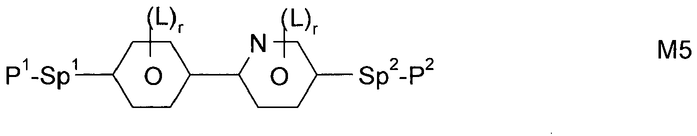 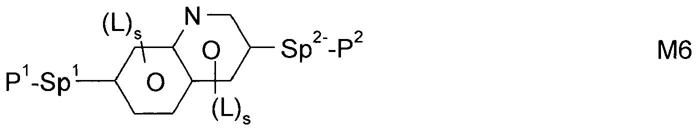 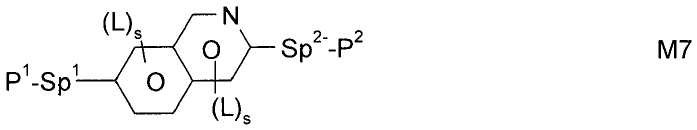 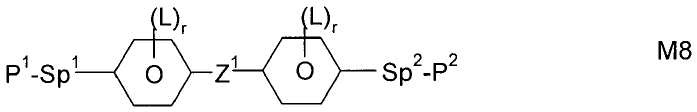 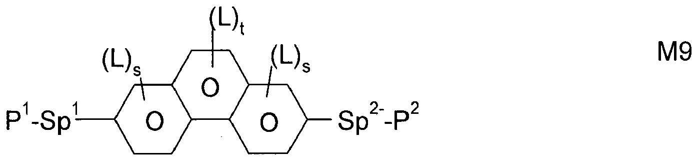 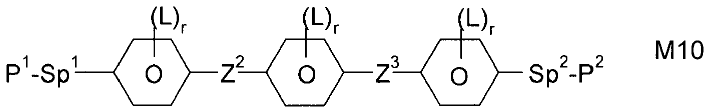 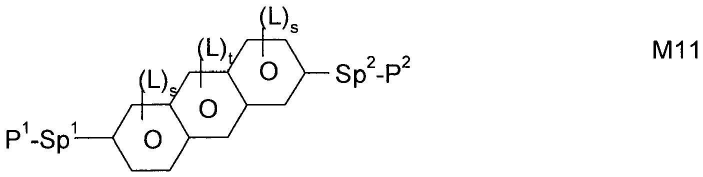 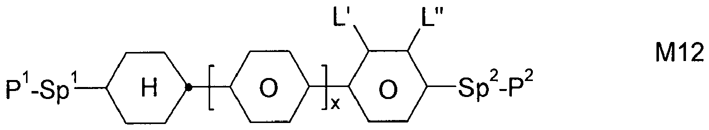 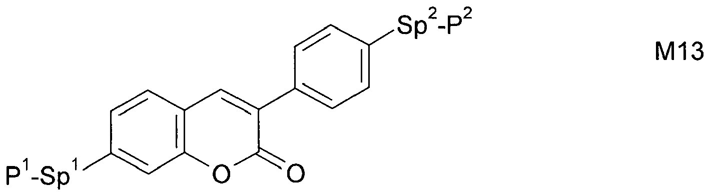 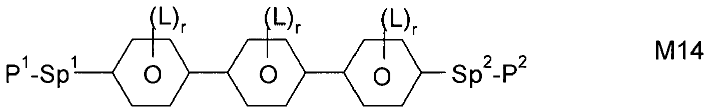 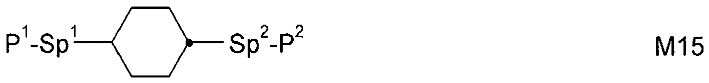 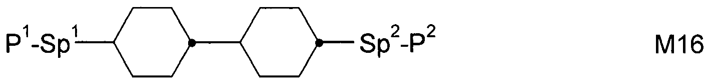 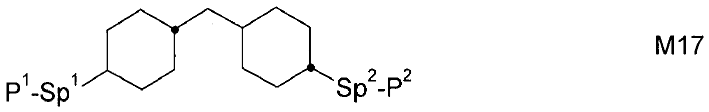 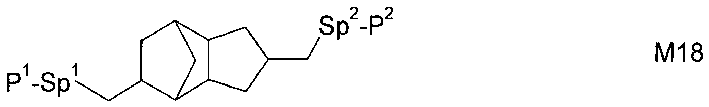 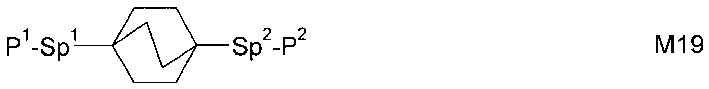 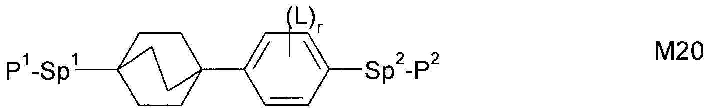 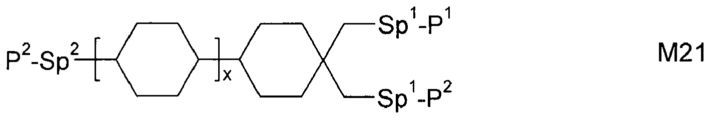 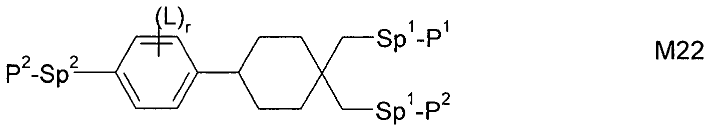 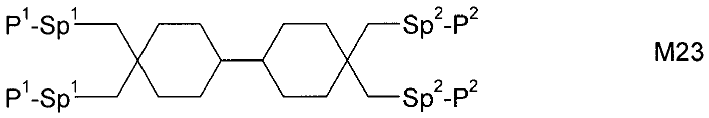 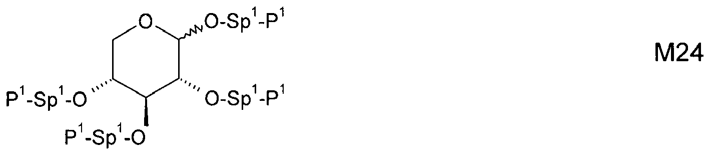 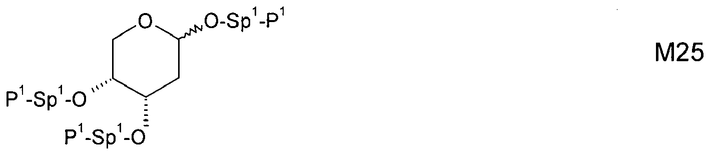 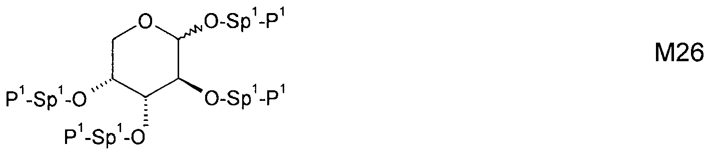 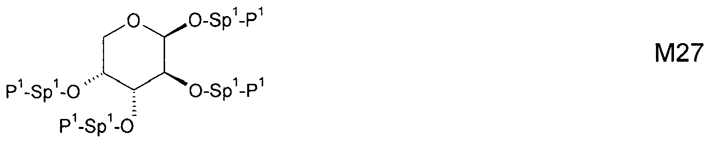 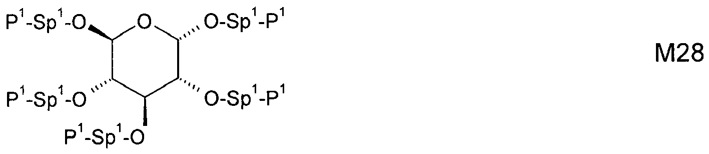 in which the individual radicals have the following meanings:
P¹ and P² each, independently of one another, denote a polymerisable group, preferably having one of the meanings indicated for P in Claim 14 or 16, particularly preferably an acrylate, methacrylate, fluoroacrylate, oxetane, vinyloxy or epoxy group,
Sp¹ and Sp² each, independently of one another, denote a single bond or a spacer group, preferably having one of the meanings indicated for Sp in Claim 14 or 17, and particularly preferably -(CH₂)ₚ₁-, -(CH₂)ₚ₁-O-, -(CH₂)ₚ₁-CO-O- or -(CH₂)ₚ₁-O-CO-O-, in which p1 is an integer from 1 to 12, and where, in the last-mentioned groups, the linking to the adjacent ring takes place via the O atom,
and where one or more of the radicals P¹-Sp¹- and P²-Sp²- may denote R^{aa}, with the proviso that at least one of the radicals P¹-Sp¹- and P²-Sp²- present does not denote R^{aa},
R^{aa} denotes H, F, Cl, CN or straight-chain or branched alkyl having 1 to 25 C atoms, in which, in addition, one or more non-adjacent CH₂ groups may each be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkyl-carbonyloxy or alkoxycarbonyloxy having 1 to 12 C atoms, where the alkenyl and alkynyl radicals have at least two and the branched radicals at least three C atoms,
R⁰, R⁰⁰ each, independently of one another and identically or differently on each occurrence, denote H or alkyl having 1 to 12 C atoms,
R^{y} and R^{z} each, independently of one another, denote H, F, CH₃ or CF₃,
Z¹ denotes -O-, -CO-, -C(R^{y}R^{z})-, or -CF₂CF₂-,
Z² and Z³ each, independently of one another, denote -CO-O-, -O-CO-, -CH₂O-, -OCH₂-, -CF₂O-, -OCF₂- or -(CH₂)ₙ-, where n is 2, 3 or 4,
L on each occurrence, identically or differently, denotes F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
L' and L" each, independently of one another, denote H, F or Cl,
r denotes 0, 1, 2, 3 or 4,
s denotes 0, 1, 2 or 3,
t denotes 0, 1 or 2,
x denotes 0 or 1.

19. LC medium according to one or more of Claims 14 bis 18, **characterised in that** the compounds of the formula I* or sub-formulae thereof contain precisely one radical P-Sp- or P¹-Sp¹ or P²-Sp² in which Sp or Sp¹ or Sp² denotes a single bond and contain precisely one radical P-Sp- or P¹-Sp¹ or P²-Sp² in which Sp or Sp¹ or Sp² is other than a single bond.

20. Use of an LC medium according to one or more of Claims 1 to 19 in LC displays of the PS (polymer stabilized) or PSA (polymer sustained alignment) type.

21. Use of an LC medium according to one or more of Claims 1 to 19 in PS and PSA displays for generating a tilt angle in the LC medium by in-situ polymerisation of the polymerisable compound(s) in the PSA display with application of an electric or magnetic field.

22. LC display of the PS or PSA type containing an LC mixture or LC medium according to one or more of Claims 1 to 19.

23. LC display according to Claim 22, **characterised in that** it is a PSA-VA, PS-IPS or PS-FFS display.

24. LC display containing an LC cell consisting of two substrates, where at least one substrate is transparent to light and at least one substrate has an electrode layer, and a layer, located between the substrates, of an LC medium comprising a polymerised component and a low-molecular-weight component, where the polymerised component is obtainable by polymerisation of one or more polymerisable compounds in the LC medium between the substrates of the LC cell with application of an electrical voltage, and where the low-molecular-weight component is an LC mixture as defined in one or more of Claims 1 to 10.

25. Process for the production of an LC display according to one or more of Claims 22 to 24 by mixing an LC mixture as defined in one or more of Claims 1 to 10 with one or more polymerisable compounds, and optionally with further liquid-crystalline compounds and/or additives, introducing the resultant mixture into an LC cell as described in Claim 24, and polymerising the polymerisable compound(s) with application of an electrical voltage.

## Revendications

1. Milieu LC comprenant
- un composant polymérisable A) comprenant un ou plusieurs composés polymérisables, et
- un composant à cristaux liquides B) constitué d'un mélange LC ayant une anisotropie diélectrique négative comprenant de 1 à 25% d'un ou plusieurs composés choisis parmi les formules I6-I13 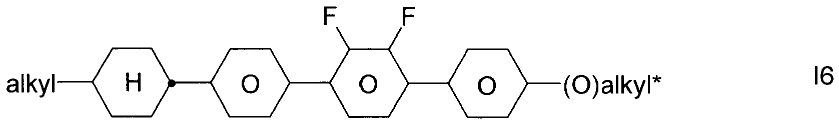 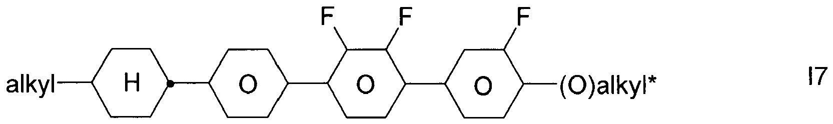 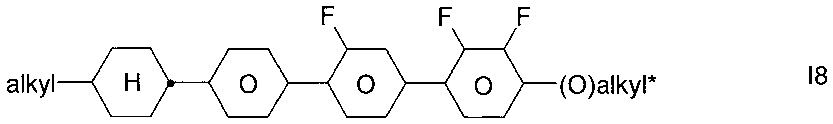 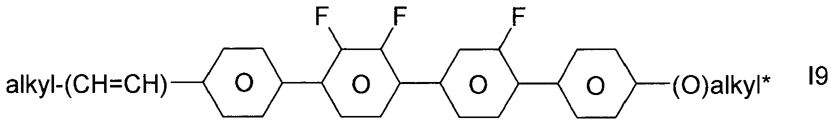 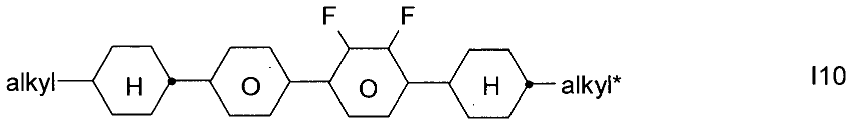 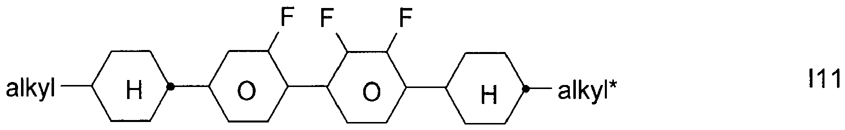 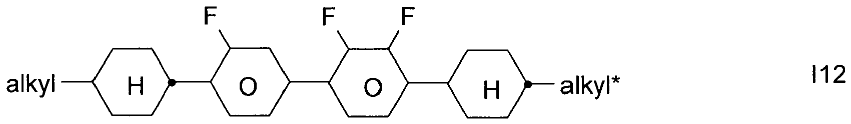 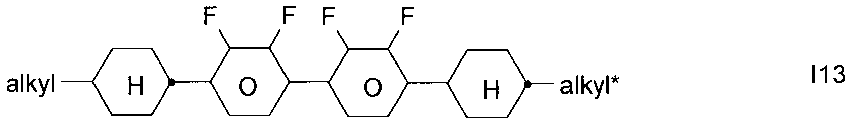 dans lesquelles alkyl et alkyl* désignent chacun, indépendamment l'un de l'autre, un radical alkyle à chaîne linéaire ayant 1-12, préférablement de 1 à 6, atomes de C, (O) désigne un atome d'oxygène ou une liaison simple, (CH=CH) désigne un groupement éthénylène ou une liaison simple, et L désigne H ou F.

2. Milieu LC selon la revendication 1, **caractérisé en ce que**, outre les composés des formules I6-I13, le mélange LC comprend un ou plusieurs composés de formule CY et/ou PY et/ou LY : 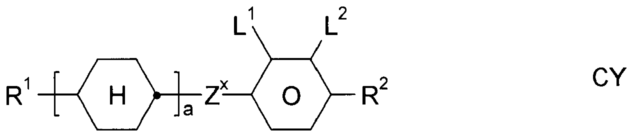 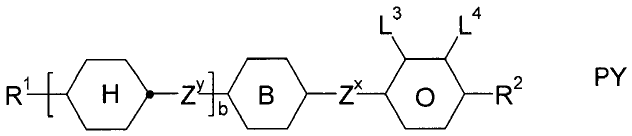 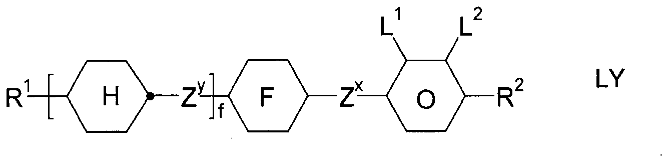 dans laquelle les radicaux individuels revêtent les significations suivantes :
a désigne 1 ou 2,
b désigne 0 ou 1,
f désigne 0 ou 1, 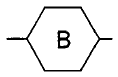
désigne 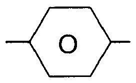 ou 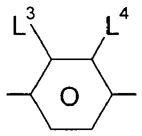 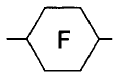 désigne 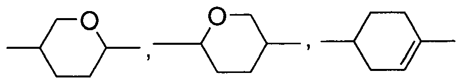 ou 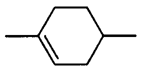
R¹ et R² désignent chacun indépendamment l'un de l'autre alkyle ayant de 1 à 12 atomes de C, où, de plus, un ou deux groupements CH₂ non adjacents peuvent être remplacés par -O-, -CH=CH-, -CO-, -OCO- ou -COO- de telle sorte que les atomes de O ne soient pas liés directement les uns aux autres,
Z^{x} et Z^{y} désignent chacun indépendamment l'un de l'autre -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- ou une liaison simple,
L¹⁻⁴ désignent chacun indépendamment l'un de l'autre F, CI, OCF₃, CF₃, CH₃, CH₂F, CHF₂.

3. Milieu LC selon la revendication 1 ou 2, **caractérisé en ce que**, outre les composés des formules I6-I13, le mélange LC comprend un ou plusieurs composés de formule ZK : 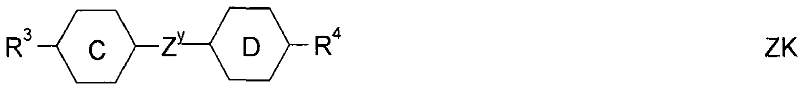 dans laquelle les radicaux individuels revêtent les significations suivantes : 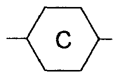 désigne 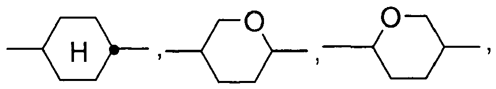 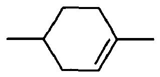 ou 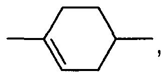 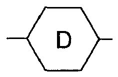 désigne 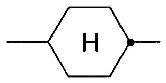 ou 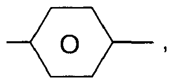
R³ et R⁴ désignent chacun indépendamment l'un de l'autre alkyle ayant de 1 à 12 atomes de C, où, de plus, un ou deux groupements CH₂ non adjacents peuvent être remplacés par -O-, -CH=CH-, -CO-, -OCO- ou -COO- de telle sorte que les atomes de O ne soient pas liés directement les uns aux autres,
Z^{y} désigne -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-ou une liaison simple.

4. Milieu LC selon une ou plusieurs parmi les revendications 1 à 3, **caractérisé en ce que**, outre les composés des formules I6-I13, le mélange LC comprend un ou plusieurs composés de formule DK : 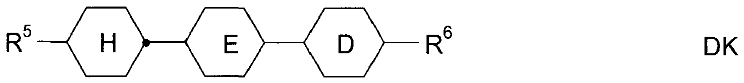 dans laquelle les radicaux individuels à chaque occurrence, de manière identique ou différente, revêtent les significations suivantes :
R⁵ et R⁶ revêtent chacun, indépendamment l'un de l'autre, l'une des significations indiquées ci-dessus pour R¹, 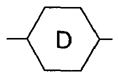
désigne 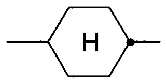 ou 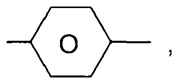 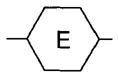 désigne 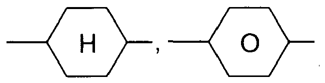 ou

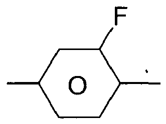

5. Milieu LC selon une ou plusieurs parmi les revendications 1 à 4, **caractérisé en ce que**, outre les composés des formules I6-I13, le mélange LC comprend un ou plusieurs composés de formule T : 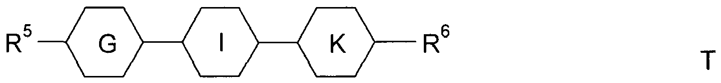 dans laquelle R⁵ et R⁶ revêtent chacun, indépendamment l'un de l'autre, l'une des significations indiquées ci-dessus pour R¹, et 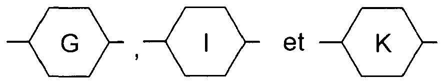 désignent chacun indépendamment l'un de l'autre 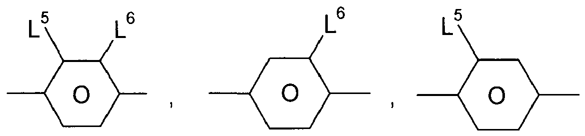 ou 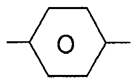 dans laquelle L⁵ désigne F ou CI, préférablement F, et L⁶ désigne F, Cl, OCF₃, CF₃, CH₃, CH₂F ou CHF₂, préférablement F.

6. Milieu LC selon une ou plusieurs parmi les revendications 1 à 5, **caractérisé en ce que** le mélange LC comprend de 2 à 10% d'un ou plusieurs composés des formules I6-I13.

7. Milieu LC selon une ou plusieurs parmi les revendications 1 à 6, **caractérisé en ce que** le mélange LC comprend un ou plusieurs composés choisis dans le groupe constitué par la formule CY dans laquelle a = 1, la formule PY dans laquelle b = 0 et la formule LY dans laquelle f = 0, selon une concentration totale allant de 1 à 60%.

8. Milieu LC selon une ou plusieurs parmi les revendications 1 à 7, **caractérisé en ce que** le mélange LC comprend un ou plusieurs composés choisis dans le groupe constitué par la formule CY dans laquelle a = 2 et la formule PY dans laquelle b = 1, selon une concentration totale allant de 1 à 60%.

9. Milieu LC selon une ou plusieurs parmi les revendications 1 à 8, **caractérisé en ce que** le mélange LC comprend un ou plusieurs composés choisis dans le groupe constitué par les formules ZK1, ZK2, ZK5, ZK6, DK1, DK2, DK4, DK5, B1 et T1, selon une concentration totale allant de 1 à 60%.

10. Milieu LC selon une ou plusieurs parmi les revendications 1 à 9, **caractérisé en ce que** le mélange LC comprend un ou plusieurs composés choisis dans le groupe constitué par la formule CY dans laquelle a = 2 et R¹, R² désignent un groupement alkyle ou alcényle, et la formule T, selon une concentration totale allant de 1 à 50%.

11. Milieu LC comprenant
- un polymère pouvant être obtenu par la polymérisation d'un composant polymérisable A) comprenant un ou plusieurs composés polymérisables, et
- un composant à cristaux liquides B) constitué d'un mélange LC tel que défini selon une ou plusieurs parmi les revendications 1 à 10.

12. Milieu LC selon la revendication 11, **caractérisé en ce que** la polymérisation est effectuée sans addition d'initiateur.

13. Milieu LC selon une ou plusieurs parmi les revendications 1 à 12, **caractérisé en ce que** la concentration en composant polymérisable A) est ≤ 5% et ≥ 0,01%.

14. Milieu LC selon une ou plusieurs parmi les revendications 1 à 13, **caractérisé en ce que** le composant polymérisable A) comprend un ou plusieurs composés polymérisables de formule I*
R^{a}-B¹-(Z^{b}-B²)ₘ-R^{b} I*
dans laquelle les radicaux individuels revêtent les significations suivantes :
R^{a} et R^{b} désignent chacun indépendamment l'un de l'autre P, P-Sp-, H, halogène, SF₅, NO₂, un groupement carboné ou un groupement hydrocarboné, où au moins l'un parmi les radicaux R^{a} et R^{b} désigne ou contient un groupement P ou P-Sp-, et où, si B¹ et/ou B² contient un atome de C saturé, R^{a} et/ou R^{b} peuvent également désigner un radical qui est à liaison spiro avec cet atome de C saturé,
P à chaque occurrence, de manière identique ou différente, désigne un groupement polymérisable,
Sp à chaque occurrence, de manière identique ou différente, désigne un groupement espaceur ou une liaison simple,
B¹ et B² désignent chacun indépendamment l'un de l'autre un groupement aromatique, hétéroaromatique, alicyclique ou hétérocyclique, ayant préférablement de 4 à 25 atomes de cycle, pouvant également contenir des cycles condensés, et pouvant également être mono- ou polysubstitué par L,
L désigne P-Sp-, H, OH, CH₂OH, halogène, SF₅, NO₂, un groupement carboné ou un groupement hydrocarboné,
Z^{b} à chaque occurrence, de manière identique ou différente, désigne -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ ou une liaison simple,
R⁰ et R⁰⁰ désignent chacun indépendamment l'un de l'autre H ou alkyle ayant de 1 à 12 atomes de C,
m désigne 0, 1, 2, 3 ou 4,
n1 désigne 1, 2, 3 ou 4.

15. Milieu LC selon la revendication 14, **caractérisé en ce que**, dans les composés de formule I*,
R^{a} et R^{b} désignent chacun indépendamment l'un de l'autre P, P-Sp-, H, F, CI, Br, I, -CN, -NO₂, -NCO, -NCS, -OCN, -SCN, SF₅ ou alkyle à chaîne linéaire ou ramifiée ayant de 1 à 25 atomes de C, où, de plus, un ou plusieurs groupements CH₂ non adjacents peuvent chacun, indépendamment les uns des autres, être remplacés par -C(R⁰)=C(R⁰⁰)-, -C≡C-, -N(R⁰⁰)-, -O-, -S-, -CO-, -CO-O-, -O-CO-, -O-CO-O- de telle sorte que des atomes de O et/ou S ne soient pas liés directement les uns aux autres, et où, de plus, un ou plusieurs atomes de H peuvent être remplacés par F, CI, Br, I, CN, P ou P-Sp-, où au moins l'un parmi les radicaux R^{a} et R^{b} désigne ou contient un groupement P ou P-Sp-, où, si B¹ et/ou B² contient un atome de C saturé, R^{a} et/ou R^{b} peuvent également désigner un radical qui est à liaison spiro avec cet atome de C saturé,
B¹ et B² désignent chacun indépendamment l'un de l'autre 1,4-phénylène, naphtalène-1,4-diyle, naphtalène-2,6-diyle, phénanthrène-2,7-diyle, anthracène-2,7-diyle, fluorène-2,7-diyle, coumarine, flavone, où, de plus, un ou plusieurs groupements CH dans ces groupements peuvent être remplacés par N, cyclohexane-1,4-diyle, où, de plus, un ou plusieurs groupements CH₂ non adjacents peuvent être remplacés par O et/ou S, 1,4-cyclohexénylène, bicyclo[1.1.1]pentane-1,3-diyle, bicyclo-[2.2.2]octane-1,4-diyle, spiro[3.3]heptane-2,6-diyle, pipéridine-1,4-diyle, décahydronaphtalène-2,6-diyle, 1,2,3,4-tétrahydronaphtalène-2,6-diyle, indane-2,5-diyle ou octahydro-4,7-méthanoindane-2,5-diyle, où tous ces groupements peuvent être non substitués ou mono- ou polysubstitués par L,
L désigne P, P-Sp-, OH, CH₂OH, F, CI, Br, I, -CN, -NO₂, -NCO, -NCS, -OCN, -SCN, -C(=O)N(R^{x})₂, -C(=O)Y¹, -C(=O)R^{x}, -N(R^{x})₂, silyle éventuellement substitué, aryle éventuellement substitué ayant 6 à 20 atomes de C, ou alkyle, alcoxy, alkylcarbonyle, alcoxycarbonyle, alkylcarbonyloxy ou alcoxycarbonyloxy à chaîne linéaire ou ramifiée ayant de 1 à 25 atomes de C, où, de plus, un ou plusieurs atomes de H peuvent être remplacés par F, Cl, P ou P-Sp-,
P et Sp revêtent la signification indiquée dans la revendication 14,
Y¹ désigne halogène,
R^{x} désigne P, P-Sp-, H, halogène, alkyle à chaîne linéaire, ramifiée ou cyclique ayant de 1 à 25 atomes de C, où, de plus, un ou plusieurs groupements CH₂ non adjacents peuvent être remplacés par -O-, -S-, -CO-, -CO-O-, -O-CO-, -O-CO-O- de telle sorte que des atomes de O et/ou S ne soient pas liés directement les uns aux autres, et où, de plus, un ou plusieurs atomes de H peuvent être remplacés par F, CI, P ou P-Sp-, un groupement aryle ou aryloxy éventuellement substitué ayant de 6 à 40 atomes de C, ou un groupement hétéroaryle ou hétéroaryloxy éventuellement substitué ayant de 2 à 40 atomes de C.

16. Milieu LC selon la revendication 14 ou 15, **caractérisé en ce que** P désigne vinyloxy, acrylate, méthacrylate, fluoroacrylate, chloroacrylate, oxétane ou époxy.

17. Milieu LC selon une ou plusieurs parmi les revendications 14 à 16, **caractérisé en ce que**, dans les composés de formule I*, Sp est choisi à partir de la formule Sp'-X' de telle sorte que le radical P-Sp-corresponde à la formule P-Sp'-X'-, où
Sp' désigne alkylène ayant de 1 à 20, préférablement de 1 à 12, atomes de C, qui est éventuellement mono- ou polysubstitué par F, CI, Br, I ou CN et où, de plus, un ou plusieurs groupements CH₂ non adjacents peuvent chacun, indépendamment les uns des autres, être remplacés par -O-, -S-, -NH-, -NR⁰-, -SiR⁰⁰R⁰⁰⁰-, -CO-, -COO-, -OCO-, -OCO-O-, -S-CO-, -CO-S-, -NR⁰⁰-CO-O-, -O-CO-NR⁰⁰-, -NR⁰⁰-CO-NR⁰⁰-, -CH=CH- ou -C≡C-de telle sorte que des atomes de O et/ou S ne soient pas liés directement les uns aux autres,
X' désigne -O-, -S-, -CO-, -COO-, -OCO-, -O-COO-, -CO-NR⁰⁰-, -NR⁰⁰-CO-, -NR⁰⁰-CO-NR⁰⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- ou une liaison simple,
R⁰⁰ et R⁰⁰⁰ désignent chacun indépendamment l'un de l'autre H ou alkyle ayant de 1 à 12 atomes de C, et
Y² et Y³ désignent chacun indépendamment l'un de l'autre H, F, Cl ou CN.

18. Milieu LC selon une ou plusieurs parmi les revendications 14 à 17, **caractérisé en ce que** les composés de formule I* sont choisis parmi les sous-formules suivantes : 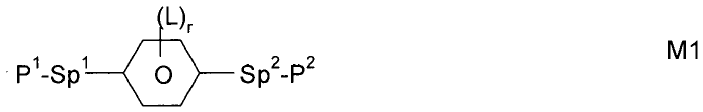 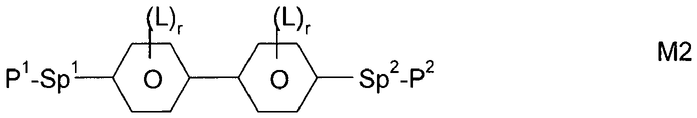 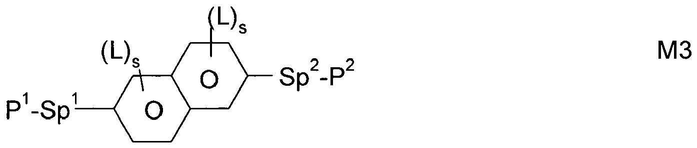 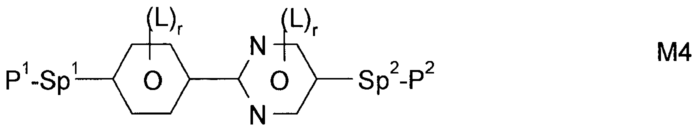 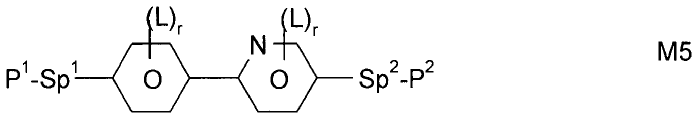 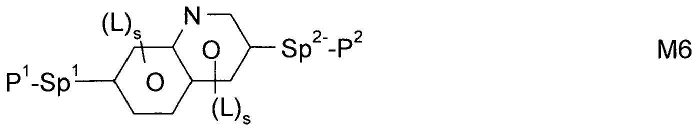 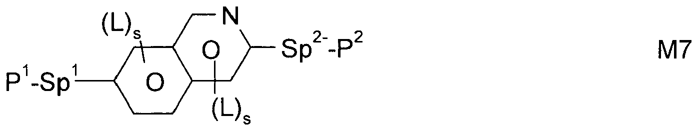 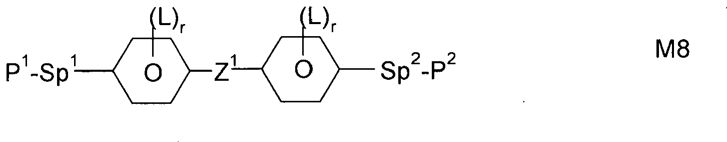 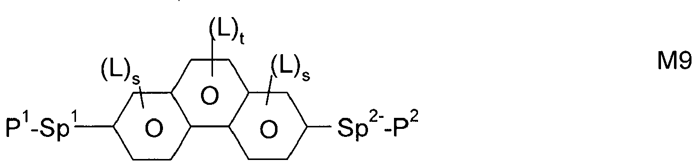 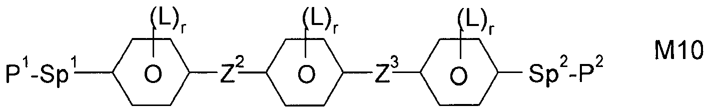 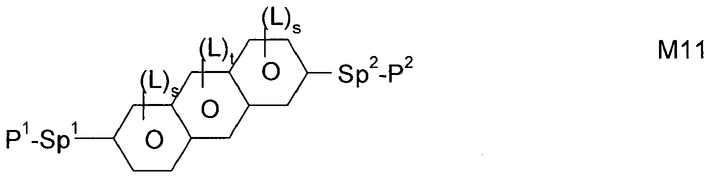 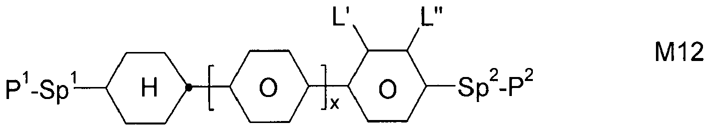 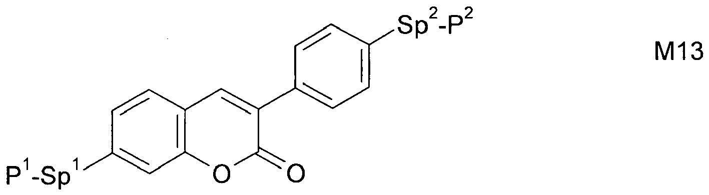 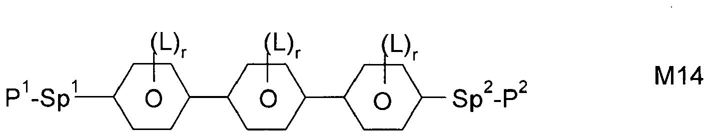 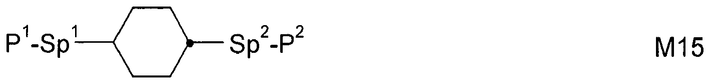 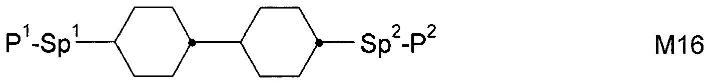 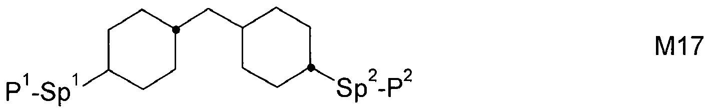 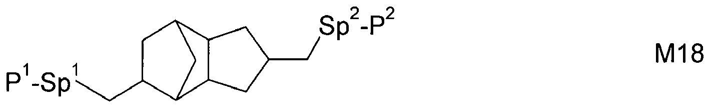 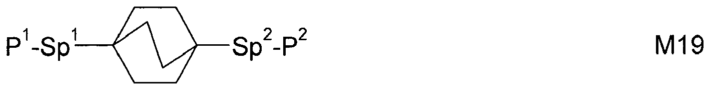 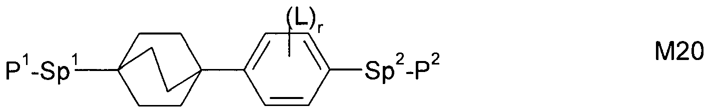 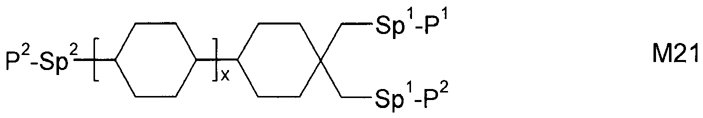 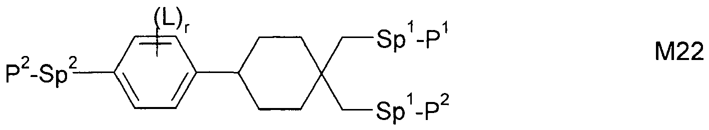 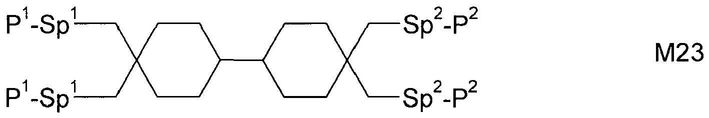 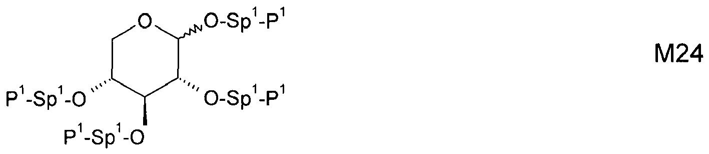 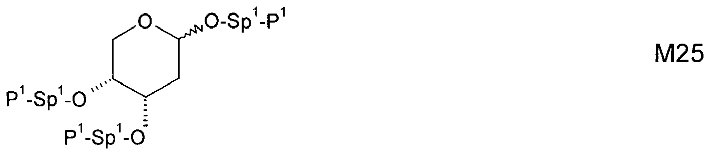 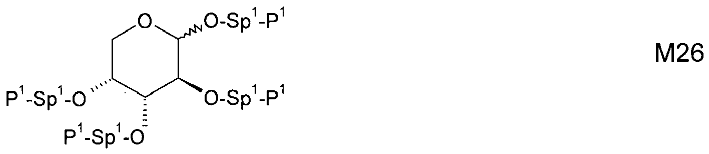 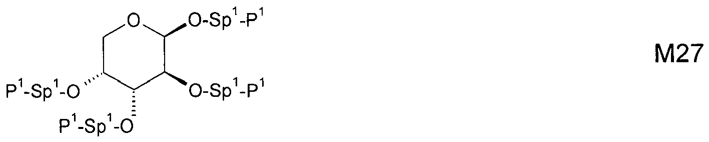 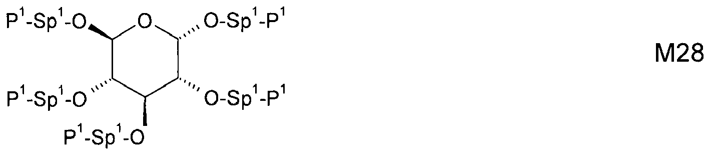 dans lesquelles les radicaux individuels revêtent les significations suivantes :
P¹ et P² désignent chacun indépendamment l'un de l'autre un groupement polymérisable, ayant préférablement l'une des significations indiquées pour P dans la revendication 14 ou 16, particulièrement préférablement un groupement acrylate, méthacrylate, fluoroacrylate, oxétane, vinyloxy ou époxy,
Sp¹ et Sp² désignent chacun indépendamment l'un de l'autre une liaison simple ou un groupement espaceur, ayant préférablement l'une des significations indiquées pour Sp dans la revendication 14 ou 17, et particulièrement préférablement -(CH₂)ₚ₁-, -(CH₂)p₁-O-, -(CH₂)p₁-CO-O-ou -(CH₂)ₚ₁-O-CO-O-, où p1 est un nombre entier allant de 1 à 12, et où, dans les groupements venant d'être mentionnés, la liaison au cycle adjacent a lieu par l'intermédiaire de l'atome de O,
et où un ou plusieurs parmi les radicaux P¹-Sp¹- et P²-Sp²- peuvent désigner R^{aa}, à condition qu'au moins l'un des radicaux P¹-Sp¹- et P²-Sp²- présent ne désigne pas R^{aa},
R^{aa} désigne H, F, CI, CN ou alkyle à chaîne linéaire ou ramifiée ayant de 1 à 25 atomes de C, où, de plus, un ou plusieurs groupements CH₂ non adjacents peuvent chacun, indépendamment les uns des autres, être remplacés par C(R⁰)=C(R⁰⁰)-, -C≡C-, -N(R⁰)-, -O-, -S-, -CO-, -CO-O-, -O-CO-, -O-CO-O- de telle sorte que des atomes de O et/ou S ne soient pas liés directement les uns aux autres, et où, de plus, un ou plusieurs atomes de H peuvent être remplacés par F, Cl, CN ou P¹-Sp¹-, particulièrement préférablement alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré, ayant de 1 à 12 atomes de C, où les radicaux alcényle et alcynyle possèdent au moins deux et les radicaux ramifiés au moins trois, atomes de C,
R⁰, R⁰⁰ désignent chacun, indépendamment l'un de l'autre et de manière identique ou différente à chaque occurrence, H ou alkyle ayant de 1 à 12 atomes de C,
R^{y} et R^{z} désignent chacun indépendamment l'un de l'autre H, F, CH₃ ou CF₃,
Z¹ désigne -O-, -CO-, -C(R^{y}R^{z})-, ou -CF₂CF₂-,
Z² et Z³ désignent chacun indépendamment l'un de l'autre -CO-O-, -O-CO-, -CH₂O-, -OCH₂-, -CF₂O-, -OCF₂- ou - (CH₂)ₙ-, où n vaut 2, 3 ou 4,
L à chaque occurrence, de manière identique ou différente, désigne F, CI, CN ou alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré, ayant de 1 à 12 atomes de C, préférablement F,
L' et L" désignent chacun indépendamment l'un de l'autre H, F ou Cl,
r désigne 0, 1, 2, 3 ou 4,
s désigne 0, 1, 2 ou 3,
t désigne 0, 1 ou 2,
x désigne 0 ou 1.

19. Milieu LC selon une ou plusieurs parmi les revendications 14 à 18, **caractérisé en ce que** les composés de formule I* ou de sous-formules de celle-ci contiennent précisément un radical P-Sp- ou P¹-Sp¹ ou P²-Sp² où Sp ou Sp¹ ou Sp² désigne une liaison simple et contiennent précisément un radical P-Sp- ou P¹-Sp¹ ou P²-Sp² où Sp ou Sp¹ ou Sp² est autre qu'une liaison simple.

20. Utilisation d'un milieu LC selon une ou plusieurs parmi les revendications 1 à 19, dans des affichages LC de type PS (stabilisé par polymère) ou PSA (à alignement supporté par polymère).

21. Utilisation d'un milieu LC selon une ou plusieurs parmi les revendications 1 à 19 dans des affichages PS et PSA pour la génération d'un angle d'inclinaison dans le milieu LC par polymérisation *in situ* du ou des composés polymérisables dans l'affichage PSA avec application d'un champ électrique ou magnétique.

22. Affichage LC de type PS ou PSA contenant un mélange LC ou un milieu LC selon une ou plusieurs parmi les revendications 1 à 19.

23. Affichage LC selon la revendication 22, **caractérisé en ce qu'**il s'agit d'un affichage PSA-VA, PS-IPS ou PS-FFS.

24. Affichage LC contenant une cellule LC constituée de deux substrats, où au moins un substrat est transparent à la lumière et au moins un substrat possède une couche d'électrodes, et une couche, située entre les substrats, d'un milieu LC comprenant un composant polymérisé et un composant de bas poids moléculaire, où le composant polymérisé peut être obtenu par polymérisation d'un ou plusieurs composés polymérisables dans le milieu LC entre les substrats de la cellule LC avec application d'une tension électrique, et où le composant de bas poids moléculaire est un mélange LC tel que défini selon une ou plusieurs parmi les revendications 1 à 10.

25. Procédé de production d'un affichage LC selon une ou plusieurs parmi les revendications 22 à 24, par le mélange d'un mélange LC tel que défini selon une ou plusieurs parmi les revendications 1 à 10 avec un ou plusieurs composés polymérisables, et éventuellement avec d'autres composés à cristaux liquides et/ou additifs, l'introduction du mélange obtenu dans une cellule LC telle que décrite dans la revendication 24, et la polymérisation du ou des composés polymérisables avec application d'une tension électrique.
